(19) **Europäisches Patentamt / European Patent Office / Office européen des brevets**

(11) **EP 2 532 913 B1**

(12) **EUROPEAN PATENT SPECIFICATION**

(45) Date of publication and mention
of the grant of the patent:
**31.07.2019 Bulletin 2019/31**

(21) Application number: **11739888.3**

(22) Date of filing: **04.02.2011**

(51) Int Cl.:
***F16D 48/02*** *(2006.01)* ***F16D 25/12*** *(2006.01)*

(86) International application number:
**PCT/JP2011/052423**

(87) International publication number:
**WO 2011/096540 (11.08.2011 Gazette 2011/32)**

(54) **CLUTCH CONTROL DEVICE**

KUPPLUNGSSTEUERVORRICHTUNG

DISPOSITIF DE COMMANDE D'EMBRAYAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.02.2010 JP 2010024578**

(43) Date of publication of application:
**12.12.2012 Bulletin 2012/50**

(73) Proprietor: **Honda Motor Co., Ltd.
Minato-ku
Tokyo 107-8556 (JP)**

(72) Inventors:
• **NEDACHI Yoshiaki
Wako-shi
Saitama 351-0193 (JP)**
• **OZEKI Takashi
Wako-shi
Saitama 351-0193 (JP)**
• **FUKAYA Kazuyuki
Wako-shi
Saitama 351-0193 (JP)**

• **HIGUCHI Mayuko
Wako-shi
Saitama 351-0193 (JP)**
• **KOJIMA Hiroyuki
Wako-shi
Saitama 351-0193 (JP)**
• **NAKAMURA Kazuhiko
Wako-shi
Saitama 351-0193 (JP)**
• **MUNENO Yoshihiko
Wako-shi
Saitama 351-0193 (JP)**

(74) Representative: **Dehns
St. Bride's House
10 Salisbury Square
London EC4Y 8JD (GB)**

(56) References cited:
EP-A1- 2 133 584          WO-A1-2009/022450
DE-A1-102006 014 141      DE-A1-102007 024 794
FR-A1- 2 893 686          JP-A- 1 120 438
JP-A- 60 179 526          JP-A- 2003 166 639
JP-A- 2004 060 728        JP-A- 2006 009 943
JP-A- 2007 198 476

**Description**

Technical Field

The present invention relates to a clutch control device, and particularly, to a clutch control device which controls connection and disconnection of a clutch by an actuator.

Background Art

Conventionally, a clutch control device which uses an actuator to control connection and disconnection of a clutch that transmits a rotational driving force of a power source to a drive wheel by a frictional force has been known. In such a clutch control device, when driving clutch discs are worn and become thin, the drive amount of the actuator must be corrected to obtain the same frictional force.

Patent Document 1 discloses a clutch control device which can perform corrective control according to wear of the driving clutch discs by detecting movement amounts of the driving clutch discs until they come into contact with each other by using a sensor that detects a clutch stroke.

EP2133584A1 discloses a clutch control device that determines a clutch control amount according to at least a throttle operation state and a clutch connection state detected by a clutch sensor that detects a connection state of a clutch, and controls driving of a clutch actuator that controls connection/disconnection of the clutch, wherein a stroke start position at which the clutch starts to make a stroke and a stroke end position that is a full stroke position of the clutch are detected based on a change in sensor output value of the clutch sensor.

Prior Art Document

Patent Document

Patent Document 1: Japanese Published Unexamined Patent Application No. 2004-197842

Summary of Invention

Technical Problem

However, in the clutch control device described in Patent Document 1, corrective control according to wear of the driving clutch discs can be performed, however, corrective control taking into account that a drive torque to be transmitted differs due to individual difference or setting variations, etc., in assembly of the return spring of the clutch although the clutch stroke is the same is not considered. In particular, from a clutch connection start point to connection completion, that is, in clutch control in a half-clutch region in which delicate control of transmitted driving force is required, it is preferable that corrective control taking influences of individual difference and deterioration, etc., of the return spring into account is performed.

An object of the present invention is to solve the problem in the conventional technology and provide a clutch control device capable of correcting a clutch control amount by taking influences of individual difference, etc., of the return spring into account even in a half-clutch region.

Solution to Problem

The present invention has a first feature in that a clutch control device that determines a clutch control amount according to at least a throttle operation state and a clutch connection state detected by a clutch sensor (SE8, SE9) that detects a connection state of a clutch (51a, 51b), and controls driving of a clutch actuator (91a, 91b) that controls connection/disconnection of the clutch (51a, 51b), wherein a stroke start position at which the clutch (51a, 51b) starts to make a stroke and a stroke end position that is a full stroke position of the clutch (51a, 51b) are detected based on a change in sensor output value of the clutch sensor (SE8, SE9), characterised in that a target sensor output value (Ph) in a predetermined half-clutch state between the stroke start position and the stroke end position is calculated by linear interpolation of a proportional function formed by a sensor output value (Ps) detected at the stroke start position and a sensor output value (Pe) detected at the stroke end position, and a clutch control amount in the predetermined half-clutch state is determined by using the target sensor output value (Ph), and in that each of the stroke start position and the stroke end position is detected by a change amount of the sensor output value that has deviated from a predetermined range.

The present invention has a second feature in that the clutch (51a, 51b) is a hydraulic clutch that is controlled to be connected/disconnected by hydraulic pressure supply, the clutch sensor (SE8, SE9) is a hydraulic sensor that outputs a hydraulic pressure supplied to the clutch (51a, 51b) as a sensor output value, and the clutch actuator (91a, 91b) adjusts a fixed hydraulic pressure to be supplied from an oil pump (32) of an engine (13) to an arbitrary hydraulic pressure by a solenoid valve that opens and closes a duct and supplies the adjusted hydraulic pressure to the clutch (51a, 51b).

The present invention has a fourth feature in that the stroke start position is detected by a change amount of the clutch hydraulic pressure that has become smaller than a negative predetermined value ($\Delta P1$) during connection control of the clutch (51a, 51b).

The present invention has a fifth feature in that the stroke end position is detected by a change amount of the clutch hydraulic pressure that has become larger than a positive predetermined value ($\Delta P2$) during connection control of the clutch (51a, 51b).

The present invention has a sixth feature in that the clutch actuator is an electric motor as a drive source that controls connection and disconnection of the clutch, the clutch sensor is a current sensor that outputs a current value supplied to the electric motor as a sensor output value, the stroke start position is detected by a change amount of the current value that has become smaller than a negative predetermined value during connection control of the clutch, and the stroke end position is detected by a change amount of the current value that has become larger than a positive predetermined value during connection control of the clutch.

The present invention has a seventh feature in that the predetermined half-clutch state is a clutch connected state corresponding to a predetermined target half-clutch capacity, a half-clutch stroke corresponding to the target half-clutch capacity is derived by using a data table determined in advance, a target sensor output value (Ph) corresponding to the half-clutch stroke is calculated by linear interpolation of the proportional function, and the clutch actuator (91a, 91b) is driven so that the target sensor output value (Ph) is generated.

Advantageous Effects of Invention

The present invention has a first feature in that a stroke start position at which a clutch starts to make a stroke and a stroke end position that is a full stroke position of the clutch are detected based on a change in sensor output value of a clutch sensor, a target sensor output value in a predetermined half-clutch state between the stroke start position and the stroke end position is calculated by linear interpolation of a proportional function formed by a sensor output value detected at the stroke start position and a sensor output value detected at the stroke end position, and a clutch control amount in the predetermined half-clutch state is determined by using the target sensor output value. Therefore, by using a sensor output value at the stroke start position and a sensor output value at the stroke end position, a sensor output value at a predetermined half-clutch position can be obtained. Accordingly, even if there is an individual difference or variation, etc., in assembly of the return spring of the clutch, not only a clutch control amount at the stroke end position but also a clutch control amount at the predetermined half-clutch position can be corrected, and highly accurate clutch control can be performed.

The present invention has a second feature in that the clutch is a hydraulic clutch that is controlled to be connected/disconnected by hydraulic pressure supply, the clutch sensor is a hydraulic sensor that outputs a hydraulic pressure supplied to the clutch as a sensor output value, and the clutch actuator adjusts a fixed hydraulic pressure to be supplied from an oil pump of an engine to an arbitrary hydraulic pressure by a solenoid valve that opens and closes a duct and supplies the adjusted hydraulic pressure to the clutch. Therefore, the load of the clutch spring and the clutch hydraulic pressure correspond to each other as pressures, so that, for example, the current value does not need to be converted into a voltage value, and the clutch control system can be easily configured The hydraulic pressure is a parameter that undergoes a large change in a transient period of a clutch connected state, so that it is preferable for regulating various control timings such as timings of detections of the stroke start position and the stroke end position of the clutch.

The present invention has a third feature in that each of the stroke start position and the stroke end position is detected by a change amount of the sensor output value that has deviated from a predetermined range. Therefore, a predetermined clutch position is detected by detecting a large change in sensor output value, so that influences of slight fluctuation factors such as sensor noise can be reduced.

The present invention has a fourth feature in that the stroke start position is detected by a change amount of the clutch hydraulic pressure that has become smaller than a negative predetermined value during connection control of the clutch. Therefore, by setting a negative change amount in advance, a stroke start position can be easily detected based on a hydraulic pressure change amount. The hydraulic pressure change accompanied by physical movement of a fluid is not high in followability to control as compared with a current change, etc., so that it is suitable for detection of transition of a clutch connection state that is a large state change.

The present invention has a fifth feature in that the stroke end position is detected by a change amount of the clutch hydraulic pressure that has become larger than a positive predetermined value during connection control of the clutch. Therefore, by setting a positive change amount in advance, a stroke end position can be easily detected based on a hydraulic pressure change amount.

The present invention has a sixth feature in that the clutch actuator is an electric motor as a drive source that controls connection and disconnection of the clutch, the clutch sensor is a current sensor that outputs a current value supplied to the electric motor as a sensor output value, the stroke start position is detected by a change amount of the current value that has become smaller than a negative predetermined value during connection control of the clutch, and the stroke end position is detected by a change amount of the current value that has become larger than a positive predetermined value during connection control of the clutch. Therefore, even when the clutch is an electric clutch that is driven by an electric motor, a clutch control amount in a predetermined half-clutch state can be corrected by using a sensor output value at a stroke start position and a sensor output value at a stroke end position.

The present invention has a seventh feature in that the predetermined half-clutch state is a clutch connected state corresponding to a predetermined target half-clutch capacity, a half-clutch stroke corresponding to the target half-clutch capacity is derived by using a data table determined in advance, a target sensor output value corresponding to the half-clutch stroke is calculated by linear interpolation of the proportional function, and the clutch actuator is driven so that the target sensor output value is generated. Therefore, without using a clutch stroke sensor, etc., clutch control can be performed in a predetermined half-clutch state.

Brief Description of Drawings

Fig. 1 is a side view of a motorcycle according to an embodiment of the present invention.
Fig. 2 is a right-side view of the motorcycle.
Fig. 3 is a configuration diagram of a twin clutch type shift control device.
Fig. 4 is a configuration diagram showing meshing relationships of shafts and speed-changing gears in an automatic transmission.
Fig. 5 is a sectional view of the twin clutch transmission.
Fig. 6 is a sectional view of a gear shift device.
Fig. 7 is a block diagram showing a configuration of an ECU and peripheral equipment thereof.
Fig. 8 is a block diagram showing steps of calculating a target clutch hydraulic pressure.
Fig. 9 is a graph showing clutch hydraulic pressure change when the clutch is driven in a connecting direction.
Fig. 10A shows a stroke-clutch capacity graph.
Fig. 10B shows a stroke-clutch hydraulic pressure graph.
Fig. 11 is a flowchart showing steps of calculating the target half-clutch hydraulic pressure.
Fig. 12 is a graph showing a method for detecting a stroke start position and a stroke end position when a normally-open clutch is driven by an electric motor.
Fig. 13 is a graph showing a method for detecting a stroke start position and a stroke end position when a normally-closed clutch is driven by an electric motor.
Fig. 14 is a time chart showing a flow of clutch control when a rev-up phenomenon at the time of shift-up is detected.
Fig. 15 is a flowchart showing steps of rev-up-responsive clutch 1 capacity corrective control according to the present embodiment.
Fig. 16 is a flowchart showing steps of deriving a correction coefficient base Kb.
Fig. 17 is a correction coefficient base table.
Fig. 18 is a flowchart showing steps of a correction coefficient K calculation process.
Fig. 19 is a flowchart showing a flow of a gear shifting rev-up detection process.
Fig. 20 is a flowchart showing a detailed flow of a rev-up-responsive clutch capacity correction process.
Fig. 21 is a time chart showing a flow of clutch control when switching the clutch.
Fig. 22 is a flowchart showing a flow of gear shifting time-out clutch 1 capacity corrective control.
Fig. 23 is a flowchart showing steps of a gear shifting completion time estimation process.
Fig. 24 is a data table showing the relationship between the clutch gear shifting torque Qh and $\Delta$Ne.
Fig. 25 is a flowchart showing steps for deriving a correction coefficient Kover.
Fig. 26 is a data table showing the relationship between the gear shifting overtime and the correction coefficient Kover
Fig. 27 is a flowchart showing steps of a preparatory gear shifting suspension time setting process.
Fig. 28 is a flowchart showing steps of a gear shifting request judgment process.
Fig. 29 is a sub-flow showing steps of clutch hydraulic pressure judgment.
Fig. 30 shows a sub-flow showing steps of a clutch off judgment time determination process.
Fig. 31 is a clutch off judgment time tables for shift-up.
Fig. 32 is a clutch off judgment time tables for shifting-down.

Fig. 33 is a flowchart showing steps of a running mode judgment process when some failure occurs in the transmission.

Fig. 34 is a sectional view showing a configuration of a normally-closed hydraulic clutch.

Fig. 35 is a sectional view showing a configuration of an electric clutch.

Fig. 36 is an entire configuration diagram of an electric-hydraulic clutch.

Fig. 37 is a sectional view of the electric motor of the electric-hydraulic clutch.

Fig. 38 is an entire configuration diagram showing a configuration of an electric clutch.

Fig. 39A is a structure explanatory view of the cam mechanism.

Fig. 39B is a structure explanatory view of the cam mechanism.

Fig. 40 is a graph showing the relationship between a load necessary for the clutch pressing operation and the clutch stroke.

Fig. 41A is graph showing changes in relationship between the load and the clutch stroke according to the state of the electric clutch.

Fig. 41B is graph showing changes in relationship between the load and the clutch stroke according to the state of the electric clutch.

Fig. 41C is graph showing changes in relationship between the load and the clutch stroke according to the state of the electric clutch.

Fig. 42 is a flowchart showing steps of touch point judgment based on a stroke change when the current is fixed.

Fig. 43A is a graph showing method of touch point judgment based on a stroke change when the current is fixed.

Fig. 43B is a graph showing method of touch point judgment based on a stroke change when the current is fixed.

Fig. 44 is a flowchart showing steps of touch point judgment based on a duty change when the stroke change rate is fixed.

Fig. 45A is a graph showing method of touch point judgment based on a duty change when the stroke change rate is fixed.

Fig. 45B is a graph showing method of touch point judgment based on a duty change when the stroke change rate is fixed.

Fig. 46 is a flowchart showing steps of touch point judgment based on a stop stroke when driving with test duty value.

Fig. 47A is a graphs showing method of touch point judgment based on a stop stroke when driving with test duty value.

Fig. 47B is a graphs showing method of touch point judgment based on a stop stroke when driving with test duty value.

Description of Embodiments

Hereinafter, a preferred embodiment of the present invention is described in detail with reference to the drawings. The directions such as the front-rear and left-right directions in the following description are the same as the directions of a vehicle if not otherwise specified. The arrow FR in the drawings indicates the vehicle front side, the arrow LH indicates the vehicle left side, and the arrow UP indicates the vehicle upper side.

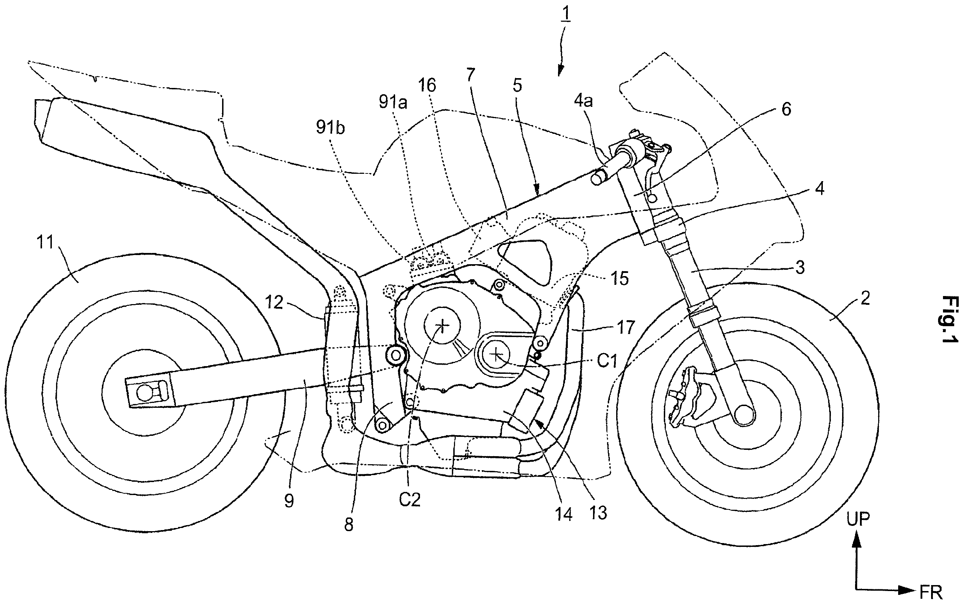

Fig. 1 is a side view of a motorcycle 1 as a saddle-riding type vehicle to which a clutch control device according to the present embodiment is applied. The upper portion of a front fork 3 that axially supports the front wheel 2 is pivotally supported on a head pipe 6 on the front end portion of a vehicle body frame 5 via a steering stem 4 in a steerable manner. To the upper portion of the steering stem 4, a steering handle 4a is attached. From the rear portion of the head pipe 6, a main frame 7 extends rearward and is connected to a pivot plate 8. On this pivot plate 8, the front end portion of a swing arm 9 is pivotally supported swingably up and down, and on the rear end portion of the swing arm 9, a rear wheel 11 is axially supported. Between the swing arm 9 and the vehicle body frame 5, a cushion unit 12 is interposed. To the inner side of the vehicle body frame 5, an engine 13 that is a power source of the motorcycle 1 is attached.

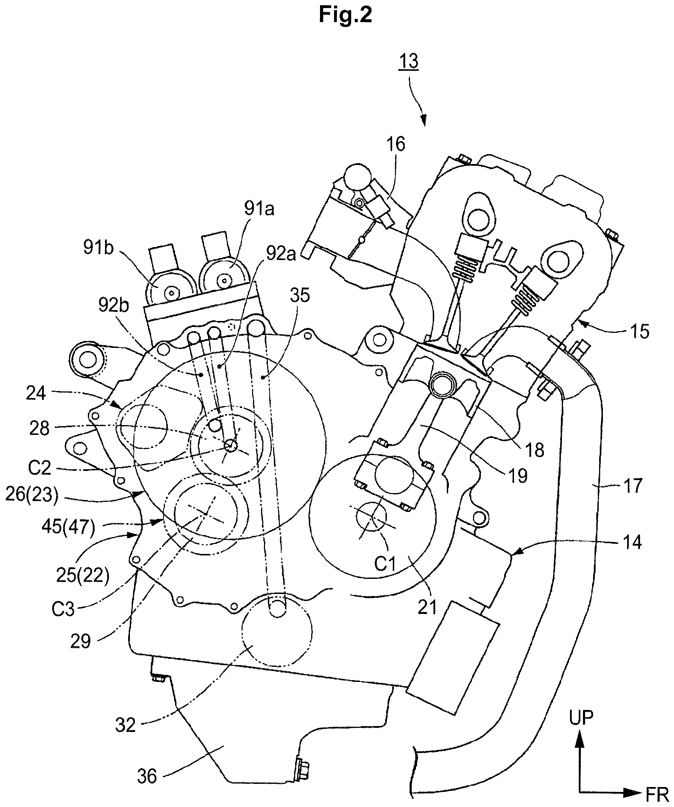

Referring to Fig. 2 as well, the engine 13 is a parallel four-cylinder engine in which the rotation center axis C1 of a crankshaft 21 is set along the vehicle width direction, and a cylinder 15 is stood on the upper portion of a crankcase 14. Inside the cylinder 15, pistons 18 corresponding to the respective engine cylinders are fitted so as to reciprocate, and reciprocations of the pistons 18 are converted into rotative movement of the crankshaft 21 via a con rod 19. To the rear portion of the cylinder 15, a throttle body 16 is connected, and to the front portion of the cylinder 15, an exhaust pipe 17 is connected.

To the rear of the crankcase 14, a transmission case 22 is connected integrally, and inside the transmission case 22, a twin clutch transmission 23 and a change mechanism 24 are housed. The right side in the vehicle width direction of the transmission case 22 is formed as a clutch case 25, and inside this clutch case 25, a twin clutch 26 of the twin clutch transmission 23 is housed. The rotative power of the crankshaft 21 is output to the left side in the vehicle width direction of the transmission case 22 via the twin clutch transmission 23, and then transmitted to the rear wheel 11 via, for example, a chain-type power transmission mechanism. Below the main shaft 28 directed in the direction of the rotation center axis C2, a counter shaft 29 directed in the direction of the rotation center axis C3 is disposed.

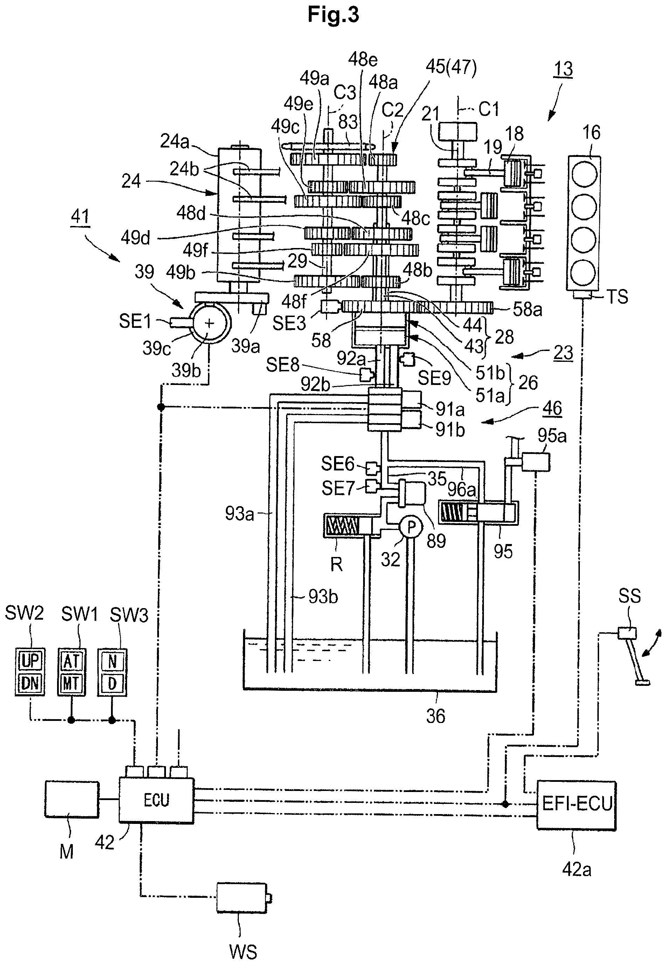

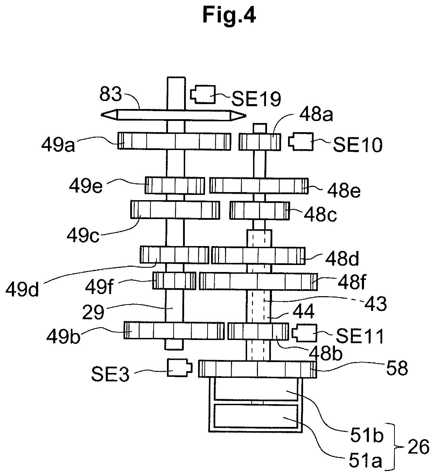

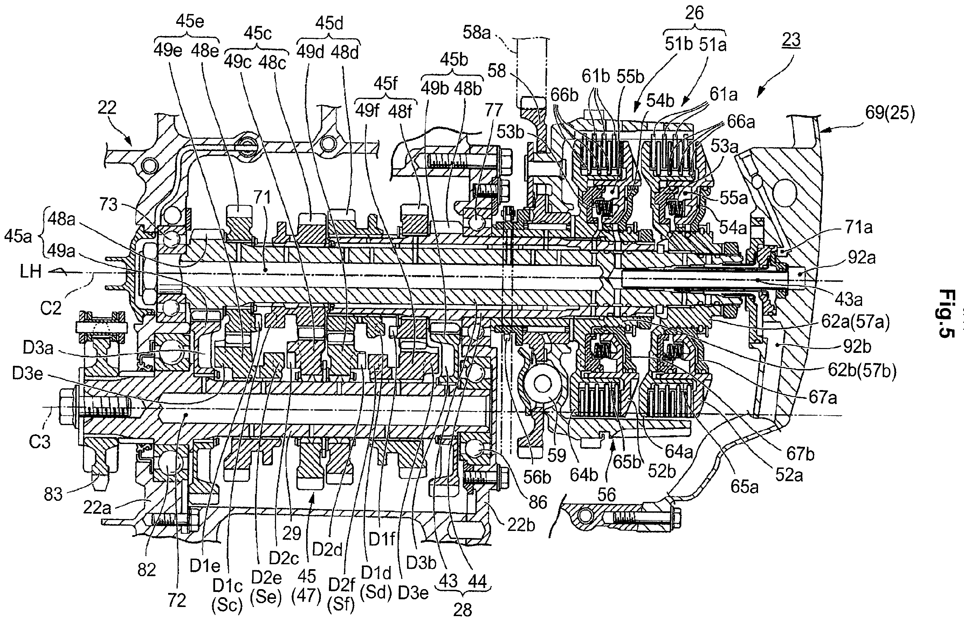

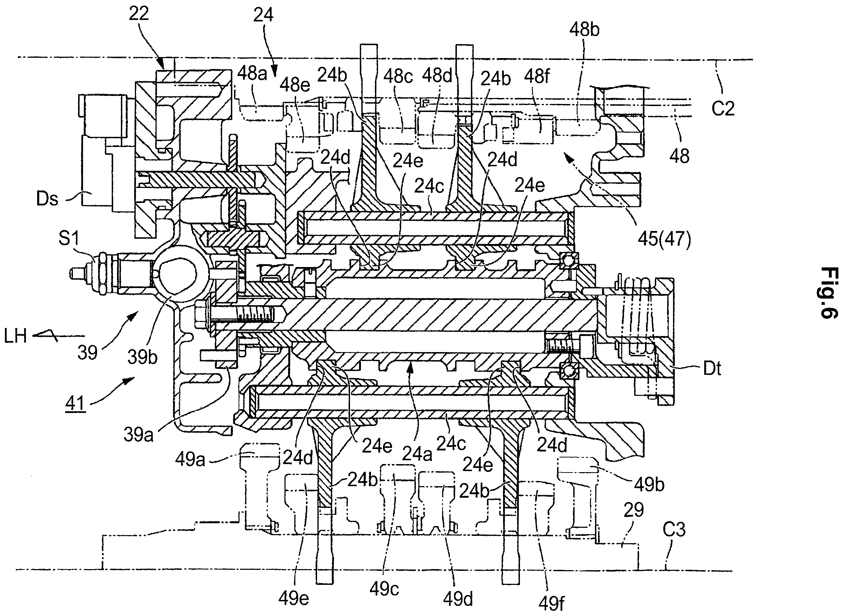

Fig. 3 is a configuration diagram of a twin clutch type shift control device. Fig. 4 is a configuration diagram showing meshing relationships of shafts and speed-changing gears in an automatic transmission, Fig. 5 is a sectional view of the twin clutch transmission, and Fig. 6 is a sectional view of a gear shift device of the twin clutch transmission.

The twin clutch type shift control device mainly includes a twin clutch transmission 23 linked to the engine 13, a gear shift device 41 obtained by providing a drive mechanism 39 in the change mechanism 24, and an electronic control unit (ECU) 42 that controls operations of the twin clutch transmission 23 and the gear shift device 41.

The twin clutch transmission 23 includes the main shaft 28 having a double structure including an inner shaft 43 and an outer shaft 44, the counter shaft 29 disposed parallel to the main shaft 28, a speed-changing gear group 45 disposed across the main shaft 28 and the counter shaft 29, a twin clutch 26 disposed coaxially on the right end portion in the vehicle width direction of the main shaft 28, and a hydraulic supply device 46 that supplies an operating hydraulic pressure to the twin clutch 26. Hereinafter, an assembly including the main shaft 28, the counter shaft 29, and the speed-changing gear group 45 is referred to as a transmission 47.

The main shaft 28 is formed by inserting the right side portion of the inner shaft 43 laid across the left and right sides in the vehicle width direction of the transmission case 22 through the inside of the outer shaft 44 in a relatively rotatable manner. On the outer peripheries of the inner and outer shafts 43 and 44, drive gears 48a, 48b, 48c, 48d, 48e, and 48f (hereinafter, referred to as 48a to 48f) for six speeds in the speed-changing gear group 45 are distributed and disposed. On the other hand, on the outer periphery of the counter shaft 29, driven gears 49a, 49b, 49c, 49d, 49e and 49f (hereinafter, referred to as 49a to 49f) for six speeds in the speed-changing gear group 45 are disposed.

The drive gears 48a to 48f and the driven gears 49a to 49f are paired for each shift stage to constitute speed-changing gear pairs 45a, 45b, 45c, 45d, 45e, and 45f (hereinafter, referred to as 45a to 45f) corresponding to the respective shift stages so that the drive gear and the driven gear corresponding to the same shift stage mesh with each other (refer to Fig. 5). The speed-changing gear pairs 45a to 45f are set so that their reduction ratios become smaller in order from the first speed to the sixth speed.

Referring to Fig. 5, the left end portion in the vehicle width direction of the inner shaft 43 extends to the left side wall 22a of the transmission case 22, and is supported rotatably on the left side wall 22a via a ball bearing 73. On the other hand, the right side portion of the inner shaft 43 penetrates through the right side wall 22b of the transmission case 22 and faces the inside of the clutch case 25, and the intermediate portion in the left-right direction of the inner shaft 43 is supported rotatably on the right side wall 22b of the transmission case 22 via the intermediate portion in the left-right direction of the outer shaft 44 penetrating through the right side wall 22b and a ball bearing 77.

The outer shaft 44 is shorter than the inner shaft 43, and the left end portion of the outer shaft is positioned at the intermediate portion in the left-right direction of the transmission case 22. On the portion positioned leftward relative to the right side wall 22b of the outer shaft 44, drive gears 48d, 48f, and 48b corresponding to even-numbered shift stages (second, fourth, and sixth speeds) are supported in the order of the gear for the fourth speed, the gear for the sixth speed, and the gear for the second speed from the left side. On the other hand, on the portion positioned leftward relative to the left end portion of the outer shaft 44 of the inner shaft 43, drive gears 48a, 48e, and 48c corresponding to odd-numbered shift stages (first, third, and fifth speeds) are supported in the order of the gear for the first speed, the gear for the fifth speed, and the gear for the third speed from the left side.

The left and right end portions of the counter shaft 29 are supported rotatably on the left and right side walls 22a and 22b of the transmission case 22 via ball bearings 82 and 86, respectively. The left end portion of the counter shaft 29 project to the left side of the left side wall 22a, and to this left end portion, a drive sprocket 83 as a power transmission mechanism to the rear wheel 11 is attached.

On the portion positioned inside of the transmission case 22 of the counter shaft 29, driven gears 49a to 49f corresponding to the respective shift stages are supported in the same order as the drive gears 48a to 48f.

Inside the main shaft 28 (inner shaft 43) and the counter shaft 29, main supply oil passages 71 and 72 capable of supplying hydraulic pressures from a main oil pump (not illustrated) for oil pressure feeding to the respective portions inside the engine 13 are formed, respectively, and via the main supply oil passages 71 and 72, engine oil is properly supplied to the speed-changing gear group 45.

The twin clutch 26 includes first and second hydraulic clutches 51a and 51b disposed adjacent to each other and coaxially with each other, and to these clutches 51a and 51b, the inner and outer shafts 43 and 44 are joined coaxially. On a clutch outer 56 shared by the clutches 51a and 51b, a primary driven gear 58 that meshes with a primary drive gear 58a of the crankshaft 21 is provided coaxially, and via these gears 58 and 58a, rotative power from the crankshaft 21 is input into the clutch outer 56. The rotative power input into the clutch outer 56 is transmitted to the inner and outer shafts 43 and 44 individually according to the connected/disconnected states of the clutches 51a and 51b. The connected/disconnected states of the clutches 51a and 51b are individually controlled according to whether they are supplied with hydraulic pressure from the hydraulic supply device 46.

Then, one of the clutches 51a and 51b is connected and the other is disconnected, power transmission inside the transmission 47 is performed by using any speed-changing gear pair connected to one of the inner and outer shafts 43 and 44, and a speed-changing gear pair to be used next is selected in advance among the speed-changing gear pairs joined to the other of the inner and outer shafts 43 and 44, and from this state, the one of the clutches 51a and 51b is disconnected and the other is connected, and accordingly, power transmission of the transmission 47 changes to power transmission using the speed-changing gear pair selected in advance, and accordingly, the transmission 47 is shifted up or shifted down.

As shown in Fig. 3, the hydraulic supply device 46 includes a clutch oil pump 32 that is a hydraulic pressure generation source for the twin clutch 26, a feeding oil passage 35 extending from a discharge port of the clutch oil pump 32, first and second clutch actuators 91a and 91b connected to the downstream side of the feeding oil passage 35, and first and second supply oil passages 92a and 92b that reach connection-side hydraulic chambers 54a and 54b (refer to Fig. 5) of the clutches 51a and 51b from the clutch actuators 91a and 91b.

The clutch oil pump 32 is provided separately from the main oil pump, and suctions engine oil inside an oil pan 36 under the crankcase 14 and discharges the engine oil into the feeding oil passage 35. In the feeding oil passage 35, an oil filter 89 exclusively for this oil passage is provided. In the feeding oil passage 35, a hydraulic sensor SE6 and an oil temperature sensor SE7 that detect a hydraulic pressure and an oil temperature, and a relief valve R that controls the rise of the hydraulic pressure inside the feeding oil passage 35, are provided. In the supply oil passages 92a and 92b, a first clutch hydraulic sensor SE8 and a second clutch hydraulic sensor SE9 that detect hydraulic pressures supplied to the clutches 51a and 51b are provided.

The feeding oil passage 35 and the first and second supply oil passages 92a and 92b can individually communicate with each other according to actuations of the clutch actuators 91a and 91b consisting of solenoid valves. When the feeding oil passage 35 and the first supply oil passage 92a communicate with each other via the first clutch actuator 91a, a relatively high hydraulic pressure from the clutch oil pump 32 is supplied to the connection-side hydraulic chamber 54a of the first clutch 51a, and the first clutch 51a is connected. On the other hand, when the feeding oil passage 35 and the second supply oil passage 92b communicate with each other via the second clutch actuator 91b, a hydraulic pressure from the clutch oil pump 32 is supplied to the connection-side hydraulic chamber 54b of the second clutch 51b, and the second clutch 51b is connected.

From the feeding oil passage 35, a hydraulic pressure release oil passage 96a having a hydraulic pressure release valve 95 is branched. The hydraulic pressure release valve 95 is actuated by a valve actuator 95a, and performs switching between opening and shutting-off of the hydraulic pressure release oil passage 96a. For example, when the engine starts, the valve actuator 95a whose actuation is controlled by the ECU 42 opens the hydraulic pressure release oil passage 96a to return the feeding hydraulic pressure from the clutch oil pump 32 to the oil pan 36, and after the engine starts, shuts-off the hydraulic pressure release oil passage 96a to enable supply of the feeding hydraulic pressure to the twin clutch 26.

In the clutch actuators 91a and 91b, return oil passages 93a and 93b for returning hydraulic pressure from the clutch oil pump 32 into the oil pan when the communications between the feeding oil passage 35 and the first and second supply oil passages 92a and 92b are shut off, are provided, respectively.

The change mechanism 24 moves a plurality of (four in this embodiment) shift forks 24b in the axial direction according to rotation of a shift drum 24a disposed parallel to the shafts 28 and 29 and switches the speed-changing gear pair (shift stage) to be used for power transmission between the main shaft 28 and the counter shaft 29.

Among the shift forks 24b, a shift fork extending to the main shaft 28 side and a shift fork extending to the counter shaft 29 side are paired, and base end sides of these are supported on a pair of shift fork rods 24c, respectively, movably in the axial direction. On the base end side of each shift fork 24b, a sliding projection 24e that engages with any of cam shafts 24d on the outer periphery of the shift drum 24a is provided. On the main shaft 28 side and the counter shaft 29 side, the tip end portions of the shift forks 24b are engaged with slide gears (described later) of the speed-changing gear group 45. When the shift drum 24a rotates, along the pattern of the cam grooves 24d, the shift forks 24b move in the axial direction and move the slide gears in the axial direction to change the shift stage of the transmission 47.

The drive mechanism 39 provided on one end side of the shift drum 24a includes a pin gear 39a fixed coaxially to the shift drum 24a of the change mechanism 24, a worm-shaped barrel cam 39b that engages with the pin gear 39a, and an electric motor 39c that applies rotative power to the barrel cam 39b. The drive mechanism 39 changes the shift stage of the transmission 47 by properly rotating the shift drum 24a by driving of the electric motor 39c. In the drive mechanism 39, a gear position sensor SE1 that detects an actuation amount of the drive mechanism 39 for detecting the shift stage of the transmission 47 is provided. For the transmission gear that meshes with the left end portion of the shift drum 24a, a rotation angle sensor Ds that detects the rotation angle of the shift drum 24a is provided, and on the right end portion of the shift drum 24a, a rotary shaft and a detent mechanism (lost motion mechanism) Dt of the shift drum 24a are disposed.

The transmission 47 is a constant mesh type in which the drive gears 48a to 48f and the driven gears 49a to 49f corresponding to the respective shift stages constantly mesh with each other. The gears are roughly classified into fixed gears rotatable integrally with their support shafts (shafts 28 and 29), free gears rotatable relative to the support shafts, and slide gears rotatable integrally with the shafts and movable in the axial direction.

In detail, the drive gears 48a and 48b are fixed gears, the drive gears 48c and 48d are slide gears, and drive gears 48e and 48f are free gears. The driven gears 49a to 49d are free gears, and the driven gears 49e and 49f are slide gears. Hereinafter, the gears 48c, 48d, 49e, and 49f may be referred to as slide gears, and the gears 48e, 48f, and 49a to 49d may be referred to as free gears. By properly sliding (moving in the axial direction) an arbitrary slide gear by the change mechanism 24, power transmission using the speed-changing gear pair corresponding to any of the shift stages can be performed.

On one sides of the slide gears 48c and 48d, slide rings Sc and Sd rotatable integrally with the support shafts and movable in the axial direction in the same manner as these slide gears are provided integrally. The slide rings Sc and Sd are provided adjacent to the free gears 48e and 48f in the axial direction. On the slide rings Sc and Sd, sliding-side dogs (dowels) D1c and D1d are provided, and on the free gears 48e and 48f, free-side dogs (dowels) D1e and D1f corresponding to the sliding-side dogs D1c and D1d are provided.

On one sides of the slide gears 49e and 49f, slide rings Se and Sf rotatable integrally with the support shafts and movable in the axial direction in the same manner as these slide gears are provided integrally. The slide rings Se and Sf are provided adjacent to the free gears 49c and 49d in the axial direction. On the slide rings Se and Sf, sliding-side dogs (dowels) D2e and D2f are provided, and on the free gears 49c and 49d, free-side dogs (dowels) D2c and D2d corresponding to the sliding-side dogs D2e and D2f are provided.

Further, on the other sides of the slide gears 49e and 49f, sliding-side dogs (dowels) D3e and D3f are provided, and on the free gears 49a and 49b adjacent to these sliding-side dogs in the axial direction, free-side dogs (dowels) D3a and D3b corresponding to the sliding-side dogs D3e and D3f are provided.

Each sliding-side dog and free-side dog engage with each other relatively non-rotatably when the corresponding slide gear (including the slide ring) and free gear come close to each other, and disengage from each other when the slide gear and free gear separate from each other.

Any of the slide gears and the corresponding free gear engage with each other via each dog relatively non-rotatably, and accordingly, power transmission selectively using any of the speed-changing gear pairs is performed between the main shaft 28 and the counter shaft 29. In a state where engagements between the slide gears and the free gears are all released (state shown in Fig. 5), power transmission between the shafts 28 and 29 becomes impossible, and this state is a neutral state of the transmission 47.

The ECU 42 (refer to Fig. 3) controls the operations of the twin clutch transmission 23 and the gear shift device 41 to change the shift stage (shift position) of the transmission 47 based on information from the opening degree sensor TS of the throttle valve of the throttle body 16, the storing sensor SS that detects a storing state of the side stand, a wheel speed sensor WS of the front wheel 2, and a mode switch SW1, a gear select switch SW2, and a neutral-drive changeover switch SW3, etc., disposed on the steering handle 4a, etc., in addition to various sensor information. Sensor signals are also transmitted to the EFI-ECU 42a that controls a fuel injection device.

Gear shifting modes to be selected by the mode switch SW1 are a full automatic mode in which the shift stage of the transmission 47 is automatically switched based on vehicle information such as the vehicle speed (wheel speed) and the rotational frequency of the engine, and a semiautomatic mode in which the shift stage of the transmission 47 can be switched only by an operation of the gear select switch SW2 based on a driver's intention. The current gear shifting mode and shift stage are indicated on a meter M provided near the steering handle 4a. By an operation of the neutral-drive switch SW3, switching can be performed between a state where power transmission at a predetermined shift stage of the transmission 47 is possible and a neutral state.

Referring to Fig. 4, near the primary driven gear 58, the engine rotational frequency sensor SE3 is disposed. Near the drive gear 48a, an inner shaft rotational frequency sensor SE10 for detecting the rotational frequency of the inner shaft 43 is disposed, and near the drive gear 48b, an outer shaft rotational frequency sensor SE11 for detecting the rotational frequency of the outer shaft 44 is disposed. Further, near the counter shaft 29, a counter shaft rotational frequency sensor SE19 is disposed. Sensor signals are transmitted to the ECU 42 and the EFI-ECU 42a. The rotational frequency sensors are not limited to the examples of the present embodiment, and can be disposed at various positions at which they can detect desired information.

As shown in Fig. 5, the twin clutch 26 is configured by disposing the first clutch 51a that is joined to speed-changing gear pairs for odd-numbered shift stages on the right side (outer side in the vehicle width direction) inside the clutch case 25, and disposing the second clutch 51b that is joined to speed-changing gear pairs for even-numbered shift stages on the left side (inner side in the vehicle width direction) inside the clutch case 25. Each of the clutches 51a and 51b is a multiplate wet clutch including a plurality of driving clutch discs (clutch discs 61a, 61b and clutch plates 66a, 66b) alternately layered in the axial direction.

Each of the clutches 51a and 51b is a hydraulic clutch that obtains a predetermined engagement force by displacing the pressure plate 52a or 52b in the axial direction by a hydraulic pressure supplied from the outside, and includes a return spring 53a or 53b that biases the pressure plate 52a or 52b to the clutch disconnection side, a connection-side hydraulic chamber 54a or 54b that applies a pressing force to the pressure plate 52a or 52b toward the clutch connection side, and a disconnection-side hydraulic chamber 55a or 55b that applies a pressing force to the pressure plate 52a or 52b toward the clutch disconnection side to assist a returning movement of the pressure plate.

A comparatively low hydraulic pressure is always supplied from the main oil pump to the disconnection-side hydraulic chambers 55a and 55b, and a comparatively high hydraulic pressure is selectively and individually supplied from the hydraulic supply device 46 (clutch oil pump 32) to the connection-side hydraulic chambers 54a and 54b.

The clutches 51a and 51b share a single clutch outer 56 and are configured to have approximately the same diameter. The clutch outer 56 has a bottomed cylindrical shape opened rightward, and a bottom center portion thereof is supported relatively rotatably on the intermediate portion in the left-right direction of the outer shaft 44. On the left inner side of the clutch outer 56, a clutch center 57a for the first clutch 51a is disposed, and on the right inner side of the clutch outer 56, a clutch center 57b for the second clutch 51b is disposed. The clutch center 57b is supported integrally rotatably on the right end portion of the outer shaft 44.

To the bottom portion left side of the clutch outer 56, the primary driven gear 58 is attached via a spring damper 59, and the primary drive gear 58a of the crankshaft 21 meshes with the primary driven gear 58. Into the clutch outer 56, rotative power of the crankshaft 21 is input via the spring damper 59. The clutch outer 56 rotates individually with respect to the main shaft 28 along with rotation of the crankshaft 21.

On the side leftward relative to the primary driven gear 58 of the clutch outer 56, a drive sprocket 56b for driving each oil pump is provided integrally rotatably. On the right side inner periphery of the clutch outer 56, a plurality of clutch plates 61a for the first clutch 51a are supported integrally rotatably. On the left side inner periphery of the clutch outer 56, a plurality of clutch plates 61b for the second clutch 51b are supported integrally rotatably.

On the outer periphery of the clutch outer 56, a plurality of engagement grooves along the axial direction are formed, and on the inner peripheries of the clutch plates 61a and 61b, a plurality of engagement projections corresponding to the engagement grooves are formed. By engaging the engagement projections with the engagement grooves relatively non-rotatably, each of the clutch plates 61a and 61b is supported on the clutch outer 56 integrally rotatably.

On a flange portion 64a on the left side of the clutch center 57a of the first clutch 51a, an inner wall portion 65a standing rightward is provided, and on the outer periphery of the inner wall portion 65a, a plurality of clutch discs (friction plates) 66a are supported integrally rotatably.

On the outer periphery of the clutch center 57a, a plurality of engagement grooves along the axial direction are formed, and on the inner peripheries of the clutch discs 66a, a plurality of engagement projections corresponding to the engagement grooves are formed. By engaging the engagement projections with the engagement grooves relatively non-rotatably, each clutch disc 66a is supported on the clutch center 57 integrally rotatably.

On the right of the flange portion 64a, a pressure plate 52a is disposed to face the flange portion, and between the outer peripheral side of the pressure plate 52a and the outer peripheral side of the flange portion 64a, the clutch plates 61a and the clutch discs 66a are disposed in a layered state where they are alternately layered in the axial direction.

Between the inner peripheral side of the pressure plate 52a and the inner peripheral side of the flange portion 64a, the disconnection-side hydraulic chamber 55a is formed, and a return spring 53a that biases the pressure plate 52a rightward (to the side separating from the flange portion 64a, that is, the clutch disconnection side) is disposed. On the right of the inner peripheral side of the pressure plate 52a, a support flange portion 67a provided on the outer periphery of a central cylinder portion 62a on the right side of the clutch center 57a is disposed to face the inner peripheral side, and between the support flange portion 67a and the inner peripheral side of the pressure plate 52a, the connection-side hydraulic chamber 54a is formed and the return spring 53a is disposed.

On the other hand, on the flange portion 64b on the left side of the clutch center 57b of the second clutch 51b, an inner wall portion 65b standing rightward is provided, and on the outer periphery of the inner wall portion 65b, the plurality of clutch discs 66b are supported integrally rotatably.

On the outer periphery of the clutch center 57b, a plurality of engagement grooves along the axial direction are formed, and on the inner peripheries of the clutch discs 66b, a plurality of engagement projections corresponding to the engagement grooves are formed. By engaging the engagement projections with the engagement grooves relatively non-rotatably, the clutch discs 66b are supported on the clutch center 57b integrally rotatably.

On the right of the flange portion 64b, the pressure plate 52b is disposed to face the flange portion, and between the outer peripheral side of the pressure plate 52b and the outer peripheral side of the flange portion 64b, the clutch plates 61b and the clutch discs 66b are disposed in a layered state where they are alternately layered in the axial direction.

Between the inner peripheral side of the pressure plate 52b and the inner peripheral side of the flange portion 64b, the disconnection-side hydraulic chamber 55b is formed, and a return spring 53b that biases the pressure plate 52b rightward (to the side separating from the flange portion 64b, that is, the clutch disconnection side) is disposed. On the right of the inner peripheral side of the pressure plate 52b, a support flange portion 67b provided on the outer periphery of a central cylinder portion 62b on the right side of the clutch center 57b is disposed to face the inner peripheral side, and between the support flange portion 67b and the inner peripheral side of the pressure plate 52b, the connection-side hydraulic chamber 54b is formed and the return spring 53b is disposed.

In the clutch cover 69 constituting the right side of the clutch case 25, a first supply oil passage 92a, a second supply oil passage 92b, and an internal cover main supply oil passage 71a are provided. Inside a right hollow portion 43a of the inner shaft 43, oil passages individually communicating with the oil passages 92a, 92b, and 71a are properly formed.

With the above-described configuration, a hydraulic pressure from the clutch oil pump 32 can be supplied to the connection-side hydraulic chamber 54b of the second clutch 51b through the first supply oil passage 92a, etc. In addition, a hydraulic pressure from the main oil pump can be supplied to the disconnection-side hydraulic chamber 55a of the first clutch 51a through the internal cover main supply oil passage 71, etc. Further, a hydraulic pressure from the clutch oil pump 32 can be supplied to the connection-side hydraulic chamber 54a of the first clutch 51a through the second supply oil passage 92b, etc., and a hydraulic pressure from the main oil pump can be supplied to the disconnection-side hydraulic chamber 55b of the second clutch 51b through the main supply oil passage 71, etc.

In an engine stop state (state where the oil pumps are stopped), the clutches 51a and 51b are in a clutch disconnected state where the pressure plates 52a and 52b are displaced rightward by biasing forces of the return springs 53a and 53b and the frictional engagements between the clutch plates 61a and 61b and the clutch discs 66a and 66b are released. Even in an engine driving state, when hydraulic pressure supply from the hydraulic supply device 46 is stopped, biasing forces of the return springs 53a and 53b and hydraulic pressures of the disconnection-side hydraulic chambers 55a and 55b are applied to the pressure plates 52a and 52b, and the clutches are disconnected in the same manner as described above. Specifically, the twin clutch 26 according to the present embodiment is a "normally-open" clutch that is disconnected when no control is performed.

In the first clutch 51a, in a state where a comparatively high hydraulic pressure is supplied from the hydraulic supply device 46 to the connection-side hydraulic chamber 54a in an engine driving state, the pressure plate 52a moves leftward (to the flange portion 64a side, that is, the clutch connection side) against the hydraulic pressure of the disconnection-side hydraulic chamber 55a and the biasing force of the return spring 53a, and the clutch plates 61a and the clutch discs 66a are compressed and friction-engage with each other, and accordingly, a clutch connected state where torque transmission between the clutch outer 56 and the clutch center 57a is possible is obtained.

In the second clutch 51b, in a state where a comparatively high hydraulic pressure is supplied from the hydraulic supply device 46 to the connection-side hydraulic chamber 54b in an engine driving state, the pressure plate 52b moves leftward (to the flange portion 64b side, that is, the clutch connection side) against the hydraulic pressure of the disconnection-side hydraulic chamber 55b and the biasing force of the return spring 53b, and the clutch plates 61b and the clutch discs 66b are compressed and friction-engage with each other, and accordingly, a clutch connected state where torque transmission between the clutch outer 56 and the clutch center 57b is possible is obtained.

From the clutch connected states of the clutches 51a and 51b, when hydraulic pressure supply to the connection-side hydraulic chambers 54a and 54b is stopped, due to the hydraulic pressures of the disconnection-side hydraulic chambers 55a and 55b and biasing forces of the return springs 53a and 53b, the pressure plates 52a and 52b are displaced rightward, and the frictional engagements between the clutch plates 61a and 61b and the clutch discs 66a and 66b are released, and clutch disconnected states where torque transmissions between the clutch outer 56 and the clutch centers 57a and 57b are impossible are obtained.

The engine oil supplied to the disconnection-side hydraulic chambers 55a and 55b of the clutches 51a and 51b is guided to the outsides of the hydraulic chambers via oil passages properly formed in the inner wall portions 65a and 65b, etc., and properly supplied to the clutch plates 61a and 61b and the clutch discs 66a and 66b on the outer peripheries of the inner wall portions 65a and 65b. By thus releasing the hydraulic oil in the disconnection-side hydraulic chambers 55a and 55b, the hydraulic pressures inside the disconnection-side hydraulic chambers 55a and 55b are maintained in a predetermined low pressure state, and the clutch plates 61a and 61b and the clutch discs 66a and 66b in the clutches 51a and 51b in the disconnected states are improved in lubricating property and cooling performance.

In the above-described twin clutch transmission 23, even after the engine of the motorcycle 1 starts, when it is judged that the motorcycle is in a stopped state based on the fact that the side stand stands, both of the clutches 51a and 51b are maintained in the clutch disconnected state. Then, for example, when the side stand is stored or the switches SWA, SW2, and SW3 are operated, as preparation for the running start of the motorcycle 1, the transmission 47 changes from the neutral state into a first-speed state where power transmission using the first-speed gear (start gear, speed-changing gear pair 45a) is possible, and from this state, for example, according to an increase in the engine rotational frequency, the first clutch 51a goes into a clutch connected state via a half-clutch state, and accordingly, the motorcycle 1 is started to run.

When the motorcycle 1 runs, only one clutch corresponding to the current shift position of the clutches 51a and 51b is connected, and the other clutch is left disconnected. Accordingly, power transmission via one of the inner and outer shafts 43 and 44 and any of the speed-changing gear pairs 45a to 45f is performed. At this time, the ECU 42 controls operation of the twin clutch transmission 23 based on vehicle information, and creates a state where power transmission using a speed-changing gear pair corresponding to the next shift position is possible in advance. Hereinafter, an operation for creating this state is referred to as "preparatory gear shifting."

In detail, when the current shift position (shift stage) is, for example, an odd-numbered stage (or even-numbered stage), the next shift position is an even-numbered stage (or odd-numbered stage), so that preparatory gear shifting for enabling power transmission using a speed-changing gear pair corresponding to the even-numbered stage (or odd-numbered stage) is performed. At this time, the first clutch 51a is in a connected state, however, the second clutch 51b (or first clutch 51a) is in a disconnected state, so that the engine output is not transmitted to the outer shaft 44 (or the inner shaft 43) and the speed-changing gear pairs corresponding to even-numbered stages (or odd-numbered stages).

Thereafter, when the ECU 42 judges that a shift timing has been reached, only by disconnecting the first clutch 51a (or second clutch 51b) and connecting the second clutch 51b (or first clutch 51a), the power transmission is switched to power transmission using a speed-changing gear pair corresponding to the next shift position selected in advance. Accordingly, quick and smooth gear shifting without a time lag and interruption of power transmission in gear shifting is realized.

The twin clutch transmission 23 is configured so that, during normal running at a constant shift stage, a slight hydraulic pressure as "precompression" is supplied to the connection-side hydraulic chamber of the clutch (51a or 51b) in the disconnected state and this clutch is slightly operated to the clutch connection side. This slight hydraulic pressure corresponds to a hydraulic pressure just enough or more to narrow the mechanical play of the clutch, that is, equal to or more than a hydraulic pressure corresponding to the force of the return spring of the clutch.

During normal driving at a constant shift stage, in the clutch in a connected state (connected clutch), components on the crankshaft 21 side (components that rotate integrally with the primary driven gear 58, that is, the clutch outer 56 and the clutch plates 61a or 61b, etc.) and components on the transmission 47 side (components that rotate integrally with the main shaft 28, that is, the clutch center 57a or 57b and the clutch discs 66a or 66b, etc.) rotate integrally with each other. On the other hand, in normal driving, in a clutch in a disconnected state (disconnected clutch), components on the crankshaft 21 side idle with respect to components on the transmission 47 side in a stopped state.

In each of the clutches 51a and 51b, between the engagement grooves on the outer periphery of the clutch outer 56 and the engagement projections on the outer peripheries of the clutch plates 61a or 61b, and between the engagement grooves on the outer periphery of the clutch center 57a or 57b and the engagement projections on the inner peripheries of the clutch discs 66a or 66b, mechanical play (clearance) is present in the rotation direction when the driving force (torque) is not transmitted, however, as described above, by slightly operating the clutch in a disconnected state to the clutch connection side, a slight torque is applied from the components on the crankshaft 21 side to the components on the transmission 47 side. Accordingly, the play in the rotation direction can be narrowed, and noise caused by the play can be reduced during normal driving.

The clutch control device according to the present embodiment is featured by a configuration in which the following four controls are possible in addition to the above-described control for narrowing the play by applying precompression.

(1) Control for enabling accurate hydraulic control in a half-clutch region without using a clutch stroke sensor, etc., by detecting an actual connection state of the clutch based on a change in clutch hydraulic sensor output

(2) Control for performing proper clutch connection by detecting a clutch slipping state at the time of clutch switching based on a change in rotational frequency ratio of the crankshaft to the counter shaft

(3) Control for forcibly connecting a clutch when gear shifting is not completed even after a predetermined time elapses at the time of clutch switching according to a gear shifting operation

(4) Control for setting an appropriate suspension time from the start of an operation for releasing the precompression until starting driving of the speed-changing gears to prevent knocking accompanying preparatory gear shifting

Hereinafter, operations for performing the controls (1) to (4) described above are described with reference to the drawings.

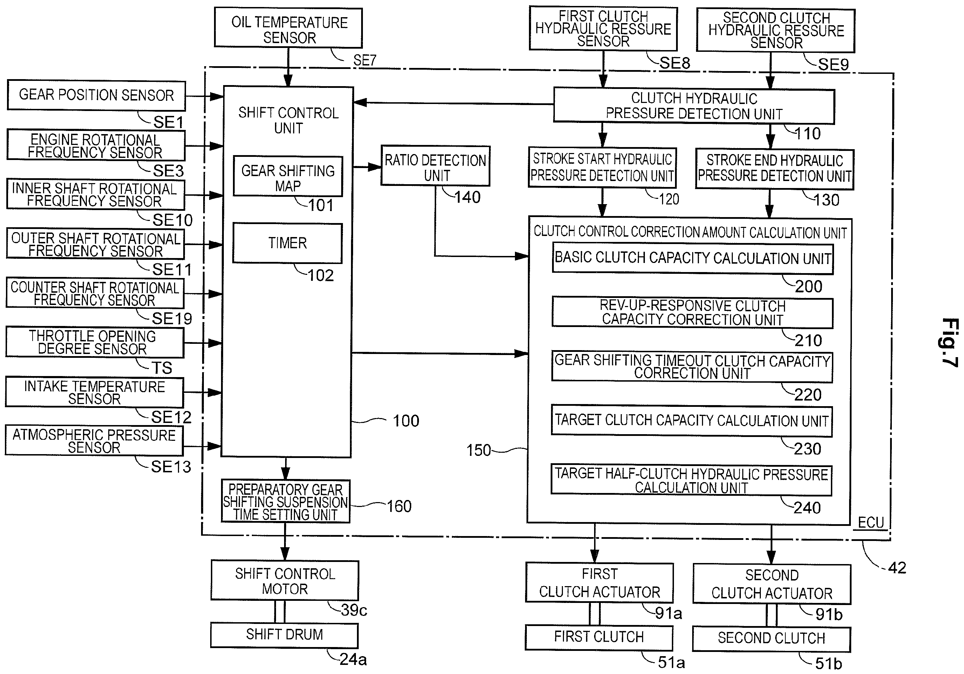

Fig. 7 is a block diagram showing a configuration of an ECU 42 as a clutch control device according to an embodiment of the present invention and peripheral equipment thereof. The same reference symbols as described above indicate the same or equivalent portions. The ECU 42 includes a shift control unit 100, a clutch hydraulic pressure detection unit 110, a stroke start hydraulic pressure detection unit 120, a stroke end hydraulic pressure detection unit 130, a ratio detection unit 140, a clutch control correction amount calculation unit 150, and a preparatory gear shifting suspension time setting unit 160. The shift control unit 100 includes a gear shifting map 101 and a timer 102. The timer 102 can calculate the engine rotation speed, etc., and measure various times such as times relating to gear shifting operations. Further, the clutch control correction amount calculation unit 150 includes a basic clutch capacity calculation unit 200, a rev-up-responsive clutch capacity correction unit 210, a gear shifting timeout clutch capacity correction unit 220, a target clutch capacity calculation unit 230, and a target half-clutch hydraulic pressure calculation unit 240.

Into the shift control unit 100, signals are input from the oil temperature sensor SE7, the gear position sensor SE1, the engine rotational frequency sensor SE3, the inner shaft rotational frequency sensor SE10, the outer shaft rotational frequency sensor SE11, the counter shaft rotational frequency sensor SE19, the throttle opening degree sensor TS, an intake temperature sensor SE12, and an atmospheric pressure sensor SE13. Signals from the first clutch hydraulic sensor SE8 and the second clutch hydraulic sensor SE9 are input into the shift control unit 100 via the clutch hydraulic pressure detection unit 110.

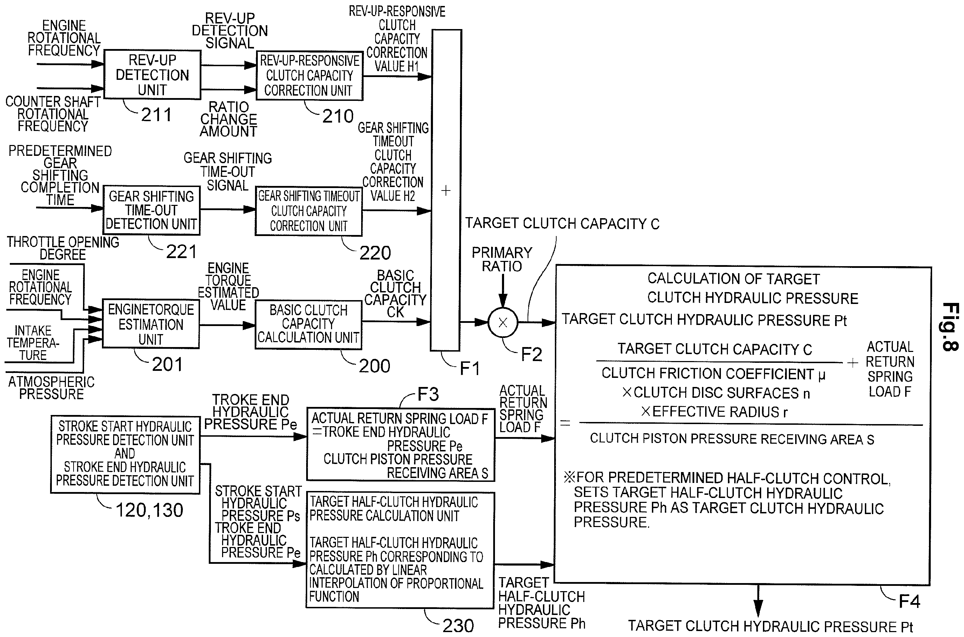

The shift control unit 100 performs a gear shifting operation by driving the shift control motor 39c, the first clutch actuator 91a, and the second clutch actuator 91b according to the gear shifting map 101 consisting of a three-dimensional map, etc., based on signals from the gear position sensor SE1, the engine rotational frequency sensor SE3, and the throttle opening degree sensor TS and vehicle speed information during normal running of the vehicle. In automatic shift control according to the gear shifting map 101 and semiautomatic gear shifting by an operation of the gear select switch SW2, the shift control unit 100 also detects a gear shifting state such as a state during gear shifting in response to issuing of a gear shifting signal. Here, Fig. 8 is referred to.

Fig. 8 is a block diagram showing steps of calculating a target clutch hydraulic pressure Pt. The above-described clutch capacity correction amount calculation unit 150 finally calculates a target clutch hydraulic pressure Pt through various arithmetic processings, and drives the first or second clutch actuator 91a or 91b so that this target clutch hydraulic pressure Pt is supplied to the first or second clutch 51a or 51b. The target clutch hydraulic pressure Pt is a hydraulic pressure with which the clutch is completely connected, and is calculated by the following formula shown in the step F4 by using a target clutch capacity C and an actual return spring load F.

$$\text{Pt} = ((\text{target clutch capacity C} / \text{clutch friction coefficient } \mu \times \text{number of driving clutch disc surfaces n} \times \text{effective radius r}) + \text{actual return spring load F}) / \text{clutch piston pressure receiving area S}$$

A value obtained by correcting a basic target clutch capacity CK calculated in the basic clutch capacity calculation unit 200 by using a rev-up-responsive clutch capacity correction value HI and a gear shifting timeout clutch capacity correction value H2 in the step F1 is multiplied by a primary ratio (reduction ratio from the crankshaft to the main shaft) in the step F2, and accordingly, the target clutch capacity C is calculated.

The basic target clutch capacity CK is a value larger than a torque that enables transmission of rotational driving force without clutch slip, that is, larger than a current engine torque by an arbitrary amount $\alpha$ (for example, 20% larger than the engine torque). This arbitrary amount $\alpha$ is a parameter that influences the gear shifting time and the gear shifting feeling, and is set to an arbitrary value according to the situation. In an engine torque estimation unit 201, an engine torque estimated value is calculated based on information such as the throttle opening degree, the engine rotational frequency, the intake temperature, and the atmospheric pressure.

Further, the actual return spring load F is calculated by the following formula in the step F3.

$$\text{Actual return spring load F} = \text{stroke end hydraulic pressure Pe} \times \text{clutch piston pressure receiving area S}$$

Here, for example, when the actual return spring load F becomes larger than a reference value (fixed value determined in advance based on a designed value, etc.), it is likely that changes occurred such that the stroke amount increased according to wear of the driving clutch discs and the return spring pressing amount increased, or the return springs (return springs 53a and 53b) were replaced with products with higher resilient force. On the other hand, when the actual return spring load F is smaller than the reference value, it is likely that the resilient forces of the return springs weakened with age, etc. In the present embodiment, corrective control taking such a change in actual return spring load F into account can be performed through the steps F3 and F4.

When the target clutch hydraulic pressure Pt is obtained, by applying this to a data table (not illustrated) regulating the relationship between the target clutch pressure Pt and the actuator drive current, a corrected clutch control amount taking the change in actual return spring load F into account is obtained. The clutch control correction amount calculation means 150 controls driving of the first clutch actuator 91a and the second clutch actuator 91b by using the calculated actuator drive current. Accordingly, even when a clutch state change occurs due to a return spring characteristic change, etc., the running feeling can be prevented from changing.

By performing the clutch control amount calculation process based on the actual return spring load F at the time of completion inspections, etc., of vehicles, the vehicles can be shipped from the plant in a state where the same clutch setting is applied to all of the vehicles even if variation in accuracy, etc., of the return springs occurs. Further, when the clutch corrective control amount exceeds the predetermined value, this can be notified to occupants by using a warning means consisting of a warning lamp and a speaker, etc., and the driver can be urged to take a measure, such as replacement of the driving clutch discs and return springs, and inspection of the drive transmission system from the clutches to the drive wheel.

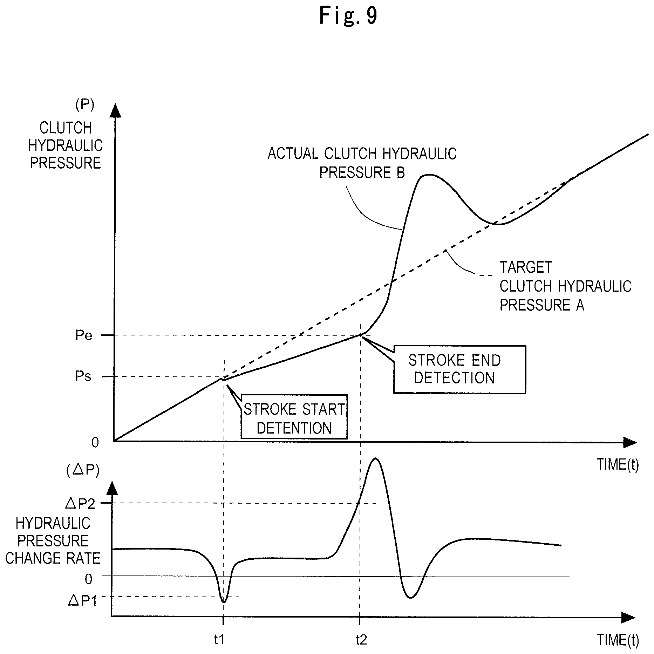

The stroke end hydraulic pressure Pe to be used for calculating the actual return spring load F is detected by the stroke end hydraulic pressure detection unit 130. Further, in the present embodiment, by detecting a stroke start hydraulic pressure Ps by the stroke start hydraulic pressure detection unit 120, a target half-clutch hydraulic pressure Ph necessary for creating an arbitrary half-clutch state can be calculated separately from the target clutch hydraulic pressure Pt. Here, with reference to Fig. 9, a method for detecting the stroke start hydraulic pressure Ps and the stroke end hydraulic pressure Pe is described.

Fig. 9 is a graph showing clutch hydraulic pressure change when the clutch is driven in a connecting direction. In this graph, the target clutch hydraulic pressure A is shown by a dashed line, and the actual clutch hydraulic pressure B detected by the clutch hydraulic pressure detection unit 110 is shown by a solid line. As described above, the hydraulic clutch according to the present embodiment is configured to make a stroke in a connecting direction against a biasing force of the return spring by being supplied with a hydraulic pressure. Therefore, even when driving of the clutch actuator is started at the time t = 0 to connect the clutch, the clutch does not start to make a stroke immediately, and the actual clutch hydraulic pressure B increases along the target clutch hydraulic pressure A.

Then, at the time t1, the actual clutch hydraulic pressure B exceeds the biasing force of the return spring and the clutch starts to make a stroke, and along with this, the degree of the increase in actual clutch hydraulic pressure B slightly changes to the negative side and then changes to a gentle increase. Next, at the time t2, driving clutch discs come into contact with each other and the clutch reaches a position at which it cannot make a stroke any more (stroke end position), and accordingly, the actual clutch hydraulic pressure B increases sharply, and thereafter, it exceeds the target clutch hydraulic pressure A and then converges at the target clutch hydraulic pressure A. Thus, by observing the change in actual clutch hydraulic pressure B, it can be estimated and detected that the clutch has reached the stroke start position and the stroke end position.

In the present embodiment, a change amount is obtained from a differential value of the actual clutch hydraulic pressure B, and when this change amount exceeds a negative predetermined value ΔP1 determined in advance (becomes smaller than ΔP1), it is judged that the clutch has started to make a stroke, and on the other hand, when this change amount exceeds a positive predetermined value ΔP2 determined in advance, it is judged that the clutch has reached the stroke end position. In this graph, the change amount of the actual hydraulic pressure exceeds the negative predetermined value ΔP1 at the time t1, so that the actual clutch hydraulic pressure Ps at the time t1 is detected as a hydraulic pressure value at the time of stroke start, and a change amount of the actual clutch hydraulic pressure B exceeds the positive predetermined value ΔP2 (becomes larger than ΔP2) at the time t2, so that the actual clutch hydraulic pressure Pe at the time t2 is detected as a hydraulic pressure value at the stroke end.

As described above, the twin clutch 26 is configured to slide the pressure plate 52a or 52b in a clutch connecting direction against a biasing force of the return spring 53a or 53b by supplying a hydraulic pressure to the connection-side hydraulic chamber. Therefore, for example, when the driving clutch discs are worn and the stroke amount until the driving clutch discs come into contact with each other increases or the return spring is replaced with a product with a greater resilient force, the load necessary for bringing the driving clutch discs into contact with each other increases. When this change occurs, if driving is performed to generate the same hydraulic pressure as that before the change, the time from the start of clutch driving until the clutch is connected becomes longer, and the clutch torque capacity becomes excessive or insufficient and the running feeling at the time of vehicle running start or gear shifting may change.

Therefore, in the present embodiment, by detecting the load at the timing at which the driving clutch discs come into contact with each other, that is, the timing at which the clutch reaches the "stroke end position" where the clutch cannot make a stroke any more, a control correction amount at the stroke end position is calculated.

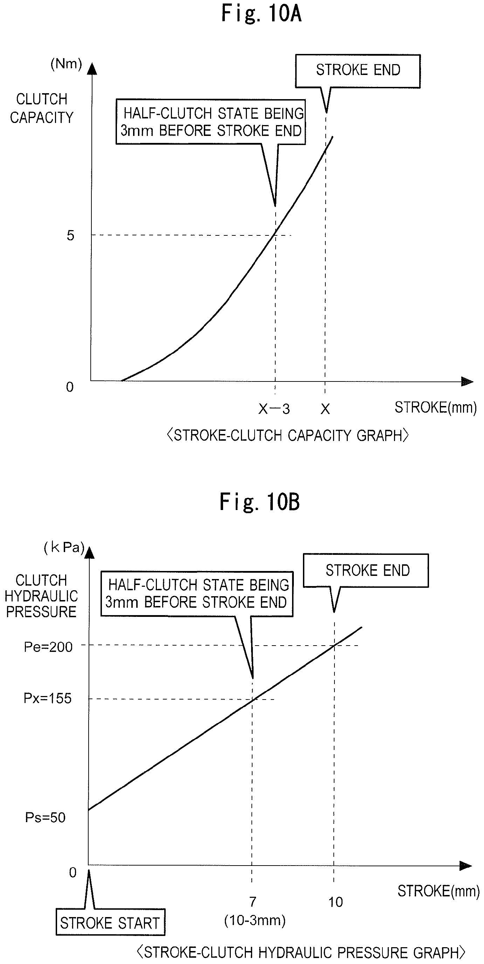

Further, when the return spring has individual difference or variation in assembly, etc., even with the same stroke amount in the half-clutch region, the torque to be transmitted in a half-clutch state differs. In the present embodiment, by detecting a load at the timing at which the clutch reaches the "stroke start position" at which the clutch starts to make a stroke in addition to the load at the stroke end position, a control correction amount in the half-clutch region can be calculated. Here, referring to Fig. 10, a method for correcting a control amount in the half-clutch region by using the values of the stroke start hydraulic pressure Ps and the stroke end hydraulic pressure Pe is described.

Fig. 10A shows a stroke-clutch capacity graph and Fig. 10B shows a stroke-clutch hydraulic pressure graph. The stroke-clutch capacity graph Fig. 10A shows the relationship between the clutch stroke depending on the spring characteristics of the return spring 53a or 53b and the clutch capacity. Here, it is found that, when it is desired to set a clutch capacity at the time of predetermined half-clutch to 5 Nm, the stroke amount of the clutch is set to be 3 mm before the stroke end (full stroke position) of X mm.

Next, the stroke-clutch hydraulic pressure graph Fig. 10B approximately shows the relationship between the hydraulic pressure supplied to the clutch and the stroke based on the above-described stroke start hydraulic pressure Ps and stroke end hydraulic pressure Pe. By performing linear interpolation in this graph, a clutch hydraulic pressure Px at the 7 mm stroke that is 3 mm before the stroke end is found when the stroke amount at the stroke end is 10 mm, the stroke start hydraulic pressure Ps is 50 kPa, and the stroke end hydraulic pressure Pe is 200 kPa. The clutch hydraulic pressure Px corresponds to a target half-clutch hydraulic pressure Ph necessary for obtaining the target half-clutch capacity of 5 Nm, and is calculated by the following calculation formula.

$$\text{Target half-clutch hydraulic pressure Ph} = \text{stroke start hydraulic pressure Ps} + ((\text{stroke end hydraulic pressure Pe} - \text{stroke start hydraulic pressure Ps}) \times \text{target half-clutch stroke}) / \text{clutch stroke}) = 50 + ((200-50) \times 7/10) = 155 \ (kPa)$$

The calculated target half-clutch hydraulic pressure Ph is applied instead of the target clutch hydraulic pressure Pt when a clutch capacity in a predetermined half-clutch state is set (refer to the step F4 in Fig. 8).

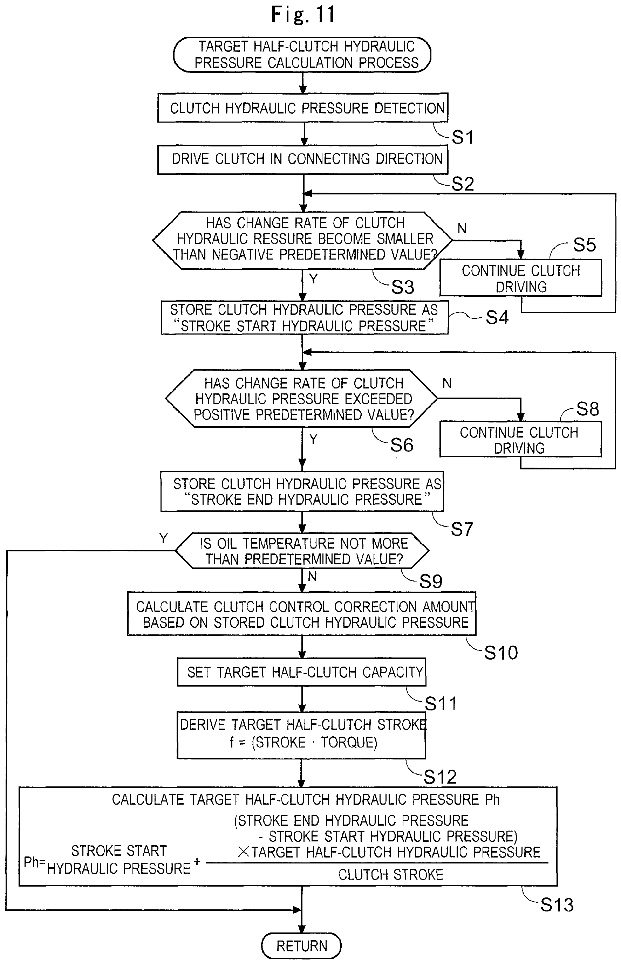

Fig. 11 is a flowchart showing steps of calculating the target half-clutch hydraulic pressure Ph. First, in Step S1, clutch hydraulic pressure detection is started by the clutch hydraulic pressure detection unit 110 (refer to Fig. 7). In the subsequent Step S2, the clutch for which a target half-clutch hydraulic pressure Ph is calculated is driven in the connecting direction. The target half-clutch hydraulic pressure calculation process can be performed for both clutches alternately when the transmission is in a neutral state. When the transmission is in a state where a predetermined-stage gear is selected including the state during running, the calculation process can be performed for the disconnected clutch.

In Step S3, the stroke start hydraulic pressure detection unit 120 (refer to Fig. 7) judges whether the clutch hydraulic pressure change rate has become lower than the negative predetermined value ∆P1. When an affirmative judgment is made in Step S3, the process advances to Step S4, and the clutch hydraulic pressure Ps at this timing is stored as "stroke start hydraulic pressure." Next, in Step S6, the stroke end hydraulic pressure detection unit 130 (refer to Fig. 7) judges whether the clutch hydraulic pressure change rate has exceeded the positive predetermined value ∆P2. When an affirmative judgment is made in Step S6, the process advances to Step S7, and the clutch hydraulic pressure Pe at this timing is stored as "stroke end hydraulic pressure." When a negative judgment is made in Step S3, clutch driving is continued in Step S5 and the process returns to Step S3, and when a negative judgment is made in Step S6, clutch driving is continued in Step S8 and the process returns to Step S6.

In Step S9, the oil temperature sensor SE7 judges whether the hydraulic oil temperature of the clutch is not more than a predetermined value (for example, 50°C). This judgment is made because the oil temperature is related closely to the viscosity change of the hydraulic oil. In the present embodiment, when an affirmative judgment is made in Step S9, that is, when it is estimated that the oil temperature is low and the viscosity of the hydraulic oil is high, this state is recognized as unsuitable for calculation of the clutch control correction amount and the control is directly ended. On the other hand, when a negative judgment is made in Step S9, that is, when the oil temperature exceeds a predetermined value and the state is judged as suitable for calculation of the clutch control correction amount, the process advances to Step S10.

In Step S10, by performing the arithmetic processing shown in Fig. 8 by using the hydraulic pressure values Ps and Pe stored in Step S4 and S7 described above, the clutch control correction amount is calculated. In the subsequent Step S11, a target half-clutch capacity is set, and in Step S12, based on the graph shown in Fig. 10B, a target half-clutch stroke is derived. Then, in Step S13, a target half-clutch hydraulic pressure Ph is calculated by using the above-described calculation formula by the target half-clutch hydraulic pressure calculation unit 240, and the series of controls is ended.

As described above, with the clutch control device according to the present embodiment, by detecting the stroke end position of the clutch based on an actual clutch hydraulic pressure change, proper clutch control can be performed even when the clutch control amount at the stroke end position changes. Further, by detecting a hydraulic pressure at the stroke start position in addition to the hydraulic pressure at the stroke end position, proper clutch control can be performed even in a half-clutch state between the stroke start position and the stroke end position.

The above-described method for detecting a stroke start position and a stroke end position of the clutch can also be applied to an electric clutch using an electric motor as a drive source.

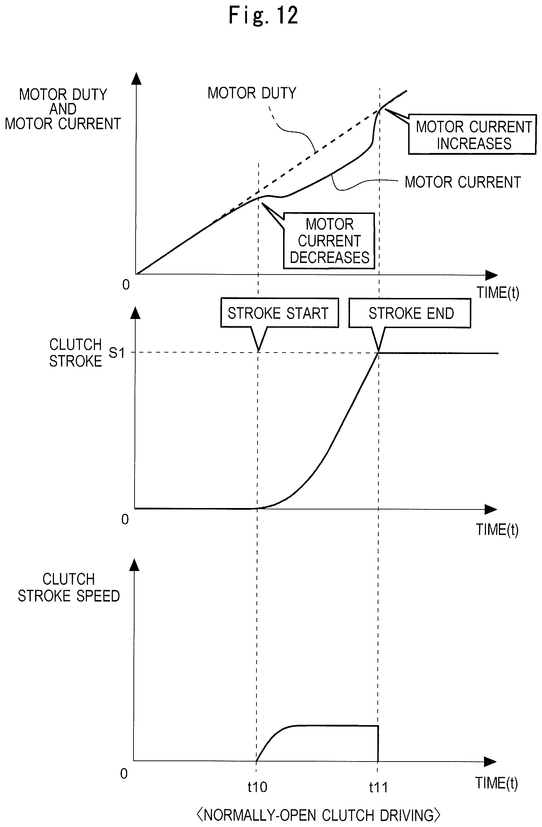

Fig. 12 is a graph showing a method for detecting a stroke start position and a stroke end position when a normally-open clutch is driven by an electric motor. In this drawing, in order from the upper side, the motor duty and the motor current, the clutch stroke, and the clutch stroke speed are shown. In the present embodiment, by observing a change in motor current detected by a current sensor, it is estimated and detected that the clutch has reached the stroke start position and the stroke end position.

The electric clutch shown in this drawing is configured to be disconnected in a state where the electric motor is not energized, and the clutch stroke at the time t = 0 is zero. After starting application of the motor duty shown by the dashed line in the drawing, in a predetermined period, due to a biasing force of the return spring, the motor does not rotate and the clutch does not start to make a stroke. At this time, the actual motor current value shown by the solid line in the drawing increases linearly along the motor duty.

Next, when the motor starts to rotate at a certain timing close to the time t10, that is, when the clutch starts to make a stroke, as compared with the motor duty that increases linearly, the actual motor current lowers for a moment and then gently increases. Then, at the time t11, the driving clutch discs come into contact with each other and the stroke end position at which the clutch stroke becomes S1 is reached, and accordingly, the motor current increases sharply.

In the present embodiment, a change amount (not illustrated) of the motor current is obtained from a differential value of the motor current, and when this change amount exceeds a negative predetermined value determined in advance, it is judged that the clutch has started to make a stroke, and further, when the change amount of the motor current exceeds a positive predetermined value determined in advance, it is judged that the clutch has reached the stroke end position.

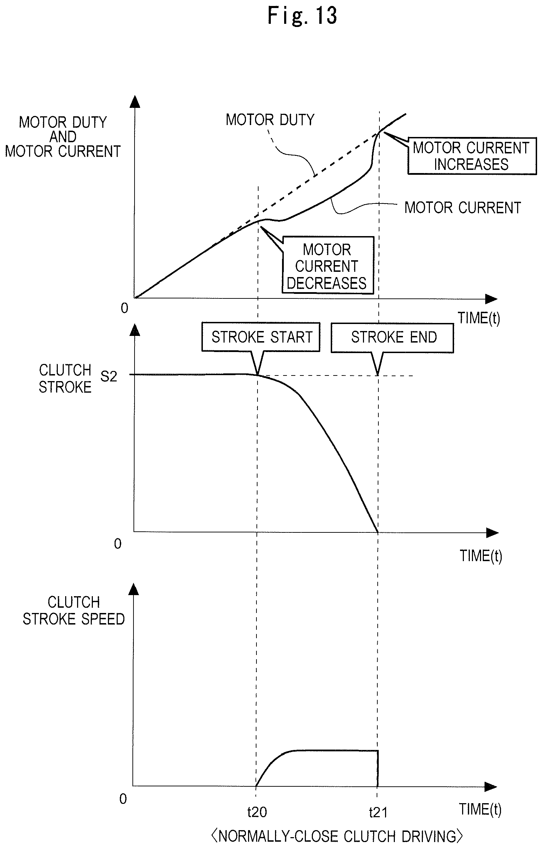

Fig. 13 is a graph showing a method for detecting a stroke start position and a stroke end position when a normally-closed clutch is driven by an electric motor. Even in the case of the normally-closed clutch that goes into a full-stroke state, that is, a clutch connected state when the electric motor is not energized, a stroke start position and a stroke end position can be obtained by the same method as described above.

At the time t = 0, the clutch stroke is S2 indicating a full-stroke state. After application of the motor duty shown by the dashed line in the drawing is started, for a predetermined period, due to a biasing force of the return spring, the motor does not rotate and the clutch does not start to make a stroke. At this time, the actual motor current value shown by the solid line in the drawing increases linearly along the motor duty.

Next, when the motor starts to rotate at a certain timing close to the time t20, as compared with the motor duty that increases linearly, the actual motor current lowers for a moment and then gently increases. Then, at the time t21, the driving clutch discs come into contact with each other and the clutch stroke reaches the stroke end position of zero, and accordingly, the motor current increases sharply.

As described above, even in an electric clutch that is driven by an electric motor, a stroke start position and a stroke end position can be detected based on a change amount of the motor current value.

Next, the above-described (2) "control for performing proper clutch connection by detecting a clutch slipping state at the time of clutch switching based on a change in rotational frequency ratio of the crankshaft to the counter shaft" is described.

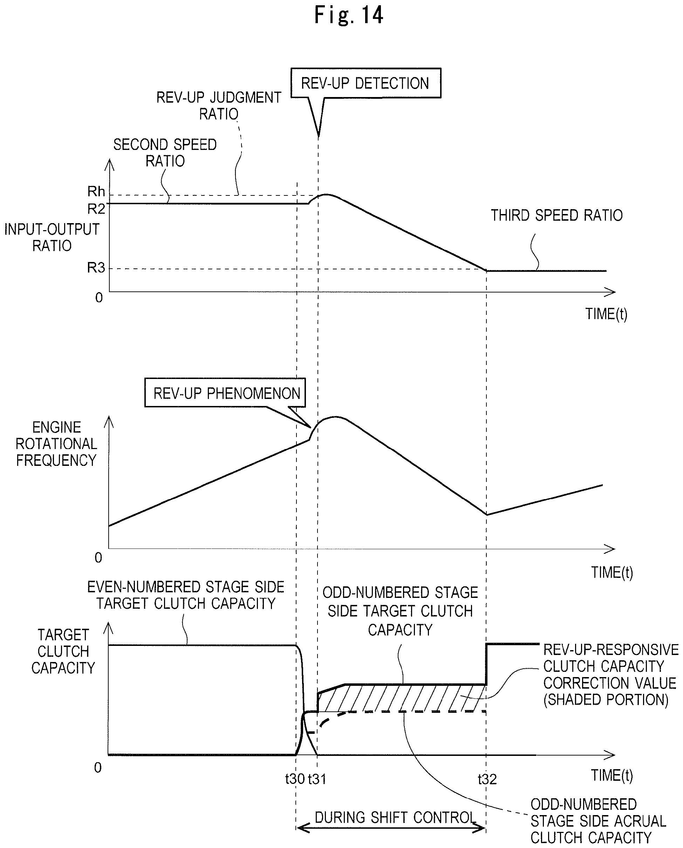

Fig. 14 is a time chart showing a flow of clutch control when a "rev-up phenomenon" at the time of shift-up is detected. Here, "rev-up phenomenon" means a phenomenon in which at the time of a gear shifting operation during normal running after the vehicle starts to run, that is, when the connected clutch of the twin clutch is switched from one clutch to the other clutch, the clutch capacity of the other clutch is insufficient and clutch slip occurs, and the engine rotational frequency rises (rev-up).

Here, in the case where the clutch slip occurs when the vehicle starts running, this can be detected by focusing on a change in engine rotational frequency. However, if the clutch slip is detected in various states by focusing on only the degree of increase in engine rotational frequency, for example, in a case where gear shifting from the second speed to the third speed is performed while undergoing large acceleration, an increase in engine rotational frequency caused by acceleration may be erroneously detected as clutch slip. In order to cope with this, in the present embodiment, detection of the rev-up phenomenon is performed based on a change in ratio of the rotation speed of the crankshaft to the rotation speed of the counter shaft, that is, a change in input-output ratio.

Fig. 14 shows a flow of clutch control at the time of shift-up from the second speed to the third speed, that is, when the connected clutch is switched from the second clutch to the first clutch. In this drawing, in order from the upper side, the input-output ratio, the engine rotational frequency, and the target clutch capacity are shown. The input-output ratio R is calculated by dividing the engine rotational frequency detected by the engine rotational frequency sensor SE3 by the counter shaft rotational frequency detected by the counter shaft rotational frequency sensor SE19 by the ratio detection unit 140. The input-output ratio R takes a fixed value for each shift position while the clutch is completely connected, and takes a value between the fixed values when the clutch is not in a completely connected state. In the present embodiment, by using this characteristic, the rev-up phenomenon at the time of gear shifting, that is, clutch slip at the time of gear shifting is detected by observing a change in input-output ratio R.

From the time t = 0 to t30, the vehicle accelerates by selecting the second-speed gear. During this time, when the clutch is in a connected state, only the engine rotational frequency changes, and the input-output ratio is kept at R2. Then, at the time t30, the switching from the second clutch to the first clutch according to a gear shifting operation is started. In the present embodiment, to reduce torque fluctuation at the time of gear shifting, the target clutch capacities when switching the clutch are set so that the first clutch is changed into a connected state in a phased manner while the second clutch is immediately changed into a disconnected state.

Here, when clutch slip does not occur during shift control, the input-output ratio R2 should quickly start to decrease to the input-output ratio R3 for the third speed from the time t30, however, in the example shown in this drawing, the input-output ratio R increases after the shift control starts, and reaches the rev-up judgment ratio Rh at the time t31. In the present embodiment, based on reach of the input-output ratio R to the predetermined rev-up judgment ratio Rh during shift control, a rev-up phenomenon is detected.

In the example shown in Fig. 14, although the hydraulic pressure supply is started from the time t30, the actual clutch capacity of the first clutch does not reach the target clutch capacity, so that clutch slip occurs, and a rev-up phenomenon is detected at the time t31. In response to this, in the present embodiment, by adding a clutch capacity correction amount shown by the illustrated shaded portion, the actual clutch capacity of the first clutch is made to match the target clutch capacity, and the shift control is completed at the time t32.

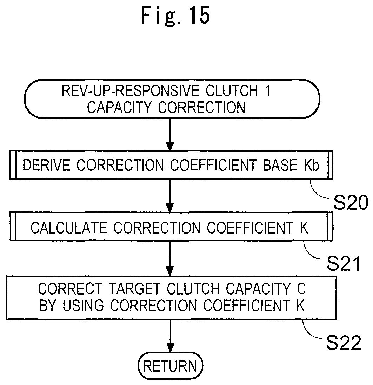

Fig. 15 is a flowchart showing steps of rev-up-responsive clutch 1 capacity corrective control according to the present embodiment. The rev-up-responsive clutch 1 capacity corrective control is performed by a rev-up-responsive clutch capacity correction unit 210 (refer to Fig. 7), and consists mainly of three steps. First, in Step S20, a correction coefficient base Kb is derived by using a predetermined data table. In Step S21, a correction coefficient K is calculated, and in Step S22, a target clutch capacity C is corrected by using the correction coefficient K, and then the series of controls is ended. When a rev-up phenomenon occurs at the time of gear shifting from an odd-numbered stage gear to an even-numbered stage gear, the same corrective control can be applied to the second clutch.

Referring to Fig. 8, an engine rotational frequency and a counter shaft rotational frequency are input into the rev-up detection unit 211. The rev-up detection unit 211 includes the ratio detection unit 140 (refer to Fig. 7). The rev-up-responsive clutch capacity correction unit 210 calculates a rev-up-responsive clutch capacity correction value HI according to a rev-up detection signal and a ratio change amount input from the rev-up detection unit 211.

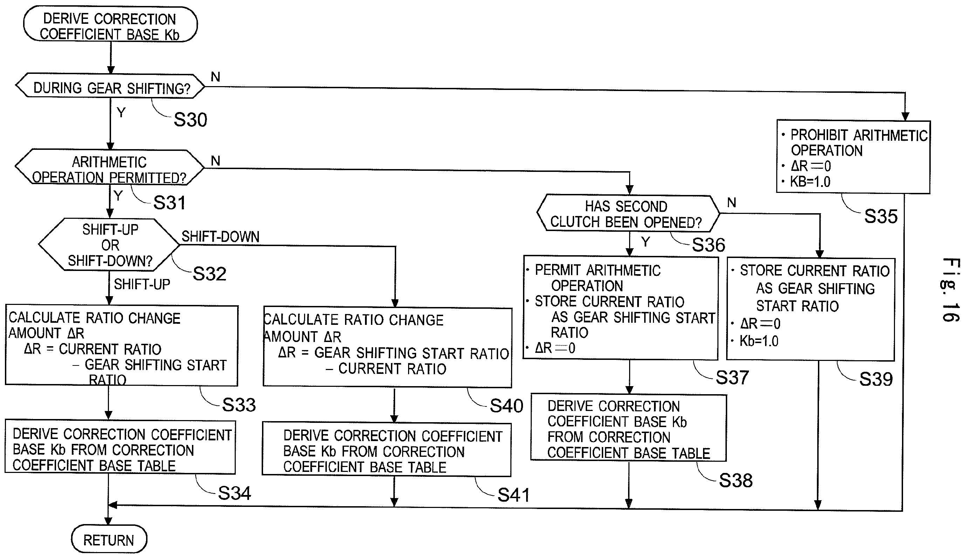

Fig. 16 is a flowchart showing steps of deriving a correction coefficient base Kb. This flowchart corresponds to control for gear shifting from an even-numbered stage gear to an odd-numbered stage gear by switching from the second clutch to the first clutch such as the case of gear shifting from the second speed to the third speed. First, in Step S30, it is judged whether gear shifting is being performed. When an affirmative judgment is made in Step S30, it is judged whether ratio arithmetic operation is permitted in Step S31.

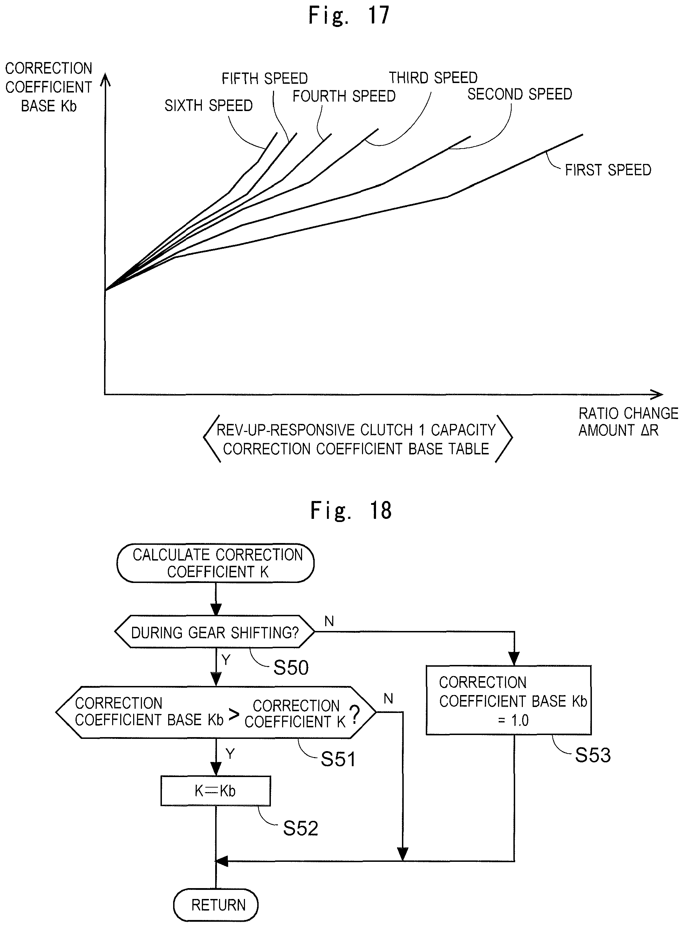

In Step S32, it is judged whether the gear shifting operation is a shift-up operation or a shift-down operation, and when it is judged as a shift-up operation, the process advances to Step S33. In Step S33, by the calculation formula of $\Delta R$ = current ratio - gear shifting start ratio, a ratio change amount $\Delta R$ is calculated. In Step S34, by using information on the ratio change amount $\Delta R$ and the current shift stage and the correction coefficient base table shown in Fig. 17, the correction coefficient base Kb is derived.

On the other hand, when it is judged in Step S32 that the gear shifting operation is a shift-down operation, in Step S40, by the calculation formula of $\Delta R$ = gear shifting start ratio - current ratio, a ratio change amount $\Delta R$ is calculated. In Step S41, in the same manner as in Step S34, by using information on the ratio change amount $\Delta R$ and the current shift stage and the correction coefficient base table, the correction coefficient base Kb is derived. In the case of the shift-down operation, the current ratio is smaller than the gear shifting start ratio, so that setting is made so that the ratio change amount $\Delta R$ is calculated by subtracting the current ratio from the gear shifting start ratio.

When a negative judgment is made in Step S30, that is, when it is judged that gear shifting is not being performed, the process advances to Step S35. In the present embodiment, "gear shifting is not being performed" corresponds to a state where switching of the clutch is completed and the gears of the disconnected clutch are switched into a neutral state. In Step S35, ratio arithmetic operation is prohibited, and the ratio change amount $\Delta R$ = 0 and the correction coefficient base Kb = 1.0 are set, and the series of controls is ended.

On the other hand, when a negative judgment is made in Step S31, it is judged that ratio arithmetic operation permission according to opening of the second clutch is not given although gear shifting is being performed, and the process advances to Step S36, and it is judged whether the second clutch has been opened. In the present embodiment, according to issuing of a disconnection command to the clutch that is currently connected, that is, sending of a signal for closing the clutch actuator, it is judged that the second clutch has been opened.

When an affirmative judgment is made in Step S36, the process advances to Step S37, and ratio arithmetic operation is permitted and the current ratio is stored as a gear shifting start ratio, and the ratio change amount $\Delta R$ = 0 is set. In the subsequent Step S38, a correction coefficient base Kb is derived by using the correction coefficient base table shown in Fig. 17, and the series of controls is ended. When a negative judgment is made in Step S36, that is, when it is judged that the second clutch has not been opened, the process advances to Step S39, the current ratio is stored as a gear shifting start ratio, the ratio change amount $\Delta R$ = 0 is set, the correction coefficient base Kb = 1.0 is set, and the series of controls is ended.

Fig. 18 is a flowchart showing steps of a correction coefficient K calculation process. First, in Step S50, it is judged whether gear shifting is being performed, and when an affirmative judgment is made, the process advances to Step S51. In Step S51, it is judged whether the value of the correction coefficient base Kb has exceeded the value of the correction coefficient K. When an affirmative judgment is made in Step S51, the process advances to Step S52, the correction coefficient K is set to the value of Kb, and the series of controls is ended. Through these steps, in the case where the correction coefficient K has already been set, the correction coefficient K can be updated only when a newly derived correction coefficient base Kb exceeds the correction coefficient K. When a negative judgment is made in Step S50, in Step S53, the correction coefficient base Kb = 1.0 is set and the series of controls is ended, and when a negative judgment is made in Step S51, Step S52 is skipped and the series of controls is ended.

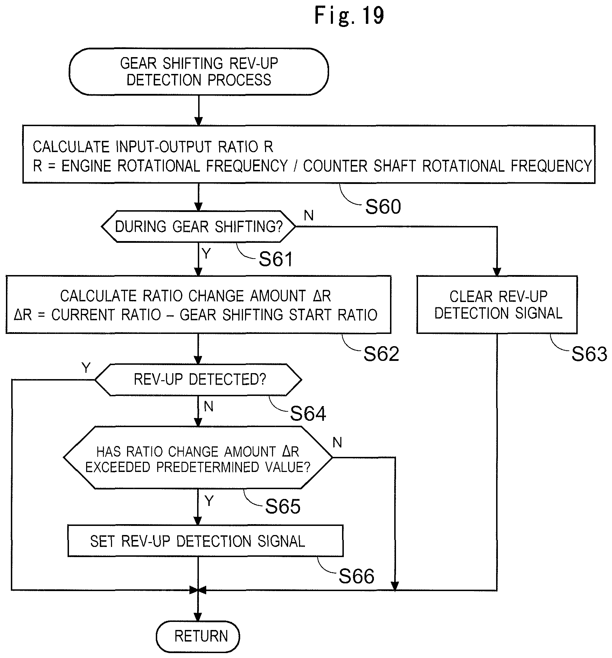

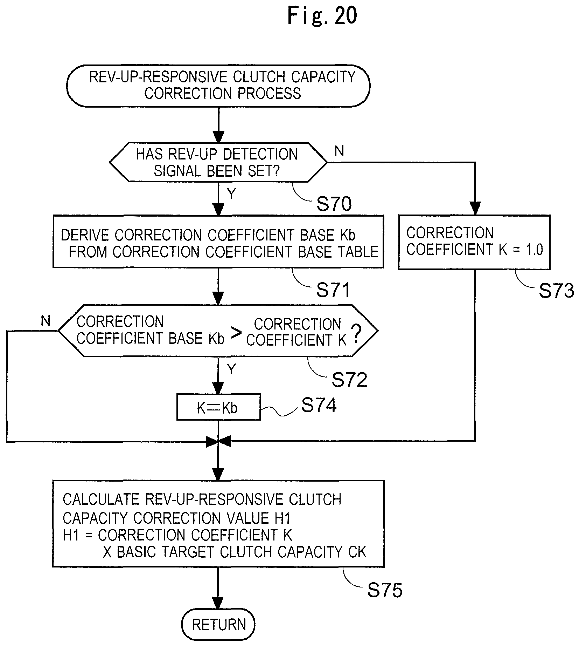

Hereinafter, a whole flow of rev-up-responsive clutch corrective control is confirmed with reference to Fig. 19 and Fig. 20. Fig. 19 is a flowchart showing a flow of a gear shifting rev-up detection process. First, in Step S60, by the calculation formula of R = engine rotational frequency / counter shaft rotational frequency, the current input-output ratio R is calculated. In Step S61, it is judged whether gear shifting is being performed, and when an affirmative judgment is made, the process advances to Step S62. On the other hand, when a negative judgment is made in Step S61, the process advances to Step S63 and the rev-up detection signal is cleared, and the series of controls is ended.

In Step S62, by the calculation formula of $\Delta R$ = current ratio - gear shifting start ratio, a ratio change amount $\Delta R$ is calculated. In Step S64, it is judged whether a rev-up state has already been detected, and when a negative judgment is made, in Step S65, it is judged whether the ratio change amount $\Delta R$ has exceeded a predetermined value. When an affirmative judgment is made in Step S65, the process advances to Step S66, and a rev-up detection signal is set, and the series of controls is ended. On the other hand, when an affirmative judgment is made in Step S64, Steps S65 and S66 are skipped, and when a negative judgment is made in Step S65, Step S66 is skipped, and after each of these, the series of controls is ended.

Fig. 20 is a flowchart showing a detailed flow of a rev-up-responsive clutch capacity correction process. First, in Step S70, it is judged whether a rev-up detection signal has been set. When an affirmative judgment is made in Step S70, the process advances to Step S71, and a correction coefficient base Kb is derived by using the correction coefficient base table.

In the subsequent Step S72, it is judged whether the derived correction coefficient base Kb has exceeded a correction coefficient K that is predetermined (set in the previous process), and when an affirmative judgment is made, K = Kb is set in Step S74 and the process advances to Step S75. On the other hand, when a negative judgment is made in Step S72, the predetermined correction coefficient K is kept and the process advances to Step S75. In Step S75, by using the calculation formula of HI = correction coefficient K $\times$ basic target clutch capacity CK, rev-up-responsive clutch capacity correction value HI is calculated, and the series of controls is ended. When a negative judgment is made in Step S70, the correction coefficient K = 1.0 (no correction) is set in Step S73, and the process advances to Step S75. The calculated rev-up-responsive clutch capacity correction value HI is used when calculating a target clutch capacity C as shown in Fig. 8.

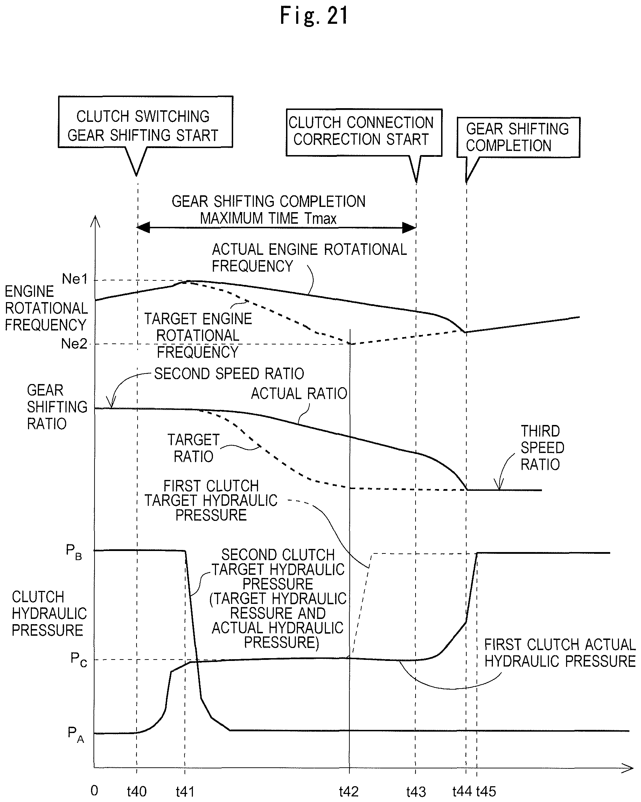

Hereinafter, the above-described (3) "control for forcibly connecting a clutch when gear shifting is not completed even after a predetermined time elapses at the time of clutch switching according to a gear shifting operation" is described with reference to Fig. 21 to Fig. 26.

Fig. 21 is a time chart showing a flow of clutch control when switching the clutch. In this drawing, in order from the upper side, the engine rotational frequency, the input-output ratio, and the clutch hydraulic pressure are shown. When switching the clutch, if the clutch capacity of the connection side is insufficient, for example, although rev-up of the engine rotational frequency due to acceleration is not caused, the time from the start of gear shifting to the end of the gear shifting may become longer than the planned time with an accompanying clutch slip phenomenon. The present embodiment is configured to forcibly complete the gear shifting operation by increasing the clutch hydraulic pressure on the connection side when the time taken for the gear shifting operation exceeds a predetermined gear shifting completion maximum time.

The example shown in this drawing corresponds to shifting-up from a state during running at the second speed, that is, a state where the second clutch is connected and the first clutch is disconnected to the third speed. When a gear shifting command is issued at the time t40, in response to this, hydraulic pressure supply for switching the first clutch from a disconnected state into a connected state is started, and the clutch hydraulic pressure starts to rise from the disconnection hydraulic pressure $P_A$. At the time t41, the clutch hydraulic pressure of the second clutch in the connected state starts to decrease from the connection hydraulic pressure $P_B$ in response to the gear shifting command.

Then, normally, the engine rotational frequency and the input-output ratio should decrease along the target engine rotational frequency and target ratio shown by the dashed lines while the hydraulic pressure supplied to the second clutch is kept close to a predetermined intermediate hydraulic pressure $P_C$, however, in the example shown in this drawing, the clutch capacity of the first clutch is insufficient, so that clutch connection is delayed and the actual engine rotational frequency and actual ratio change as shown by the solid lines. Further, normally, at the time t42, the clutch connection should be completed by increasing the hydraulic pressure to be supplied to the first clutch, however, a state where even after the time t42, the actual hydraulic pressure does not increase and the clutch connection is not completed is shown. The graph of the engine rotational frequency shows the engine rotational frequency Ne1 when starting gear shifting and the engine rotational frequency Ne2 when the gear shifting to the third speed is completed while the vehicle speed at the time of gear shifting start is kept.

At this time, the clutch control device according to the present embodiment is configured to start corrective control for forcibly increasing the hydraulic pressure of the first clutch according to elapse of a gear shifting completion maximum time Tmax calculated when starting the gear shifting at the time t43, and complete the clutch connection at the subsequent time t44. Thereafter, the actual hydraulic pressure of the first clutch is increased until it reaches the connection hydraulic pressure $P_B$ at the time t45. The correction for increasing the clutch hydraulic pressure is set so that the correction amount increases according to an elapsed time from the time t43 at which the gear shifting completion maximum time Tmax elapses.

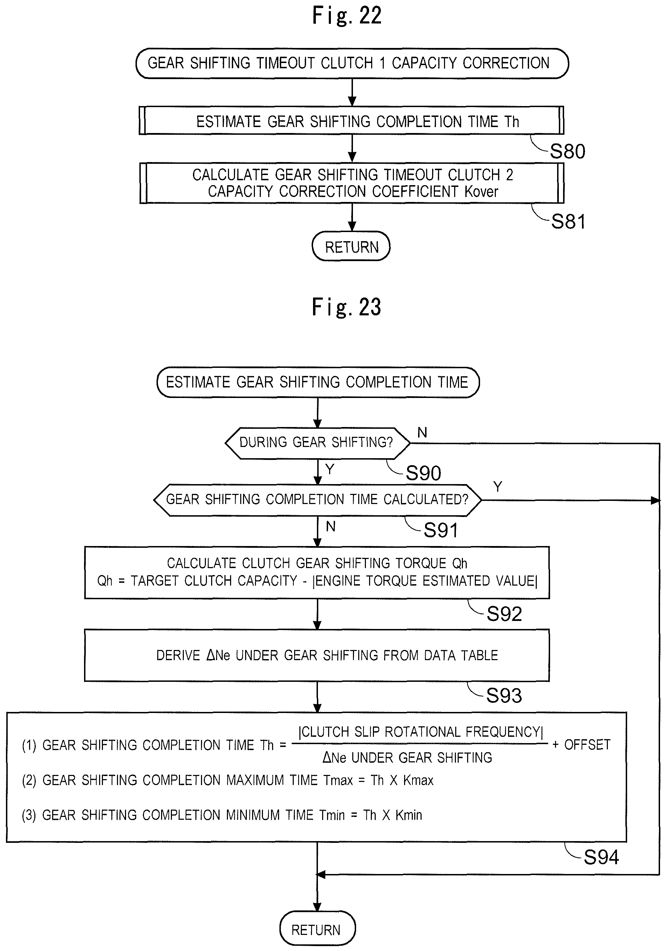

Fig. 22 is a flowchart showing a flow of gear shifting time-out clutch 1 capacity corrective control. The gear shifting time-out clutch 1 capacity correction control mainly consists of two steps. First, in Step S80, by using a plurality of calculation formulas, a gear shifting completion time Th is estimated. Then, in Step S81, a gear shifting time-out clutch 1 capacity correction coefficient Kover is calculated, and the series of controls is ended.

The calculated correction coefficient Kover is used for correcting the clutch control amount by the clutch control correction amount calculation unit 150 (refer to Fig. 7). When a gear shifting time-out phenomenon occurs at the time of gear shifting from an odd-numbered stage gear to an even-numbered stage gear, the same corrective control can be applied to the second clutch.

Fig. 23 is a flowchart showing steps of a gear shifting completion time estimation process. First, in Step S90, it is judged whether gear shifting is being performed. When an affirmative judgment is made in Step S90, the process advances to Step S91, and it is judged whether the gear shifting completion time has already been calculated. When a negative judgment is made in Step S90 or an affirmative judgment is made in Step S91, it is judged that there is no need to estimate the gear shifting completion time, and the control is directly ended.

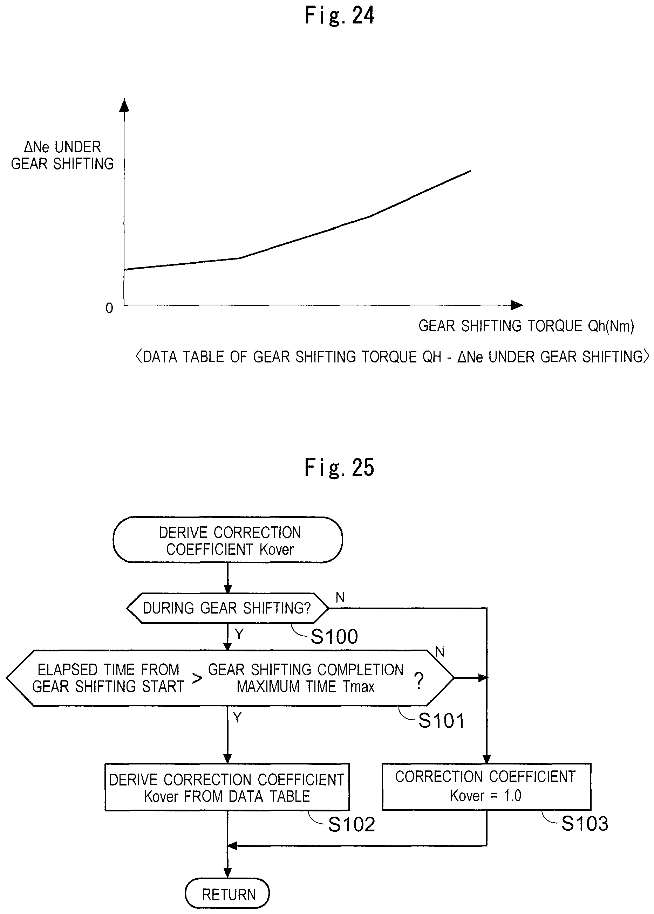

Subsequently, when a negative judgment is made in Step S91, the process advances to Step S92, and by using the calculation formula of Qh = target clutch capacity - |engine torque estimated value|, the clutch gear shifting torque Qh is calculated. Next, in Step S93, by using the data table shown in Fig. 24, ΔNe under gear shifting is derived. Fig. 24 is a data table showing the relationship between the clutch gear shifting torque Qh and ΔNe under gear shifting, and by applying the clutch gear shifting torque Qh calculated in Step S92, ΔNe under predetermined gear shifting can be derived.

In Step S94, values of (1) a gear shifting completion time Th, (2) a gear shifting completion maximum time Tmax, and (3) a gear shifting completion minimum time Tmin are calculated. The gear shifting completion time Th is obtained by the calculation formula of Th = (|clutch slip rotational frequency| / ΔNe under gear shifting) + offset. Specifically, the clutch slip rotational frequency is calculated based on a difference between the engine rotational frequency Ne1 when starting gear shifting and the engine rotational frequency Ne2 when gear shifting to the next stage is performed at the current vehicle speed. The offset is arbitrarily determined to prevent the gear shifting completion time from becoming excessively short.

The gear shifting completion maximum time Tmax and the gear shifting completion minimum time are calculated by multiplying the calculated Th by arbitrarily determined coefficients Kmax and Kmin (Kmax > Kmin), respectively. The present embodiment is configured so that by using the calculated gear shifting completion maximum time Tmax, when the elapsed time from the start of gear shifting exceeds the gear shifting completion maximum time Tmax, corrective control for increasing the hydraulic pressure of the first clutch is performed.

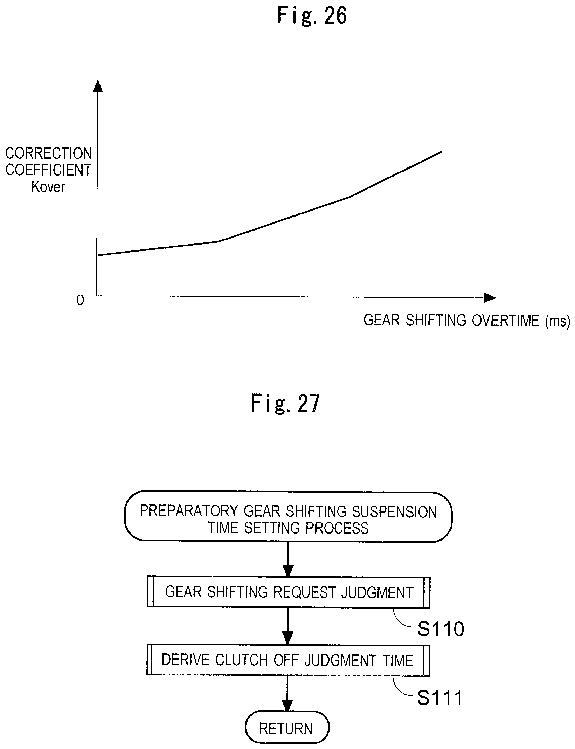

Fig. 25 is a flowchart showing steps for deriving a correction coefficient Kover. First, in Step S100, it is judged whether gear shifting is being performed, and when an affirmative judgment is made, the process advances to Step S101. In Step S101, it is judged whether the elapsed time (gear shifting overtime) from the start of gear shifting has exceeded the gear shifting completion maximum time Tmax. When an affirmative judgment is made in Step S101, the process advances to Step S102, and by using the data table showing the relationship between the gear shifting overtime and the correction coefficient Kover shown in Fig. 26, the correction coefficient Kover is derived. When a negative judgment is made in Step S100 or Step S110, the process advances to Step S103, and the correction coefficient Kover = 1.0 (no correction) is set and the series of controls is ended. The above-described correction coefficient Kover derivation process is performed by the gear shifting timeout clutch capacity correction unit 220.

Next, with reference to Fig. 27 to Fig. 32, the above-described (4) "control for setting an appropriate suspension time from the start of an operation for releasing the precompression until starting driving of the speed-changing gears to prevent knocking accompanying preparatory gear shifting" is described.

Fig. 27 is a flowchart showing steps of a preparatory gear shifting suspension time setting process. The preparatory gear shifting suspension time setting process is performed by the preparatory gear shifting suspension time setting unit 160 (refer to Fig. 7) and mainly consists of two steps. First, in Step S110, a judgment on a gear shifting request is made. Then, in Step Sill, a clutch off judgment time is derived, and the series of controls is ended.

As described above, in the clutch control device according to the present embodiment, for reducing gear knocking in gear shifting during normal running, that is, when switching the clutch, a low hydraulic pressure (precompression) is supplied to the disconnected clutch to narrow the play between the gears, however, if this precompression is left supplied, knocking occurs at the time of gear operation by preparatory gear shifting. Therefore, an operation for releasing the precompression must be performed before the preparatory gear shifting, however, during engine rotation, even if the clutch actuator is switched to the clutch disconnection side, the actual hydraulic pressure does not instantaneously decrease due to an influence of centrifugal force, so that preparatory gear shifting must be suspended until the actual hydraulic pressure decreases. This "preparatory gear shifting suspension time" corresponds to the "clutch off judgment time" derived in Step S111 described above.

The reason why the actual hydraulic pressure does not instantaneously decrease due to an influence of centrifugal force even when the clutch actuator is switched to the clutch disconnection side during engine rotation is as follows. The hydraulic pressure relating to clutch connection is controlled by the pressure balance between the connection-side hydraulic chamber (piston chamber)for supplying a hydraulic pressure and a disconnection-side hydraulic chamber (cancel chamber) for releasing a hydraulic pressure, and centrifugal forces applied to both "chambers" by the rotation of the transmission shaft (main shaft) are canceled out according to the pressure balance between the chambers, however, in a transient state where the hydraulic pressure is supplied or released, an unbalance state temporarily occurs, and even when the hydraulic sensor (SE8, SE9) provided in the hydraulic pressure supply passage detects the hydraulic pressure decrease, a transient state where the actual hydraulic pressure applied to the clutch has not decreased is present. Therefore, the higher the rotational frequency of the transmission shaft, the greater the influence of the centrifugal force when the above-described unbalance occurs, so that the suspension time (hydraulic pressure stabilization time) corresponding to the rotational frequency of the transmission shaft must be set.

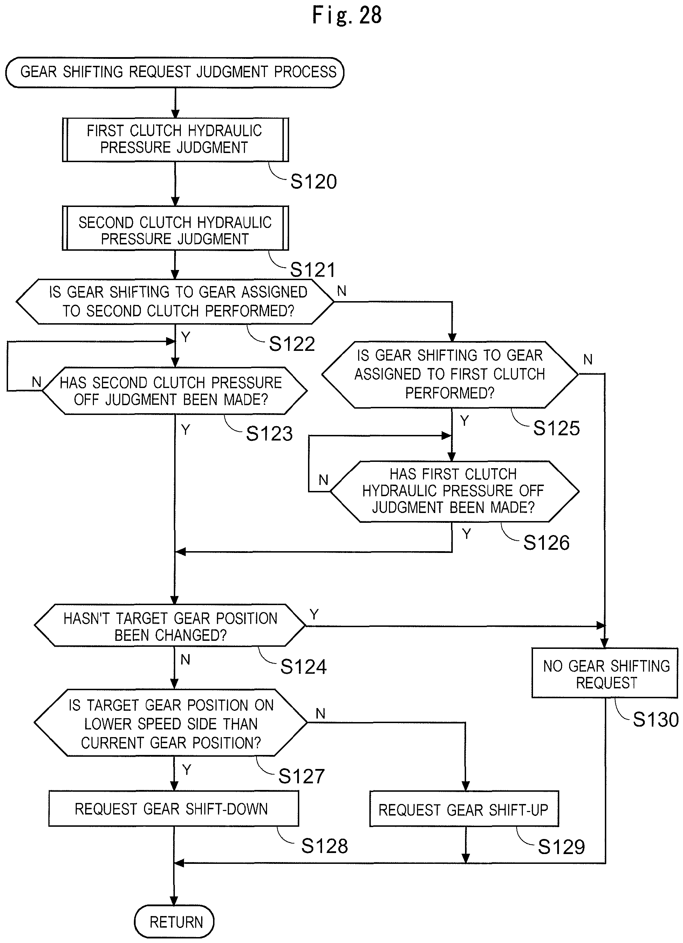

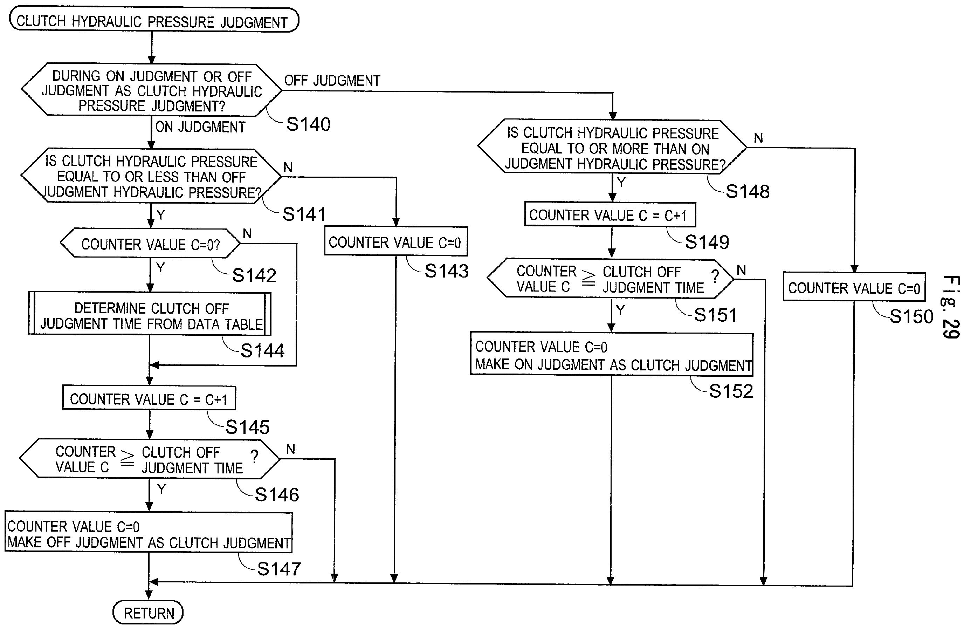

Fig. 28 is a flowchart showing steps of a gear shifting request judgment process. In Step S120, the hydraulic pressure of the first clutch is judged, and in Step S121, the hydraulic pressure of the second clutch is judged. In the clutch hydraulic pressure judgment, an on judgment or an off judgment is made, in the present embodiment, when the clutch hydraulic pressure judgment switches from an on judgment to an off judgment during preparatory gear shifting, a gear shifting operation is performed. Here, the sub-flow shown in Fig. 29 is referred to.

Fig. 29 shows a sub-flow showing steps of clutch hydraulic pressure judgment. First, in Step S140, it is judged whether an on judgment or off judgment is being made as the clutch hydraulic pressure judgment, and when an on judgment is being made, the process advances to Step S141. In Step S141, it is judged whether the clutch hydraulic pressure is equal to or less than an off judgment hydraulic pressure, and when an affirmative judgment is made, the process advances to Step S142. According to the judgment in Step S141, after it is judged that the hydraulic pressure detected by the hydraulic sensor SE8 or SE9 has decreased to a predetermined value or less, the suspension time until the preparatory gear shifting can be calculated.

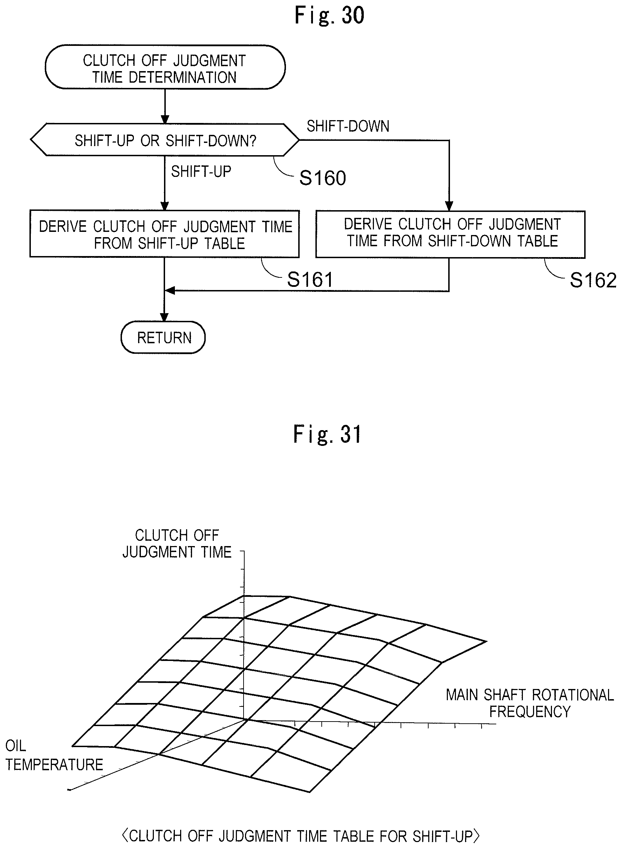

In Step S142, it is judged whether the timer counter value C = 0, and when an affirmative judgment is made, the process advances to Step S144. In Step S144, a clutch off judgment time is determined by using the data table described later. Here, the sub-flow shown in Fig. 30 is referred to.

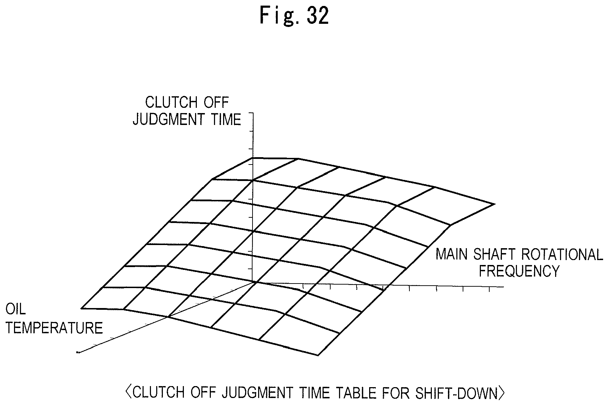

Fig. 30 shows a sub-flow showing steps of a clutch off judgment time determination process. First, in Step S160, it is judged whether the gear shifting operation is a shift-up operation or a shift-down operation, and when it is judged as a shift-up operation, the process advances to Step S161, and a clutch off judgment time is derived by using the shift-up data table shown in Fig. 31. On the other hand, when a shift-down operation is judged in Step S160, the process advances to Step S162, and a clutch off judgment time is derived by using the shifting-down data table shown in Fig. 32.

As shown in Fig. 31 and Fig. 32, the clutch off judgment time tables for shift-up and shift-down are three-dimensional data tables each showing the relationship among the main shaft rotational frequency, the oil temperature, and the clutch off judgment time. The main shaft rotational frequency is the rotational frequency of either the inner shaft 43 or the outer shaft 44 according to the shift stage.

The clutch off judgment time is set so as to become longer as the main shaft rotational frequency becomes higher, and become shorter as the oil temperature becomes higher. In the present invention, the clutch off judgment time to be applied for shift-down is set to be longer than the clutch off judgment time to be applied for shift-up. Accordingly, clutch off judgment time setting is performed based on the fact that the engine rotational frequency decreases when shifting-up, and the engine rotational frequency increases when shifting-down and increases the influence of the centrifugal force.

Returning to the sub-flow shown in Fig. 29, when the clutch off judgment time is determined in Step S144, in Step S145, the counter value C = C+1 is set and the process advances to Step S146. In Step S146, it is judged whether the counter value C has reached the clutch off judgment time or more. When an affirmative judgment is made in Step S146, that is, when the timer counter value C has reached the clutch off judgment time derived from the data table, the process advances to Step S147, the counter value C = 0 is set, and an off judgment is made as the clutch judgment, and the series of controls is ended.

On the other hand, when it is judged that an off judgment is being made as the clutch hydraulic pressure judgment in Step S140, the process advances to Step S148, and it is judged whether the clutch hydraulic pressure is the on judgment hydraulic pressure or more. When an affirmative judgment is made in Step S148, in the subsequent Step S149, the counter value C = C+1 is set and the process advances to Step S151. In Step S151, it is judged whether the counter value C has reached the arbitrarily determined clutch on judgment time or more, and when an affirmative judgment is made, the process advances to Step S152. In Step S152, the counter value C = 0 is set and an on judgment is made as the clutch judgment, and the series of controls is ended.

When a negative judgment is made in Step S146 or S151, the series of controls is directly ended. When a negative judgment is made in Step S141 or S148, the counter value = 0 is set in Step S143 or S150, and then the series of controls is ended.

The sub-flow shown in Fig. 29 corresponds to the hydraulic pressure judgment of the first clutch, and the hydraulic pressure judgment of the second clutch is also performed in the same manner. The clutch off judgment time tables are prepared for the first clutch and the second clutch, respectively.

Returning to the main flow shown in Fig. 28, when hydraulic pressure judgments of the clutches are ended in Steps S120 and S121, the process advances to Step S122, and it is judged whether gear shifting to the gear assigned to the second clutch is performed. When an affirmative judgment is made in Step S122, the process advances to Step S123, and it is judged whether the second clutch hydraulic pressure off judgment has been made, and when an affirmative judgment is made, the process advances to Step S124. Here, the case where affirmative judgments are made in Steps S122 and S123 corresponds to the case where precompression applied to the second clutch is released when performing preparatory gear shifting to an even-numbered stage gear (for example, fourth speed) during running with an odd-numbered stage gear (for example, third speed). When a negative judgment is made in Step S123, the process returns to the judgment of Step S123.

On the other hand, when a negative judgment is made in Step S122, the process advances to Step S125, and it is judged whether gear shifting to the gear assigned to the first clutch is performed. When an affirmative judgment is made in Step S125, the process advances to Step S126, and it is judged whether the first clutch hydraulic pressure off judgment has been made, and when an affirmative judgment is made, the process advances to Step S124. Here, the case where affirmative judgments are made in Steps S125 and S126 corresponds to a case where precompression applied to the first clutch is released when performing preparatory gear shifting to an odd-numbered stage gear during running with an even-numbered stage gear. When a negative judgment is made in Step S126, the process returns to the judgment of Step S126.

In Step S124, it is judged whether the target gear position has not been changed, and when a negative judgment is made, that is, when the target gear position changes, the process advances to Step S127. When a negative judgment is made in Step S124 or S125, the process advances to Step S130, and it is judged that there is no gear shifting request, and then the series of controls is ended.

Then, in Step S127, it is judged whether the target gear position is on the lower speed side than the current gear position, and when an affirmative judgment is made, a gear shifting request for shift-down is issued in Step S128, that is, preparatory gear shifting is performed, and the series of controls is ended. On the other hand, when a negative judgment is made in Step S127, a gear shifting request for shift-up is issued in Step S129, and the series of controls is ended.

As described above, according to the control (4) described above, based on the engine rotational frequency and the clutch oil temperature, a proper suspension time (clutch off judgment time) from the start of the operation for releasing precompression until driving of the speed-changing gears is started (clutch off judgment time) is set, and accordingly, knocking accompanying preparatory gear shifting can be prevented.

In the twin clutch transmission 23 according to the present invention, the clutch to be disconnected after gear shifting is completed is opened, and then by releasing the engagement of the dog clutch of the speed-changing gears of the disconnected clutch, control (gear shifting to N) for creating a neutral state where the dog clutch engages with none of the gears is performed. The above-described suspension time can be applied to this gear shifting to N, and used for various gear shifting operations in a transient state that is influenced by the centrifugal force of the engine.

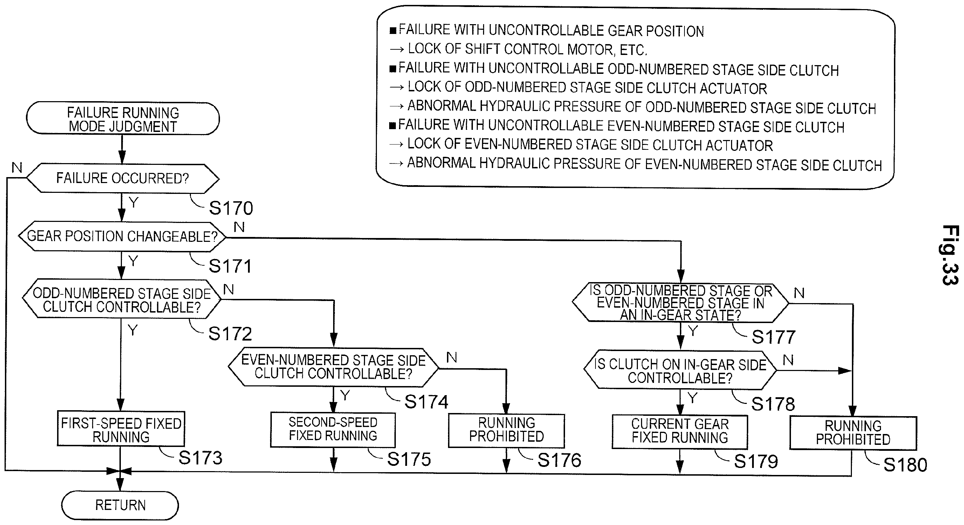

Fig. 33 is a flowchart showing steps of a running mode judgment process when some failure occurs in the transmission. If the vehicle is set to become unable to run anytime when some failure occurs in the transmission, the vehicle cannot move from the location where the failure occurs, so that the convenience of the vehicle is lowered. Therefore, the clutch control device according to the present invention is configured to limit the functions according to the type of a failure by detecting the type of the failure in such a manner that first-speed fixed running is enabled.

First, in Step S170, it is judged whether a failure has occurred in the transmission, and when an affirmative judgment is made, the process advances to Step S171. In Step S171, it is judged whether the gear position is changeable. When an affirmative judgment is made in Step S171, the process advances to Step S172, and it is judged whether the odd-numbered stage side clutch is controllable, and when an affirmative judgment is made, in Step S173, the running mode is set to the first-speed fixed running mode. When a negative judgment is made in Step S170, it is judged that there is no need to judge a failure running mode, and the control is directly ended.

On the other hand, when a negative judgment is made in Step S172, that is, when the odd-numbered stage side clutch is judged as uncontrollable due to lock of the odd-numbered stage side clutch actuator or an abnormal hydraulic pressure of the odd-numbered stage side clutch, etc., the process advances to Step S174. In Step S174, it is judged whether the even-numbered stage side clutch is controllable, and when an affirmative judgment is made, the process advances to Step S175 and the second-speed fixed running mode is set. In this second-speed fixed running mode, by half-clutch controlling the even-numbered stage side clutch (the second clutch in the present embodiment), smooth second-speed running start can be performed.

On the other hand, when a negative judgment is made in Step S174, that is, as well as the odd-numbered stage side clutch, the even-numbered stage side clutch is also judged as uncontrollable due to lock of the even-numbered stage side clutch actuator or an abnormal hydraulic pressure of the odd-numbered stage side clutch, etc., the process advances to Step S176, the running mode is set to a running prohibition mode, and the series of controls is ended.

When a negative judgment is made in Step S171, that is, when it is judged that the gear position is unchangeable due to lock of the shift control motor, etc., the process advances to Step S177, and it is judged whether an odd-numbered stage or an even-numbered stage is in an in-gear state. When an affirmative judgment is made in Step S177, the process advances to Step S178, and it is judged whether the clutch of the in-gear side is controllable. When an affirmative judgment is made in Step S178, the process advances to Step S179, and the running mode is set to the current gear-fixed running mode.

The case where affirmative judgments are made in Steps S177 and S178 corresponds to a case where a failure occurs that makes gear position unchangeable in a state where the third-speed gear is in an in-gear state, and the third-speed fixed running mode is set. In this case, setting may be made so that running is prohibited when a high-speed gear (for example, gear for the fourth or fifth speed) that increases the load on the clutch when the vehicle starts running is in an in-gear state. When a negative judgment is made in Step S177 or S178, the process advances to Step S180, and then the running mode is set to the running prohibition mode and the series of controls is ended.

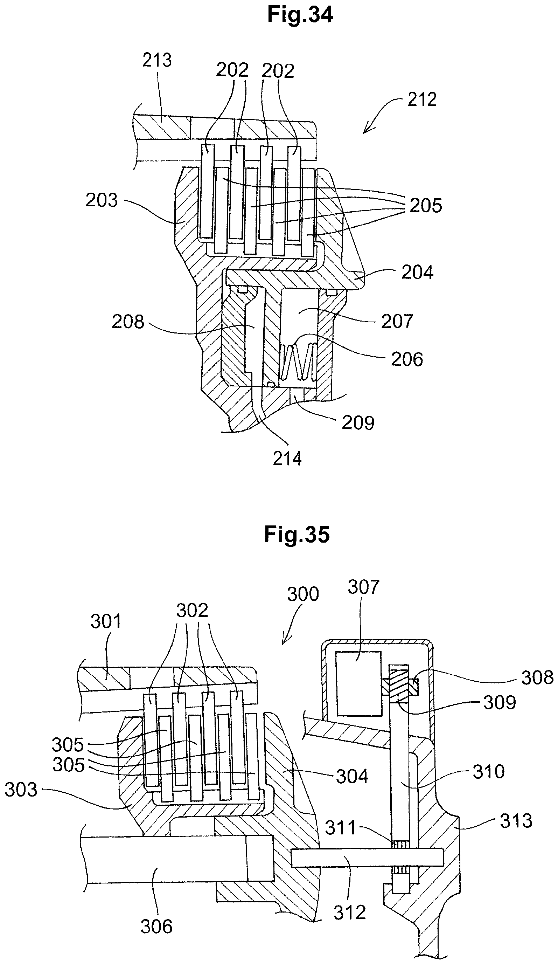

The clutch control device according to the present invention can be applied to clutches having various structures. Hereinafter, modifications of the clutch are described with reference to Fig. 34 to Fig. 37.

Fig. 34 is a sectional view showing a configuration of a normally-closed hydraulic clutch 212. The entire configuration of the transmission is the same as that of the twin clutch transmission 23 shown in Fig. 5. The hydraulic clutch 212 is a normally-closed clutch that is connected when hydraulic pressure control is not performed, and switched into a clutch disconnected state by supplying a hydraulic pressure against a biasing force of the return spring 206 to the connection-side hydraulic chamber 208 via the hydraulic pressure supply oil passage 214.

The hydraulic clutch 212 includes the return spring 206 that biases the pressure plate 204 to the clutch connection side, a disconnection-side hydraulic chamber 208 that applies a pressing force to the pressure plate 204 toward the clutch disconnection side, and a connection-side hydraulic chamber 206 that applies a pressing force to the pressure plate 204 toward the clutch connection side to assist a returning movement of the pressure plate. The supply oil passage 209 communicates with the connection side hydraulic chamber 207.

On the inner periphery of the clutch outer 201, a plurality of clutch plates 202 are supported integrally rotatably, and on the flange portion 203, a plurality of clutch discs 205 are supported integrally rotatably. By displacing the pressure plate 204 in the axial direction by a hydraulic pressure supplied from the outside, frictional engagements between the clutch plates 202 and the clutch discs 205 are released and the clutch is switched from a connected state into a disconnected state.

Fig. 35 is a sectional view showing a configuration of an electric clutch 300 in which a pressure plate 304 is directly driven by a driving force of an electric motor 307. On the inner periphery of the clutch outer 301, a plurality of clutch plates 302 are supported integrally rotatably, and on the flange portion 303, a plurality of clutch discs 305 are supported integrally rotatably. By displacing the pressure plate 304 in the axial direction by a driving force of the electric motor 307, frictional engagements between the clutch plates 302 and the clutch discs 205 are changed, and accordingly, clutch connection/disconnection control is performed.

A helical gear 308 formed on the rotary shaft of the electric motor 307 meshes with a helical gear 309 formed on a transmission shaft 310. On the illustrated lower end portion of the rotary shaft 310 axially supported on the clutch cover 313, a pinion 311 is formed. The pinion 311 meshes with a rack portion (not illustrated) formed on a push rod 312 disposed along the central axis of the main shaft 306. Accordingly, the rotational driving force of the electric motor 307 is converted into a reciprocating movement of the push rod 312, and clutch connection/disconnection control is enabled.

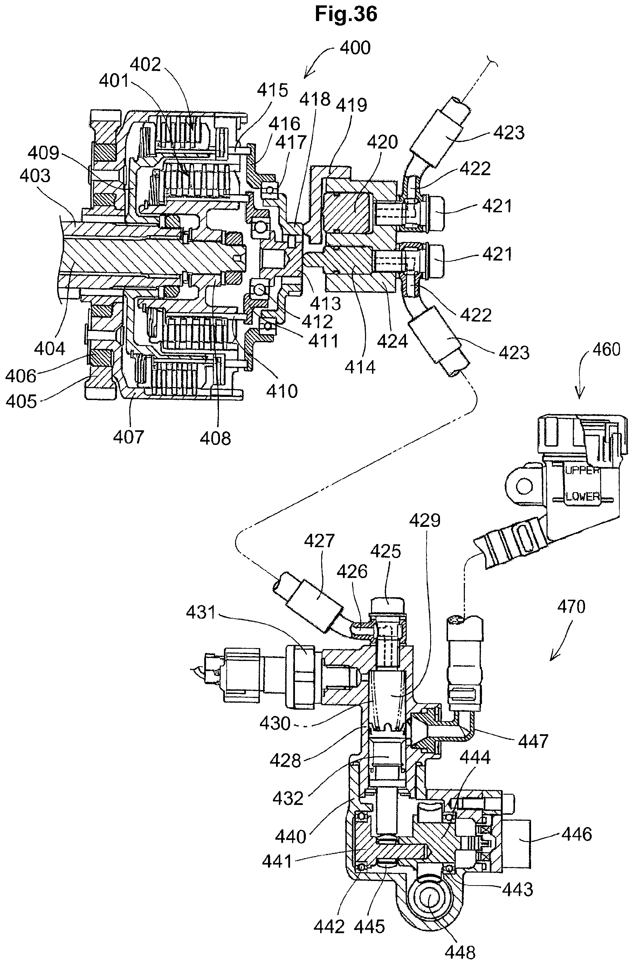

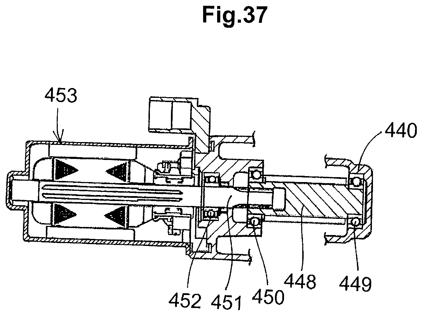

Fig. 36 is an entire configuration diagram of an electric-hydraulic clutch 400 that is operated by a hydraulic pressure generated by a rotational driving force of an electric motor 453. Fig. 37 is a sectional view of the electric motor 453. The electric-hydraulic clutch 400 is a normally-open twin clutch that switches a first clutch 401 and a second clutch 402 from a disconnected state into a connected state by sliding hydraulic pistons 414 and 420 in the axial direction.

A primary driven gear 405 to which a rotational driving force is transmitted from a crankshaft (not illustrated) is fixed to the clutch outer 407 via a plurality of dampers 406. When the first clutch 401 goes into a connected state, a rotational driving force of the clutch outer 407 is transmitted to the inner shaft 404 via a first central cylinder portion 408. On the other hand, when the second clutch 402 goes into a connected state, the rotational driving force of the clutch outer 407 is transmitted to the outer shaft 403 via the second central cylinder portion 409.

In a hydraulic cylinder 424 fixed to the clutch cover, etc., the first hydraulic piston 414 and the second hydraulic piston 420 are housed. To the hydraulic cylinder 424, banjos 423 that are pipe joint members for supplying hydraulic pressures to hydraulic supply chambers are fixed by banjo bolts 421. When the ducts 422 are supplied with hydraulic pressures by a rotational driving force of the electric motor 453 described later, the hydraulic pistons 414 and 420 slide leftward in the drawing.

When a push block 413 axially supported on a bearing 412 is pushed by the first hydraulic piston 414, a push plate 411 axially supported on the other side of the bearing 412 and a cylindrical push ring 410 that engages with the push plate 411 are pushed. Accordingly, the pluralities of clutch plates and clutch discs are friction-engaged with each other, and the first clutch 401 is switched into a connected state. On the other hand, when a push block 418 axially supported on a bearing 417 is pushed by the second hydraulic piston 420 via an auxiliary plate 419, a push plate 416 axially supported on the other side of the bearing 417 and a cylindrical push ring 415 that engages with the push plate 416 are pushed. The pluralities of clutch plates and clutch discs are friction-engaged with each other, and the second clutch 402 is switched into a connected state.

A hydraulic pressure to be supplied to the hydraulic cylinder 424 is generated by a hydraulic pressure generation device 470. An electric motor 453 is attached to a mechanical chamber case 440 of the hydraulic pressure generation device 470. A rotary shaft 451 of the electric motor 453 is spline-fitted to a worm 448 that meshes with a worm wheel 444. The rotary shaft 451 and the worm 448 are axially supported on the mechanical chamber case 440 by bearings 452, 449, and 450.

An eccentric shaft of an eccentric cam 441 axially supported on the mechanical chamber case 440 by a bearing 442 engages with the worm wheel 444 axially supported on the mechanical chamber case 440 by a bearing 443. To the eccentric shaft of the eccentric cam 441, a pressing member 445 that comes into contact with an end portion of a hydraulic piston 432 housed in a hydraulic chamber case 428 is attached. With the above-described configuration, when the electric motor 453 is driven to rotate, the eccentric shaft pushes the hydraulic piston 432 up in the drawing according to rotation of the worm wheel 444 to generate a hydraulic pressure in the hydraulic chamber 429.

To the hydraulic chamber case 428, a banjo 427 as a pipe joint member is fixed by a banjo bolt 425. The hydraulic pressure generated in the hydraulic chamber 429 is transmitted to a hydraulic cylinder 424 via a duct 426. The banjo 425 on the hydraulic chamber case 428 side and the banjo 423 on the hydraulic cylinder side are joined to each other by a pressure-proof rubber hose, etc.

To the hydraulic chamber case 428, a replenishment port 447 joined to a reservoir tank 460 for replenishing a fluid to fill the hydraulic chamber 429 is attached. To the mechanical chamber case 440, a rotation angle sensor 446 that detects the rotation angle of the worm wheel 444 is attached, and to the hydraulic chamber case 428, a hydraulic sensor 431 that detects a hydraulic pressure in the hydraulic chamber 429 is attached. In this drawing, only the hydraulic supply device 470 that actuates the first clutch 401 is illustrated, however, a hydraulic pressure is supplied to the second clutch 402 from a separate and independent hydraulic supply device, so that the first clutch 401 and the second clutch can be controlled individually.

The configuration of the twin clutch transmission, the configuration of the ECU as a clutch control device, and the form of the data tables, etc., are not limited to those of the above-described embodiment, and can be variously modified. For example, each clutch may be a single clutch, and its engagement force and actuation force may be obtained from a spring, motor, solenoid, etc., and may be a dry clutch or a single-plate clutch. Other than a single-cylinder engine, the engine may be a multicylinder engine such as a V-type engine or horizontal opposed engine, or a vertical engine having a crankshaft along the vehicle front-rear direction. Further, the transmission may switch the shift stage by sliding a slide member separate from the gears, and the number of shift stages may be less than six or not less than seven. The clutch control device according to the present invention is applicable to various vehicles such as motorcycles and motor three wheelers.

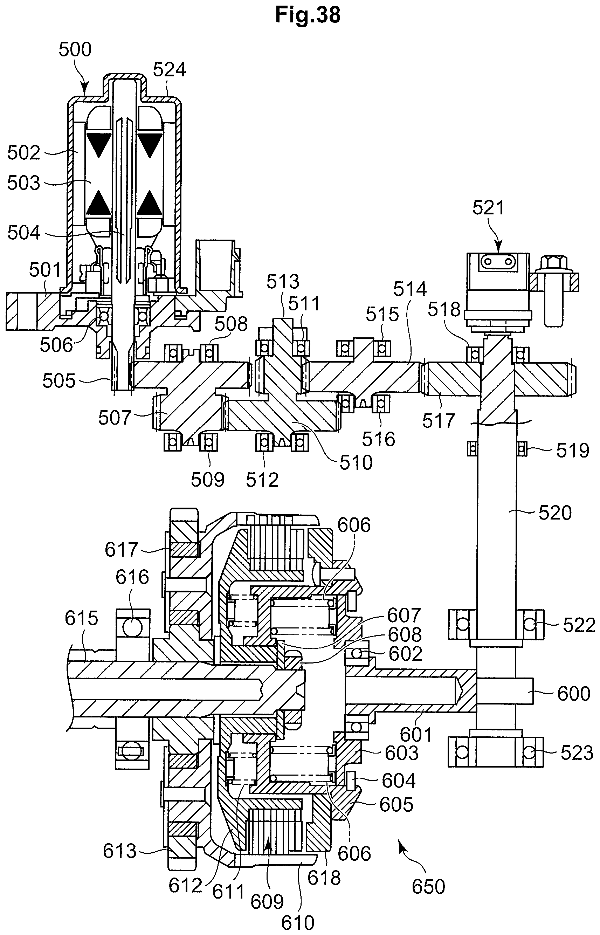

Hereinafter, with reference to Fig. 38 to Fig. 47, a method for judging a clutch connection start point (hereinafter, may be referred to as a touch point TP) based on measured values of a rotation angle and a current value, etc., of an electric motor in a clutch that is driven by the electric motor, is described.

Fig. 38 is an entire configuration diagram of a normally-open electric clutch 650 that is driven by an electric motor 500. The electric clutch 650 is a double-spring type including a push spring 606 and a return spring 611 having spring rates different from each other as biasing members that bias the clutch in an opening (disconnecting) direction.

The electric clutch 650 is driven to be connected/disconnected by reciprocating a push rod 601 that comes into contact with a cam 600 by rotationally driving a cam shaft 520 provided with the cam 600 to an arbitrary angle by a rotational driving force of the electric motor 500.

The electric motor 500 includes a rotor 503 formed integrally with an output shaft 504 and a stator 502 fixed to the inner periphery of a motor housing 524. A bearing 506 that axially supports the output shaft 504 is inserted and fitted in a base portion 501 that closes the opening of the motor housing 524.

A first intermediate gear 507 axially supported by bearings 508 and 509 and having two gear wheels formed integrally meshes with a gear 505 formed on an end portion of the output shaft 504. A rotational driving force transmitted to the first intermediate gear 57 is transmitted to an input gear 517 spline-fitted to a cam shaft 520 via a second intermediate gear 510 axially supported by bearings 511 and 512 and a third intermediate gear 514 axially supported by bearings 515 and 516. On the second intermediate gear 510, a tool attaching shaft 513 for attaching an emergency tool (not illustrated) that rotates the second intermediate gear 510 by a manual operation is provided.

At the illustrated upper end portion of the cam shaft 520, an angle sensor 521 consisting of a potentiometer that detects the rotation angle of the cam shaft 520 is disposed. The cam shaft 520 is axially supported rotatably by a bearing 518 disposed in proximity to the input gear 517 by bearings 522 and 523 disposed on both sides of the cam 600. In the present embodiment, an oil seal 519 is disposed at the substantially intermediate portion of the cam shaft 520, and for example, a layout in which the mechanism including the electric clutch 650 and the cam 600 is housed in a crankcase of the engine and the mechanism from the electric motor 500 to the intermediate portion of the cam shaft 520 is disposed outside the crankcase, etc., is possible.

The electric clutch 650 is attached to one end portion of the main shaft 615 as an input shaft of the transmission (not illustrated). A primary driven gear 613 which is axially supported rotatably on the main shaft 615 and to which a rotational driving force is transmitted from the crankshaft (not illustrated) is coupled to the clutch outer 610 via a plurality of ring-shaped dampers 617. On the illustrated left side of the primary driven gear 613, a bearing 616 of the main shaft 615 is disposed. When the electric clutch 650 goes into a connected state, a rotational driving force of the clutch outer 610 is transmitted to the main shaft 615 via the clutch inner 612.

In detail, when a push rod 601 is pushed leftward in the drawing by a rotational driving force of the electric motor 500, a first push plate 603 is pushed via a bearing 602. Between the first push plate 603 and a second push plate 605, the push spring 606 consisting of a plurality of coil springs is disposed, and between the second push plate 605 and the clutch inner 612, the return spring 611 consisting of a plurality of coil springs is disposed. The second push plate 605 slides leftward in the drawing against biasing forces of these springs 606 and 611, and accordingly, a clutch connecting operation is performed.

The second push plate 605 is engaged with the clutch inner 612 so as to apply a predetermined preload to the return spring 611, and fixed to the main shaft 615 by a nut 608 via a washer 607 that restricts a range of rightward sliding in the drawing. The range of rightward sliding in the drawing of first push plate 603 is restricted by the circlip 604. When the second push plate 605 slides leftward in the drawing, the driving clutch discs 609 are pushed leftward in the drawing by a ring-shaped pressing member 618 fixed to the second push plate 605, and accordingly, the electric clutch 605 is switched from a disconnected state into a connected state.

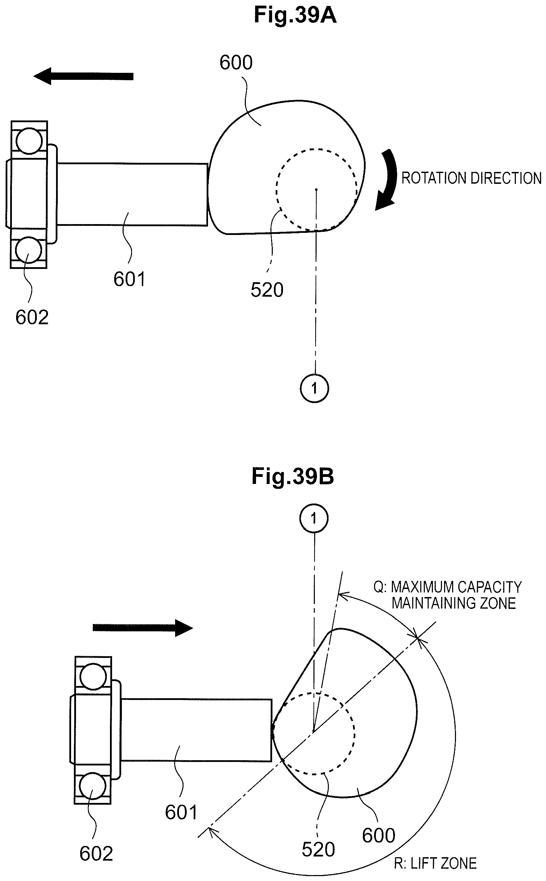

Fig. 39A and Fig. 39B are structure explanatory views of the cam mechanism. The same reference symbols as described above indicate the same or equivalent portions. The cam 600 attached to the cam shaft 520 has an eccentric structure for converting rotational movement of the cam shaft 520 into reciprocating movement of the push rod 601. In the present embodiment, the cam shaft 520 is configured to rotate clockwise only, and when moving from a position in the maximum capacity maintaining zone Q shown in Fig. A, that is, the maximum lifted position for pushing the driving clutch discs 609 with a maximum load to a position in the lift zone R in which the lift amount gradually increases, as shown in Fig. B, by rotating the cam shaft 520 clockwise, the cam always passes through a region in which the clutch is disconnected.

The control unit of the electric motor 500 according to the present embodiment is configured to detect a connection start point of the electric clutch 650 based on a sensor output of the angle sensor 521 and a drive current of the electric motor 500, etc. Hereinafter, the clutch connection start point is referred to as "touch point TP."

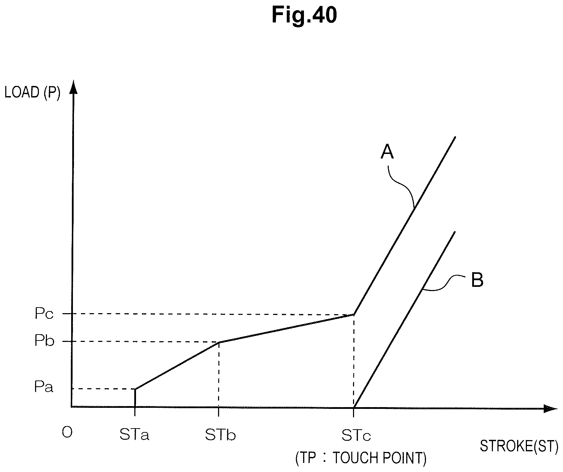

Fig. 40 is a graph showing the relationship between a load P necessary for the clutch pressing operation and the clutch stroke ST. The clutch stroke ST is a slide amount of the push rod 601 (refer to Fig. 38), and is a value linearly corresponding to the rotation angle of the cam 600. Specifically, the clutch stroke ST can be detected based on an output of the angle sensor 521. In this graph, the load Pa is a preload of the push spring 606, the load Pb is a preload of the return spring 611, and the load $P_C$ is a touch point load for starting clutch connection, and the loads are set to satisfy the relationship of preload Pa of push spring < preload Pb of return spring < touch point load $P_C$.

Specifically, in the electric clutch 650 according to the present embodiment, when the cam shaft 520 is rotated from the start point of the lift zone Q of the cam 600, first, at the timing of reach to the stroke STa, the play between the cam 600 and the push rod 601, etc., is completely narrowed, and for making a further stroke over this stroke STa, a load over the preload of the push spring 606 is required.

Next, when making a further stroke against the biasing force of the push spring 606, at the timing of reach to the stroke STb, for making a further stroke over this stroke STb, a load over the preload of the return spring 611 is required.

Then, when making a further stroke against the biasing forces of the push spring 606 and the return spring 611, at the timing of reach to the stroke STc, the pressing plate 618 fixed to the second push plate 605 comes into contact with the driving clutch discs 609 and the clutch starts to be connected (the clutch capacity B starts to be generated).

Then, when the cam 600 is further turned from the touch point TP, according to the turning amount, the clutch capacity B increases toward the maximum capacity, and the illustrated clutch capacity B is similar to the portion after the touch point TP of the graph shown by the solid line A.

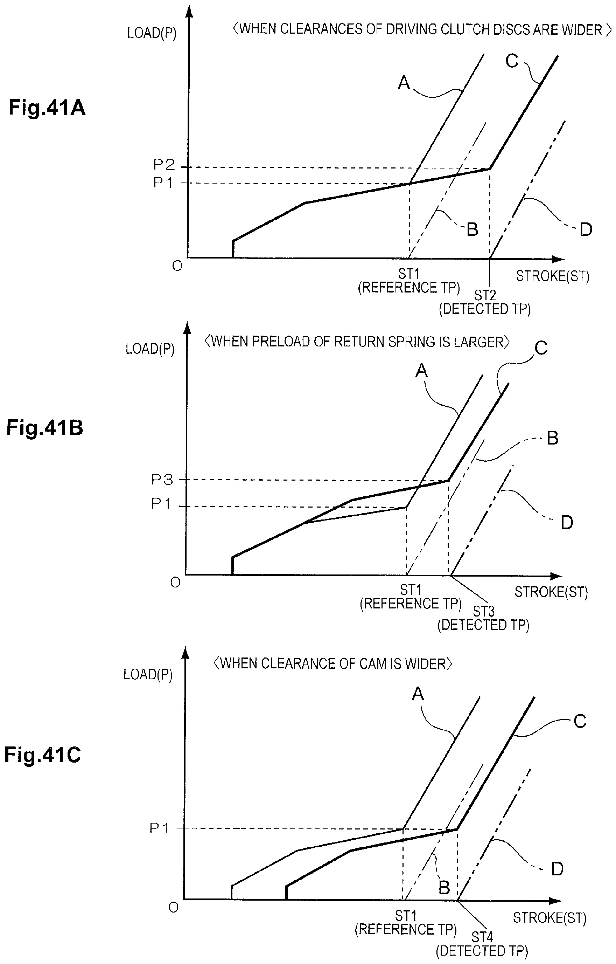

Fig. 41A, Fig. 41B and Fig. 41C are graphs showing changes in relationship between the load and the clutch stroke according to the state of the electric clutch 650. In each of the graphs, a detected graph C and a detected clutch capacity D deviating from the reference graph A and the reference clutch capacity B for various reasons are shown.

As shown in Fig. 41A, when the clearances of the driving clutch discs 609 are wider than the reference (standard) state, even when the stroke ST1 and the load Pl are reached, the driving clutch discs do not come into contact with each other, and when the larger stroke ST2 and load P2 are reached, the touch point TP is reached.

As shown in Fig. 41B, when the preload of the return spring 611 is larger than the reference, even when the stroke ST1 and load PI are reached, the driving clutch discs do not come into contact with each other, and when the larger stroke ST3 and load P3 are reached, the touch point TP (detected TP) is reached.

Further, as shown in Fig. 41C, in the case where the clearance of the cam is wider than the reference, even when the stroke ST1 and load PI are reached, the driving clutch discs do not come into contact with each other, and when the larger stroke ST4 is reached, the touch point TP (detected TP) is reached.

From the description given above, it is understood that, even if the characteristics of the electric clutch 650 variously change, the point at which the gradient of the graph showing the relationship between the load P necessary for the clutch pressing operation and the clutch stroke ST increases sharply is the touch point TP at which the clutch starts to be connected. This shows that the touch point TP can be accurately detected by detecting a point at which the gradient of the same graph changes sharply.

In detail, there are three patterns including (1) a method based on a stroke change when the electric motor is driven with a fixed current, (2) a method based on a motor driving duty change when the electric motor is driven at a fixed stroke change rate, and (3) a method based on a change of a point at which the clutch cannot make a stroke any more when the electric motor is driven with various test duties. A touch point TP judgment process described below can be repeatedly performed at timings that have no influence on normal running such as the timing at which the main power supply of the vehicle is switched from off to on and the timing at which the gears are in a neutral state even after the engine starts.

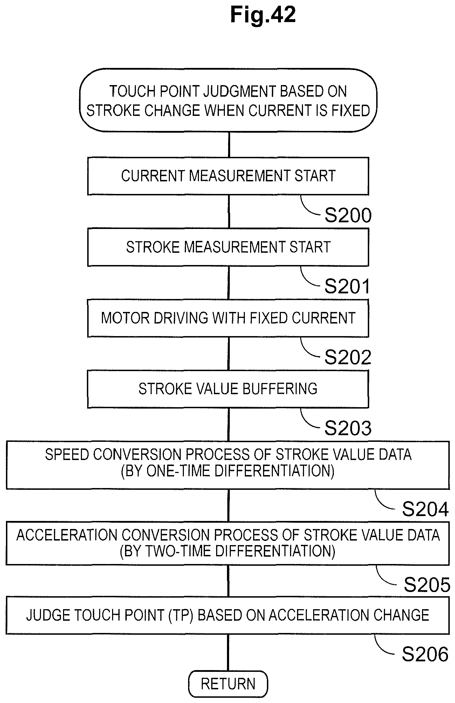

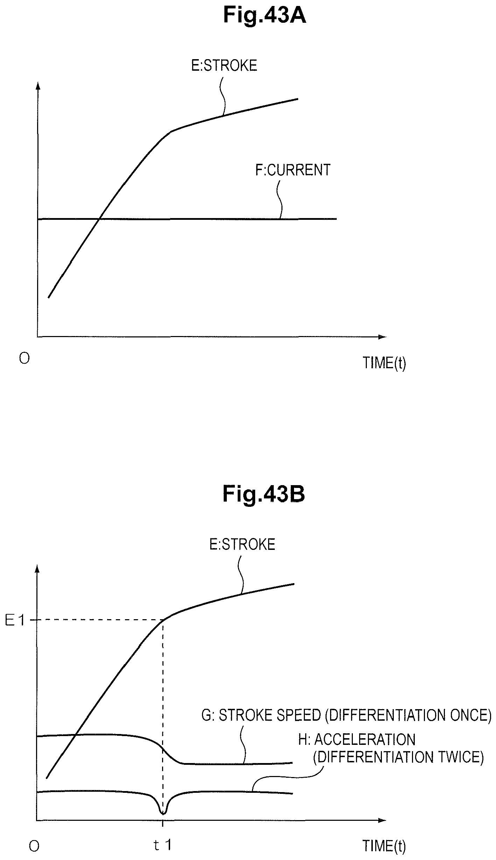

Fig. 42 is a flowchart showing steps of touch point judgment based on a stroke change when the current is fixed, corresponding to the pattern (1). Fig. 43A and Fig. 43B are graphs showing the same touch point judgment method. The graph Fig. 43A shows the relationship between the stroke E and the current F, and the graph Fig. 43B shows the relationship among the stroke (stroke value) E, the stroke speed G obtained by differentiating the stroke E once, and the stroke acceleration H obtained by differentiating the stroke E twice. This method of the pattern (1) utilizes the fact that when the electric motor 500 is driven with a fixed current, the pressing load of the driving clutch discs 609 increases when the touch point TP is reached and the rotation speed of the electric motor 500 greatly decreases.

In Step S200 of the flowchart, measurement of the current to be supplied to the electric motor 500 is started. This current value can be obtained by arithmetic operation, etc., by the control unit of the electric motor 500. Subsequently, in Step S201, stroke measurement by the angle sensor 521 is started, and in Step S202, driving of the electric motor 500 with a fixed current is performed.

In Step S203, a stroke value buffering process is performed. In the subsequent Step S204, a speed conversion process is applied to the stroke value data. This process is performed by differentiating the buffered stroke value once. Next, in Step S205, an acceleration conversion process is applied to the stroke value data. This process is performed by differentiating the buffered stroke value twice. Then, in Step S206, judgment on the touch point TP is performed based on a change in acceleration. In detail, a point at which the acceleration becomes smaller than a predetermined threshold is judged as the touch point TP. In the example shown in Fig. 43B, the touch point TP is the point at which the stroke E1 is recorded at the time t1.

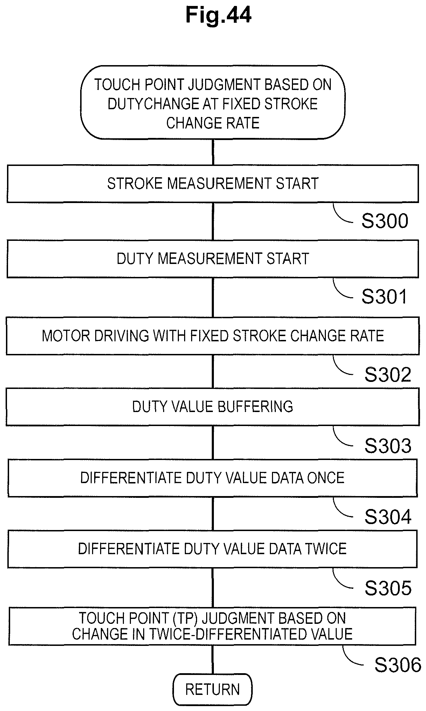

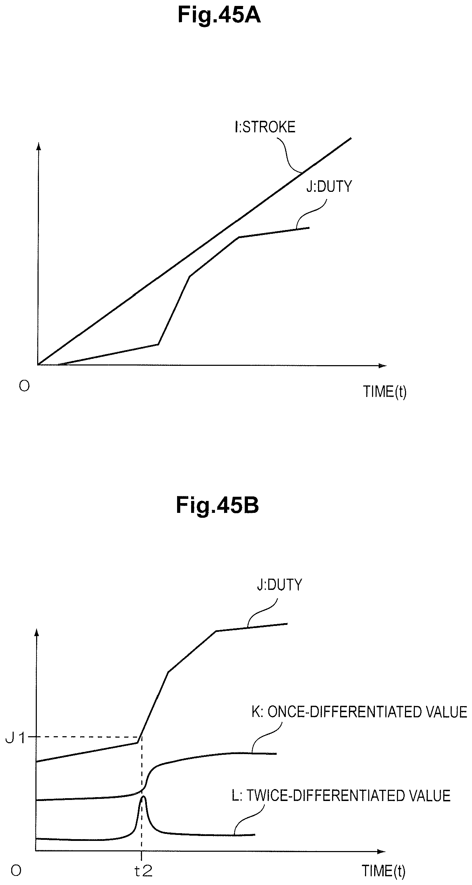

Fig. 44 is a flowchart showing steps of touch point judgment based on a duty change when the stroke change rate is fixed, corresponding to the pattern (2). Fig. 45A and Fig. 45B are graphs showing the same touch point judgment method. The graph Fig. 45A shows the relationship between the stroke I and the duty J, and the graph Fig. 45B shows the relationship among the duty J, the once-differentiated value K of the duty J, and the twice-differentiated value L of the duty J. This method of the pattern (2) utilizes the fact that the driving duty of the electric motor 500 greatly increases when the touch point TP is reached in the case where the electric motor 500 is driven so that the stroke change rate becomes fixed, that is, the stroke speed becomes fixed.

In Step S300 of the flowchart, stroke measurement by the angle sensor 521 is started. In Step S301, measurement of the driving duty is started by the control unit of the electric motor 500. In Step S302, by feed-back control based on an output value of the angle sensor 521, driving of the electric motor 500 with a fixed stroke change rate is started.

Next, in Step S303, a buffering process is applied to the measured duty value. In Step S304, a process of differentiating the duty value data once is performed, and in Step S305, a process of differentiating the duty value data twice is performed. Then, in Step S306, the touch point is judged based on a change in twice-differentiated value of the duty value data. In detail, a point at which the twice-differentiated value L exceeds a predetermined threshold is judged as the touch point TP.

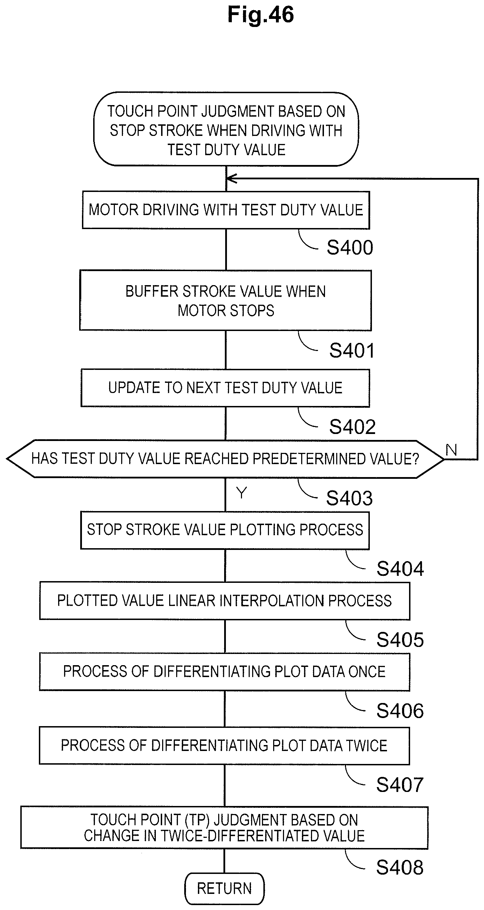

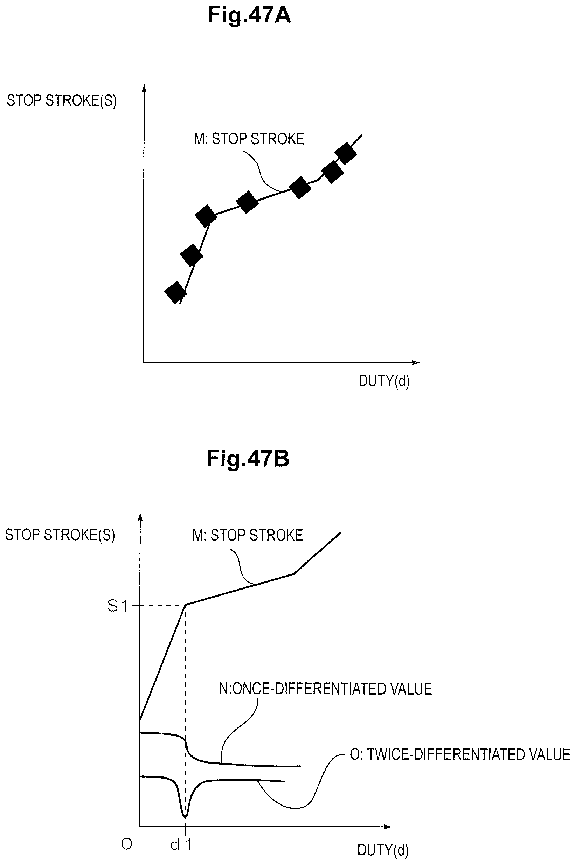

Fig. 46 is a flowchart showing steps of touch point judgment based on a stop stroke when driving with test duty value, corresponding to the pattern (3). Fig. 47A and Fig. 47B is graphs showing the same touch point judgment method. The graph Fig. 47A shows the relationship between the test duty and the plotted stop stroke M, and the graph Fig. 47B shows the relationship among the linearly interpolated stop stroke M, the once-differentiated value N of the stop stroke M, and the twice-differentiated value O of the stop stroke M. This method of the pattern (3) utilizes the fact that when the test duty value is changed in a phased manner, the phased increase width of the stop stroke greatly decreases when the touch point TP is reached. In the example shown in Fig. 45B, the touch point is the point at which the duty J1 is recorded at the time t2. The test duty value is a value in a predetermined range to balance with the pressing force of the double spring.

In Step S400 of the flowchart, the electric motor 500 is driven with the predetermined test duty value. In Step S401, the stroke value when the electric motor 500 stops is buffered. In Step S402, update (increasing update) to the next test duty value is performed. In Step S403, it is judged whether the test duty value has reached a predetermined value as an upper limit of the test range, and when an affirmative judgment is made, supply of the test duty value is ended and the process advances to Step S404, and when a negative judgment is made, the process returns to Step S400.

In Step S404, a stop stroke value plotting process is performed. In Step S405, by performing a plotted value linear interpolation process, continuous plot data to be used for making a graph is prepared. In the subsequent Step S406, a process of differentiating plot data once is performed, and in Step S407, a process of differentiating plot data twice is performed. Then, in Step S408, the touch point TP is judged based on a change in twice-differentiated value of plot data. In detail, a point at which the twice-differentiated value O becomes smaller than a predetermined threshold is judged as the touch point TP. In the example shown in Fig. 47B, the touch point TP is a point at which the stop stroke S1 is recorded at the duty dl.

According to the above-described touch point judgment method, in a normally-open electric clutch, a point at which parameters that undergo a large change when the driving clutch discs come into contact with each other, that is, (1) a stroke change when the electric motor is driven with a fixed current, (2) a motor driving duty change when the electric motor is driven at a fixed stroke change rate, and (3) a position at which the clutch does not make a stroke any more when the electric motor is driven with various test duties, greatly change, is detected, so that a clutch connection start point can be easily and accurately detected based on sensor values and motor current value that the motor control unit, etc., can easily detect.

The above-described touch point (clutch connection start point) estimation process can be performed when the transmission is in a neutral state during start of the engine such as the time during warming-up of the engine or during temporary stop such as waiting at stoplights. In this case, during execution of the touch point estimation process, for example, by prohibiting driving of the gear shifting motor, switching of the transmission from a neutral state into an in-gear state can be prohibited. Accordingly, by engaging the transmission in a clutch connected or half-connected state, it can be prevented that a great force is applied to the gears of the transmission and a driving force is generated on the drive wheel.

The touch point estimation process can also be performed in an in-gear state before the engine starts. In this case, it can be set so that start of the engine can be prohibited until the touch point estimation process ends and the clutch is opened.

According to the above-described touch point (connection start point) estimation method, based on an output value of a sensor that detects an actuation amount of the clutch, an engagement position of engagement elements of the clutch is estimated, and based on the result of estimation, torque transmission of the clutch can be feed-back controlled, so that the accuracy of the clutch capacity control from the engagement position can be further improved.

After the touch point of the clutch is known by the above-described method, for example, when the clutch is driven in a connecting direction, control for making the driving speed from the driving start to the touch point different from the driving speed after the touch point can be easily performed. In detail, from the driving start to the touch point, the clutch driving speed can be made high by increasing the duty value, and accordingly, the time until the clutch connection start can be shortened. By arbitrarily changing the motor speed, clutch control according to a driver's driving state can be performed.

When the clutch biased in the disconnecting direction by the clutch spring is driven by an electric motor, etc., based on a drive amount of a drive member (for example, the push rod 601) that is driven by the electric motor and a spring constant of the clutch spring, the clutch reaction force generated in the drive member can be calculated. The same applies to a double-spring type shown in the above-described embodiment. When the touch point is known, the clutch load and the clutch capacity that increase after the touch point can be calculated.

Reference Signs List

13: engine,
42: ECU (clutch control device),
24a: shift drum,
26: twin clutch,
39c: shift control motor,
51a: first clutch,
51b: second clutch,
91a: first clutch actuator,

91b: second clutch actuator,

100: shift control unit,

110: clutch hydraulic pressure detection unit,

120: stroke start hydraulic pressure detection unit,

130: stroke end hydraulic pressure detection unit

140: ratio detection unit,

150: clutch control correction amount calculation unit,

160: preparatory gear shifting suspension time setting unit,

200: basic clutch capacity calculation unit,

201: engine torque estimation unit,

210: rev-up-responsive clutch capacity correction unit,

211: rev-up detection unit,

220: gear shifting timeout clutch capacity correction unit,

221: gear shifting time-out detection unit,

230: target clutch capacity calculation unit,

240: target half-clutch hydraulic pressure calculation unit,

SE1: gear position sensor,

SE3: engine rotational frequency sensor,

SE7: oil temperature sensor,

SE8: first clutch hydraulic sensor,

SE9: second clutch hydraulic sensor,

SE10: inner shaft rotational frequency sensor,

SE11: outer shaft rotational frequency sensor,

SE19: counter shaft rotational frequency sensor,

TS: throttle opening degree sensor.

**Claims**

1. A clutch control device that determines a clutch control amount according to at least a throttle operation state and a clutch connection state detected by a clutch sensor (SE8, SE9) that detects a connection state of a clutch (51a, 51b), and controls driving of a clutch actuator (91a, 91b) that controls connection/disconnection of the clutch (51a, 51b), wherein
a stroke start position at which the clutch (51a, 51b) starts to make a stroke and a stroke end position that is a full stroke position of the clutch (51a, 51b) are detected based on a change in sensor output value of the clutch sensor (SE8, SE9),
**characterised in that** a target sensor output value (Ph) in a predetermined half-clutch state between the stroke start position and the stroke end position is calculated by linear interpolation of a proportional function formed by a sensor output value (Ps) detected at the stroke start position and a sensor output value (Pe) detected at the stroke end position, and
a clutch control amount in the predetermined half-clutch state is determined by using the target sensor output value (Ph), and **in that**
each of the stroke start position and the stroke end position is detected by a change amount of the sensor output value that has deviated from a predetermined range.

2. The clutch control device according to Claim 1, wherein
the clutch (51a, 51b) is a hydraulic clutch that is controlled to be connected/disconnected by hydraulic pressure supply,
the clutch sensor (SE8, SE9) is a hydraulic sensor that outputs a hydraulic pressure supplied to the clutch (51a, 51b) as a sensor output value, and
the clutch actuator (91a, 91b) adjusts a fixed hydraulic pressure to be supplied from an oil pump (32) of an engine (13) to an arbitrary hydraulic pressure by a solenoid valve that opens and closes a duct and supplies the adjusted hydraulic pressure to the clutch (51a, 51b).

3. The clutch control device according to Claim 2, wherein the stroke start position is detected by a change amount of the clutch hydraulic pressure that has become smaller than a negative predetermined value ($\Delta$P1) during connection control of the clutch (51a, 51b).

4. The clutch control device according to Claim 3, wherein the stroke end position is detected by a change amount of the clutch hydraulic pressure that has become larger than a positive predetermined value (ΔP2) during connection control of the clutch (51a, 51b).

5. The clutch control device according to Claim 1, wherein
the clutch actuator is an electric motor as a drive source that controls connection and disconnection of the clutch,
the clutch sensor is a current sensor that outputs a current value supplied to the electric motor as a sensor output value,
the stroke start position is detected by a change amount of the current value that has become smaller than a negative predetermined value during connection control of the clutch, and
the stroke end position is detected by a change amount of the current value that has become larger than a positive predetermined value during connection control of the clutch.

6. The clutch control device according to Claim 1, wherein
the predetermined half-clutch state is a clutch connected state corresponding to a predetermined target half-clutch capacity,
a half-clutch stroke corresponding to the target half-clutch capacity is derived by using a data table determined in advance,
a target sensor output value (Ph) corresponding to the half-clutch stroke is calculated by linear interpolation of the proportional function, and
the clutch actuator (91a, 91b) is driven so that the target sensor output value (Ph) is generated.

**Patentansprüche**

1. Kupplungssteuervorrichtung, die eine Kupplungssteuermenge gemäß mindestens einem Drosselbetriebszustand und einem Kupplungsverbindungszustand bestimmt, der von einem Kupplungssensor (SE8, SE9) erfasst wird, der einen Verbindungszustand einer Kupplung (51a, 51b) erfasst und ein Antreiben einer Kupplungsbetätigung (91a, 91b) steuert, die ein Verbinden/Trennen der Kupplung (51a, 51b) steuert, wobei
eine Hubstartposition, an der die Kupplung (51a, 51b) beginnt, einen Hub zu vollführen, und eine Hubendposition, die eine vollständige Hubposition der Kupplung (51a, 51b) ist, auf Grundlage einer Veränderung in einem Sensorausgangswert des Kupplungssensors (SE8, SE9) erfasst werden,
**dadurch gekennzeichnet, dass** ein Zielsensorausgangswert (Ph) in einem vorbestimmten Halbkupplungszustand zwischen der Hubstartposition und der Hubendposition durch lineare Interpolation einer proportionalen Funktion berechnet wird, die durch einen an der Hubstartposition erfassten Sensorausgangswert (Ps) und einen an der Hubendposition erfassten Sensorausgangswert (Pe) gebildet wird, und
eine Kupplungssteuermenge in dem vorbestimmten Halbkupplungszustand durch Verwenden des Zielsensorausgangswerts (Ph) bestimmt wird, und dadurch, dass
jede der Hubstartposition und der Hubendposition durch eine Veränderungsmenge des Sensorausgangswerts erfasst wird, die von einem vorbestimmten Bereich abgewichen ist.

2. Kupplungssteuervorrichtung nach Anspruch 1, wobei
die Kupplung (51a, 51b) eine hydraulische Kupplung ist, die gesteuert wird, um von einer hydraulischen Druckversorgung verbunden/getrennt zu werden,
wobei der Kupplungssensor (SE8, SE9) ein hydraulischer Sensor ist, der einen hydraulischen Druck, mit dem die Kupplung (51a, 51b) versorgt wird, als einen Sensorausgangswert ausgibt, und
die Kupplungsbetätigung (91a, 91b) einen von einer Ölpumpe (32) eines Motors (13) zu versorgenden festen hydraulischen Druck an einen beliebigen hydraulischen Druck durch ein Magnetventil anpasst, das einen Kanal öffnet und schließt und die Kupplung (51a, 51b) mit dem angepassten hydraulischen Druck versorgt.

3. Kupplungssteuervorrichtung nach Anspruch 2, wobei die Hubstartposition durch eine Veränderungsmenge des hydraulischen Drucks der Kupplung erfasst wird, die während der Verbindungssteuerung der Kupplung (51a, 51b) kleiner geworden ist als ein negativer vorbestimmter Wert (ΔP1).

4. Kupplungssteuervorrichtung nach Anspruch 3, wobei die Hubendposition durch eine Veränderungsmenge des hydraulischen Drucks der Kupplung erfasst wird, die während der Verbindungssteuerung der Kupplung (51a, 51b) größer geworden ist als ein positiver vorbestimmter Wert (ΔP2).

5. Kupplungssteuervorrichtung nach Anspruch 1, wobei
die Kupplungsbetätigung ein elektrischer Motor als eine Antriebsquelle, die die Verbindung und Trennung der Kupplung steuert, ist,

der Kupplungssensor ein Stromsensor ist, der einen Stromwert, mit dem der elektrische Motor versorgt wird, als einen Sensorausgangswert ausgibt,

die Hubstartposition durch eine Veränderungsmenge des Stromwerts erfasst wird, die während der Verbindungssteuerung der Kupplung kleiner geworden ist als ein negativer vorbestimmter Wert, und

die Hubendposition durch eine Veränderungsmenge des Stromwerts erfasst wird, die während der Verbindungssteuerung der Kupplung größer geworden ist als ein positiver vorbestimmter Wert.

6. Kupplungssteuervorrichtung nach Anspruch 1, wobei

der vorbestimmte Halbkupplungszustand ein kupplungsverbundener Zustand ist, der einer vorbestimmten Zielhalbkupplungsleistung entspricht,

ein Halbkupplungshub, der der Zielhalbkupplungsleistung entspricht, durch Verwenden einer zuvor bestimmten Datentabelle abgeleitet wird,

ein Zielsensorausgangswert (Ph), der dem Halbkupplungshub entspricht, durch lineare Interpolation der proportionalen Funktion berechnet wird, und

die Kupplungsbetätigung (91a, 91b) so angetrieben wird, dass der Zielsensorausgangswert (Ph) generiert wird.

## Revendications

1. Dispositif de commande d'embrayage qui détermine une quantité de commande d'embrayage selon au moins un état de fonctionnement de papillon et un état de connexion d'embrayage détecté par un capteur d'embrayage (SE8, SE9) qui détecte un état de connexion d'un embrayage (51a, 51b), et commande l'entraînement d'un actionneur d'embrayage (91a, 91b) qui commande une connexion/déconnexion de l'embrayage (51a, 51b), dans lequel

une position de début de course à laquelle l'embrayage (51a, 51b) commence à faire une course et une position de fin de course qui est une position de course complète de l'embrayage (51a, 51b) sont détectées sur la base d'un changement de valeur de sortie de capteur du capteur d'embrayage (SE8, SE9),

**caractérisé en ce qu'**une valeur de sortie de capteur cible (Ph) dans un état de demi-embrayage prédéterminé entre la position de début de course et la position de fin de course est calculée par interpolation linéaire d'une fonction proportionnelle formée par une valeur de sortie de capteur (Ps) détectée à la position de début de course et une valeur de sortie de capteur (Pe) détectée à la position de fin de course, et

une quantité de commande d'embrayage dans l'état de demi-embrayage prédéterminé est déterminée par utilisation de la valeur de sortie de capteur cible (Ph), et **en ce que**

chacune de la position de début de course et de la position de fin de course est détectée par une quantité de changement de la valeur de sortie de capteur qui a dévié d'une plage prédéterminée.

2. Dispositif de commande d'embrayage selon la revendication 1, dans lequel

l'embrayage (51a, 51b) est un embrayage hydraulique qui est commandé pour être connecté/déconnecté par fourniture de pression hydraulique,

le capteur d'embrayage (SE8, SE9) est un capteur hydraulique qui délivre une pression hydraulique fournie à l'embrayage (51a, 51b) en tant que valeur de sortie de capteur, et

l'actionneur d'embrayage (91a, 91b) ajuste une pression hydraulique fixée devant être fournie depuis une pompe à huile (32) d'un moteur (13) à une pression hydraulique arbitraire par une électrovanne qui ouvre et ferme un conduit et fournit la pression hydraulique ajustée à l'embrayage (51a, 51b).

3. Dispositif de commande d'embrayage selon la revendication 2, dans lequel la position de début de course est détectée par une quantité de changement de la pression hydraulique d'embrayage qui est devenue inférieure à une valeur prédéterminée négative (ΔP1) pendant une commande de connexion de l'embrayage (51a, 51b).

4. Dispositif de commande d'embrayage selon la revendication 3, dans lequel la position de fin de course est détectée par une quantité de changement de la pression hydraulique d'embrayage qui est devenue supérieure à une valeur prédéterminée positive (ΔP2) pendant une commande de connexion de l'embrayage (51a, 51b).

5. Dispositif de commande d'embrayage selon la revendication 1, dans lequel

l'actionneur d'embrayage est un moteur électrique en tant que source d'entraînement qui commande une connexion et une déconnexion de l'embrayage,

le capteur d'embrayage est un capteur de courant qui délivre une valeur de courant fournie au moteur électrique en tant que valeur de sortie de capteur,

la position de début de course est détectée par une quantité de changement de la valeur de courant qui est devenue inférieure à une valeur prédéterminée négative pendant une commande de connexion de l'embrayage, et
la position de fin de course est détectée par une quantité de changement de la valeur de courant qui est devenue supérieure à une valeur prédéterminée positive pendant une commande de connexion de l'embrayage.

6. Dispositif de commande d'embrayage selon la revendication 1, dans lequel
l'état de demi-embrayage prédéterminé est un état connecté d'embrayage correspondant à une capacité de demi-embrayage cible prédéterminée,
une course de demi-embrayage correspondant à la capacité de demi-embrayage cible est dérivée en utilisant une table de données déterminée à l'avance,
une valeur de sortie de capteur cible (Ph) correspondant à la course de demi-embrayage est calculée par interpolation linéaire de la fonction proportionnelle, et
l'actionneur d'embrayage (91a, 91b) est entraîné de sorte que la valeur de sortie de capteur cible (Ph) soit générée.

EP 2 532 913 B1

**Fig.1**

UP

FR

**Fig.2**

# Fig.3

# Fig.4

**Fig.5**

# Fig.6

# Fig.7

**Fig.8**

ENGINE ROTATIONAL FREQUENCY →

COUNTER SHAFT ROTATIONAL FREQUENCY →

REV-UP DETECTION UNIT ~211

RATIO CHANGE AMOUNT

REV-UP DETECTION SIGNAL →

REV-UP-RESPONSIVE CLUTCH CAPACITY CORRECTION UNIT ~210

REV-UP-RESPONSIVE CLUTCH CAPACITY CORRECTION VALUE H1 →

PREDETERMINED GEAR SHIFTING COMPLETION TIME →

GEAR SHIFTING TIME-OUT DETECTION UNIT ~221

GEAR SHIFTING TIME-OUT SIGNAL →

GEAR SHIFTING TIMEOUT CLUTCH CAPACITY CORRECTION UNIT ~220

GEAR SHIFTING TIMEOUT CLUTCH CAPACITY CORRECTION VALUE H2 →

THROTTLE OPENING DEGREE / ENGINE ROTATIONAL FREQUENCY / INTAKE TEMPERATURE / ATMOSPHERIC PRESSURE →

ENGINE TORQUE ESTIMATION UNIT ~201

ENGINE TORQUE ESTIMATED VALUE →

BASIC CLUTCH CAPACITY CALCULATION UNIT ~200

BASIC CLUTCH CAPACITY CK →

F1 + → F2 (×) ← PRIMARY RATIO

TARGET CLUTCH CAPACITY C

STROKE START HYDRAULIC PRESSURE DETECTION UNIT AND STROKE END HYDRAULIC PRESSURE DETECTION UNIT ~120,130

STROKE END HYDRAULIC PRESSURE Pe →

F3: ACTUAL RETURN SPRING LOAD F = STROKE END HYDRAULIC PRESSURE Pe × CLUTCH PISTON PRESSURE RECEIVING AREA S

ACTUAL RETURN SPRING LOAD F →

STROKE START HYDRAULIC PRESSURE Ps / STROKE END HYDRAULIC PRESSURE Pe →

TARGET HALF-CLUTCH HYDRAULIC PRESSURE CALCULATION UNIT. TARGET HALF-CLUTCH HYDRAULIC PRESSURE Ph CORRESPONDING TO CALCULATED BY LINEAR INTERPOLATION OF PROPORTIONAL FUNCTION ~230

TARGET HALF-CLUTCH HYDRAULIC PRESSURE Ph →

**CALCULATION OF TARGET CLUTCH HYDRAULIC PRESSURE**

$$\text{TARGET CLUTCH HYDRAULIC PRESSURE } Pt = \frac{\dfrac{\text{TARGET CLUTCH CAPACITY } C}{\text{CLUTCH FRICTION COEFFICIENT } \mu \times \text{CLUTCH DISC SURFACES } n \times \text{EFFECTIVE RADIUS } r} + \text{ACTUAL RETURN SPRING LOAD } F}{\text{CLUTCH PISTON PRESSURE RECEIVING AREA } S}$$

※FOR PREDETERMINED HALF-CLUTCH CONTROL, SETS TARGET HALF-CLUTCH HYDRAULIC PRESSURE Ph AS TARGET CLUTCH HYDRAULIC PRESSURE.

F4 → TARGET CLUTCH HYDRAULIC PRESSURE Pt

# Fig. 9

# Fig. 10A

(Nm)

CLUTCH
CAPACITY

STROKE END

HALF-CLUTCH STATE BEING
3mm BEFORE STROKE END

5

0

X−3    X    STROKE(mm)

〈STROKE-CLUTCH CAPACITY GRAPH〉

# Fig. 10B

(kPa)

CLUTCH
HYDRAULIC
PRESSURE

STROKE END

HALF-CLUTCH STATE BEING
3mm BEFORE STROKE END

Pe=200

Px=155

Ps=50

0

7           10    STROKE(mm)
(10-3mm)

STROKE START

〈STROKE-CLUTCH HYDRAULIC PRESSURE GRAPH〉

## Fig. 11

```
┌─────────────────────────────────┐
│  TARGET HALF-CLUTCH HYDRAULIC   │
│  PRESSURE CALCULATION PROCESS   │
└─────────────────────────────────┘
                │
                ▼
┌─────────────────────────────────┐
│ CLUTCH HYDRAULIC PRESSURE DETECTION │
└─────────────────────────────────┘   S1
                │
                ▼
┌─────────────────────────────────┐
│ DRIVE CLUTCH IN CONNECTING DIRECTION │
└─────────────────────────────────┘   S2
                │
                ▼
    ┌───────────────────────┐   N    ┌──────────────────┐
    │ HAS CHANGE RATE OF CLUTCH │ ────▶│ CONTINUE CLUTCH  │  S5
    │ HYDRAULIC RESSURE BECOME  │      │     DRIVING      │
    │ SMALLER THAN NEGATIVE     │      └──────────────────┘
    │ PREDETERMINED VALUE?      │  S3
    └───────────────────────┘
                │ Y
                ▼
┌─────────────────────────────────┐
│ STORE CLUTCH HYDRAULIC PRESSURE AS │  S4
│ "STROKE START HYDRAULIC PRESSURE" │
└─────────────────────────────────┘
                │
                ▼
    ┌───────────────────────┐   N    ┌──────────────────┐
    │ HAS CHANGE RATE OF CLUTCH │ ────▶│ CONTINUE CLUTCH  │  S8
    │ HYDRAULIC PRESSURE EXCEEDED│     │     DRIVING      │
    │ POSITIVE PREDETERMINED     │     └──────────────────┘
    │ VALUE?                     │  S6
    └───────────────────────┘
                │ Y
                ▼
┌─────────────────────────────────┐
│ STORE CLUTCH HYDRAULIC PRESSURE AS │
│ "STROKE END HYDRAULIC PRESSURE"  │  S7
└─────────────────────────────────┘
                │
     Y    ┌─────────────────────────┐
    ◀─────│ IS OIL TEMPERATURE NOT MORE │
    │      │ THAN PREDETERMINED VALUE?  │  S9
    │      └─────────────────────────┘
    │                │ N
    │                ▼
    │   ┌─────────────────────────────────┐
    │   │ CALCULATE CLUTCH CONTROL CORRECTION │
    │   │ AMOUNT BASED ON STORED CLUTCH    │
    │   │ HYDRAULIC PRESSURE               │  S10
    │   └─────────────────────────────────┘
    │                │
    │                ▼
    │   ┌─────────────────────────────┐
    │   │ SET TARGET HALF-CLUTCH CAPACITY │  S11
    │   └─────────────────────────────┘
    │                │
    │                ▼
    │   ┌─────────────────────────────┐
    │   │ DERIVE TARGET HALF-CLUTCH STROKE │
    │   │    f = (STROKE · TORQUE)     │  S12
    │   └─────────────────────────────┘
    │                │
    │                ▼
    │   ┌─────────────────────────────────────────┐
    │   │ CALCULATE TARGET HALF-CLUTCH HYDRAULIC   │
    │   │ PRESSURE Ph                              │
    │   │                                          │
    │   │                                          │  S13
    │   └─────────────────────────────────────────┘
    │                │
    └────────────────┤
                     ▼
              ┌──────────┐
              │  RETURN  │
              └──────────┘
```

$$Ph = \text{STROKE START HYDRAULIC PRESSURE} + \frac{(\text{STROKE END HYDRAULIC PRESSURE} - \text{STROKE START HYDRAULIC PRESSURE}) \times \text{TARGET HALF-CLUTCH HYDRAULIC PRESSURE}}{\text{CLUTCH STROKE}}$$

## Fig. 12

MOTOR DUTY
AND
MOTOR CURRENT

MOTOR DUTY

MOTOR CURRENT
INCREASES

MOTOR CURRENT

MOTOR
CURRENT
DECREASES

0

TIME(t)

STROKE START

STROKE END

CLUTCH
STROKE S1

0

TIME(t)

CLUTCH
STROKE SPEED

0

t10

t11

TIME(t)

〈NORMALLY-OPEN CLUTCH DRIVING〉

41

# Fig. 13

MOTOR DUTY
AND
MOTOR CURRENT

MOTOR DUTY

MOTOR CURRENT
INCREASES

MOTOR CURRENT

MOTOR
CURRENT
DECREASES

0

TIME(t)

STROKE START

STROKE END

CLUTCH
STROKE

S2

0

TIME(t)

CLUTCH
STROKE SPEED

0

t20

t21

TIME(t)

⟨NORMALLY-CLOSE CLUTCH DRIVING⟩

42

# Fig. 14

REV-UP DETECTION

REV-UP JUDGMENT
RATIO

SECOND SPEED
RATIO

Rh
R2

INPUT-OUTPUT
RATIO

THIRD SPEED RATIO

R3

0

TIME(t)

REV-UP PHENOMENON

ENGINE
ROTATIONAL
FREQUENCY

0

TIME(t)

EVEN-NUMBERED STAGE SIDE
TARGET CLUTCH CAPACITY

ODD-NUMBERED STAGE
SIDE TARGET CLUTCH
CAPACITY

TARGET
CLUTCH
CAPACITY

REV-UP-RESPONSIVE
CLUTCH CAPACITY
CORRECTION VALUE
(SHADED PORTION)

0

t30 t31                                          t32          TIME(t)

ODD-NUMBERED
STAGE SIDE ACRUAL
CLUTCH CAPACITY

DURING SHIFT CONTROL

# F i g. 15

REV-UP-RESPONSIVE CLUTCH 1
CAPACITY CORRECTION

DERIVE CORRECTION COEFFICIENT BASE Kb

S20

CALCULATE CORRECTION COEFFICIENT K

S21

CORRECT TARGET CLUTCH CAPACITY C
BY USING CORRECTION COEFFICIENT K

S22

RETURN

Fig. 16

## Fig. 17

REV-UP-RESPONSIVE CLUTCH 1 CAPACITY
CORRECTION COEFFICIENT BASE TABLE

## Fig. 18

# Fig. 19

```
        ╭─────────────────────────╮
        │  GEAR SHIFTING REV-UP   │
        │   DETECTION PROCESS     │
        ╰─────────────────────────╯
                    │
                    ▼
┌─────────────────────────────────────────────────────────────────────┐
│ CALCULATE INPUT-OUTPUT RATIO R                                        │
│ R = ENGINE ROTATIONAL FREQUENCY / COUNTER SHAFT ROTATIONAL FREQUENCY  │
└─────────────────────────────────────────────────────────────────────┘
                    │               ╲_S60
                    ▼
              ⬡ DURING GEAR SHIFTING? ⬡ ──N──────────────┐
                    │   ╲_S61                             │
                    │ Y                                   ▼
                    ▼                          ┌──────────────────┐
┌──────────────────────────────────────────┐  │   CLEAR REV-UP   │
│ CALCULATE RATIO CHANGE AMOUNT ΔR          │  │ DETECTION SIGNAL │
│ ΔR = CURRENT RATIO – GEAR SHIFTING START  │  └──────────────────┘
│              RATIO                        │        ╲_S63
└──────────────────────────────────────────┘
                    │   ╲_S62
                    ▼
       Y  ⬡ REV-UP DETECTED? ⬡
       ┌─────│
       │   N │  ╲_S64
       │     ▼
       │  ⬡ HAS RATIO CHANGE AMOUNT ΔR        ⬡ ──N──┐
       │  ⬡ EXCEEDED PREDETERMINED VALUE?     ⬡      │
       │     │   ╲_S65                               │
       │   Y │                                       │
       │     ▼                                       │
       │  ┌──────────────────────────────┐           │
       │  │  SET REV-UP DETECTION SIGNAL  │           │
       │  └──────────────────────────────┘           │
       │     │           ╲_S66                        │
       └────▶●◀──────────────────────────────────────┘
             │
             ▼
        ╭─────────╮
        │ RETURN  │
        ╰─────────╯
```

Fig. 20

REV-UP-RESPONSIVE CLUTCH CAPACITY
CORRECTION PROCESS

HAS REV-UP DETECTION
SIGNAL BEEN SET?    N

Y

S70

DERIVE CORRECTION COEFFICIENT BASE Kb
FROM CORRECTION COEFFICIENT BASE TABLE

S71

CORRECTION
COEFFICIENT K = 1.0

S73

N    CORRECTION
COEFFICIENT BASE Kb > CORRECTION
COEFFICIENT K ?

Y

S72

K＝Kb    S74

CALCULATE REV-UP-RESPONSIVE CLUTCH
CAPACITY CORRECTION VALUE H1
H1 = CORRECTION COEFFICIENT K
       X BASIC TARGET CLUTCH CAPACITY CK

S75

RETURN

EP 2 532 913 B1

# Fig. 21

CLUTCH SWITCHING GEAR SHIFTING START

CLUTCH CONNECTION CORRECTION START

GEAR SHIFTING COMPLETION

GEAR SHIFTING COMPLETION MAXIMUM TIME Tmax

ACTUAL ENGINE ROTATIONAL FREQUENCY

ENGINE ROTATIONAL FREQUENCY
Ne1
TARGET ENGINE ROTATIONAL FREQUENCY
Ne2

GEAR SHIFTING RATIO
SECOND SPEED RATIO
ACTUAL RATIO
TARGET RATIO
THIRD SPEED RATIO

FIRST CLUTCH TARGET HYDRAULIC PRESSURE

CLUTCH HYDRAULIC PRESSURE
P_B
SECOND CLUTCH TARGET HYDRAULIC PRESSURE (TARGET HYDRAULIC RESSURE AND ACTUAL HYDRAULIC PRESSURE)
P_C
FIRST CLUTCH ACTUAL HYDRAULIC PRESSURE
P_A

0    t40    t41    t42    t43    t44 t45

# Fig. 22

GEAR SHIFTING TIMEOUT CLUTCH 1 CAPACITY CORRECTION

↓

ESTIMATE GEAR SHIFTING COMPLETION TIME Th

S80

↓

CALCULATE GEAR SHIFTING TIMEOUT CLUTCH 2
CAPACITY CORRECTION COEFFICIENT Kover

S81

↓

RETURN

# Fig. 23

ESTIMATE GEAR SHIFTING COMPLETION TIME

↓

DURING GEAR SHIFTING? — N

S90

↓ Y

GEAR SHIFTING COMPLETION TIME CALCULATED? — Y

S91

↓ N

CALCULATE CLUTCH GEAR SHIFTING TORQUE Qh
Qh = TARGET CLUTCH CAPACITY - |ENGINE TORQUE ESTIMATED VALUE|

S92

↓

DERIVE ΔNe UNDER GEAR SHIFTING FROM DATA TABLE

S93

↓

(1) GEAR SHIFTING COMPLETION TIME Th = $\dfrac{|\text{CLUTCH SLIP ROTATIONAL FREQUENCY}|}{\Delta Ne \text{ UNDER GEAR SHIFTING}}$ + OFFSET

(2) GEAR SHIFTING COMPLETION MAXIMUM TIME Tmax = Th X Kmax

(3) GEAR SHIFTING COMPLETION MINIMUM TIME Tmin = Th X Kmin

S94

↓

RETURN

# Fig. 24

ΔNe UNDER
GEAR SHIFTING

0

GEAR SHIFTING TORQUE Qh(Nm)

〈DATA TABLE OF GEAR SHIFTING TORQUE QH - ΔNe UNDER GEAR SHIFTING〉

# Fig. 25

DERIVE CORRECTION
COEFFICIENT Kover

DURING GEAR SHIFTING? — N

Y — S100

ELAPSED TIME FROM  GEAR SHIFTING COMPLETION  N
GEAR SHIFTING START > MAXIMUM TIME Tmax ?

Y — S101

DERIVE CORRECTION COEFFICIENT
Kover FROM DATA TABLE

S102

CORRECTION COEFFICIENT
Kover = 1.0

S103

RETURN

Fig. 26

Fig. 27

# Fig. 28

GEAR SHIFTING REQUEST JUDGMENT PROCESS

FIRST CLUTCH HYDRAULIC
PRESSURE JUDGMENT
S120

SECOND CLUTCH HYDRAULIC
PRESSURE JUDGMENT
S121

IS GEAR SHIFTING TO GEAR ASSIGNED
TO SECOND CLUTCH PERFORMED?
N
Y
S122

HAS SECOND CLUTCH PRESSURE
OFF JUDGMENT BEEN MADE?
N
Y
S123

IS GEAR SHIFTING TO GEAR
ASSIGNED TO FIRST CLUTCH
PERFORMED?
N
Y
S125

HAS FIRST CLUTCH
HYDRAULIC PRESSURE OFF
JUDGMENT BEEN MADE?
N
Y
S126

HASN'T TARGET GEAR POSITION
BEEN CHANGED?
Y
N
S124

NO GEAR SHIFTING
REQUEST
S130

IS TARGET GEAR POSITION ON
LOWER SPEED SIDE THAN
CURRENT GEAR POSITION?
N
Y
S127

REQUEST GEAR SHIFT-DOWN
S128

REQUEST GEAR SHIFT-UP
S129

RETURN

CLUTCH HYDRAULIC PRESSURE JUDGMENT

DURING ON JUDGMENT OR OFF JUDGMENT AS CLUTCH HYDRAULIC PRESSURE JUDGMENT? —— S140

OFF JUDGMENT

ON JUDGMENT

IS CLUTCH HYDRAULIC PRESSURE EQUAL TO OR LESS THAN OFF JUDGMENT HYDRAULIC PRESSURE? — S141
N

Y

COUNTER VALUE C=0? — S142
N

Y

DETERMINE CLUTCH OFF JUDGMENT TIME FROM DATA TABLE — S144

COUNTER VALUE C = C+1 — S145

COUNTER VALUE C $\geqq$ CLUTCH OFF JUDGMENT TIME ? — S146
N

Y

COUNTER VALUE C=0
MAKE OFF JUDGMENT AS CLUTCH JUDGMENT — S147

COUNTER VALUE C=0 — S143

IS CLUTCH HYDRAULIC PRESSURE EQUAL TO OR MORE THAN ON JUDGMENT HYDRAULIC PRESSURE? — S148
N

Y

COUNTER VALUE C = C+1 — S149

COUNTER VALUE C $\geqq$ CLUTCH OFF JUDGMENT TIME ? — S151
N

Y

COUNTER VALUE C=0
MAKE ON JUDGMENT AS CLUTCH JUDGMENT — S152

COUNTER VALUE C=0 — S150

RETURN

Fig. 29

# Fig. 30

```
       ┌──────────────────────────┐
       │   CLUTCH OFF JUDGMENT     │
       │    TIME DETERMINATION     │
       └──────────────────────────┘
                    │
                    ▼                          SHIFT-DOWN
       ◁─────────────────────────────▷────────────────────┐
          SHIFT-UP OR SHIFT-DOWN?                          │
       └─────────────────────────────┘                     │
                    │                                       │
               SHIFT-UP        S160                         │
                    │                                       ▼
       ┌──────────────────────────┐       ┌──────────────────────────┐
       │ DERIVE CLUTCH OFF JUDGMENT│      │  DERIVE CLUTCH OFF JUDGMENT │
       │   TIME FROM SHIFT-UP TABLE│      │  TIME FROM SHIFT-DOWN TABLE │
       └──────────────────────────┘       └──────────────────────────┘
                    │         S161                         S162
                    ◄──────────────────────┘
                    ▼
              ┌───────────┐
              │  RETURN   │
              └───────────┘
```

# Fig. 31

⟨CLUTCH OFF JUDGMENT TIME TABLE FOR SHIFT-UP⟩

Fig. 32

CLUTCH OFF
JUDGMENT TIME

MAIN SHAFT ROTATIONAL
FREQUENCY

OIL
TEMPERATURE

〈CLUTCH OFF JUDGMENT TIME TABLE FOR SHIFT-DOWN〉

FAILURE RUNNING MODE JUDGMENT

FAILURE OCCURRED? — N

S170

Y

GEAR POSITION CHANGEABLE? — N

S171

Y

ODD-NUMBERED STAGE SIDE CLUTCH CONTROLLABLE? — N

S172

Y

FIRST-SPEED FIXED RUNNING

S173

EVEN-NUMBERED STAGE SIDE CLUTCH CONTROLLABLE? — N

S174

Y

SECOND-SPEED FIXED RUNNING

S175

RUNNING PROHIBITED

S176

IS ODD-NUMBERED STAGE OR EVEN-NUMBERED STAGE IN AN IN-GEAR STATE? — N

S177

Y

IS CLUTCH ON IN-GEAR SIDE CONTROLLABLE? — N

S178

Y

CURRENT GEAR FIXED RUNNING

S179

RUNNING PROHIBITED

S180

RETURN

■FAILURE WITH UNCONTROLLABLE GEAR POSITION
→ LOCK OF SHIFT CONTROL MOTOR, ETC.
■FAILURE WITH UNCONTROLLABLE ODD-NUMBERED STAGE SIDE CLUTCH
→ LOCK OF ODD-NUMBERED STAGE SIDE CLUTCH ACTUATOR
→ ABNORMAL HYDRAULIC PRESSURE OF ODD-NUMBERED STAGE SIDE CLUTCH
■FAILURE WITH UNCONTROLLABLE EVEN-NUMBERED STAGE SIDE CLUTCH
→ LOCK OF EVEN-NUMBERED STAGE SIDE CLUTCH ACTUATOR
→ ABNORMAL HYDRAULIC PRESSURE OF EVEN-NUMBERED STAGE SIDE CLUTCH

# Fig.34

# Fig.35

**Fig.36**

# Fig.37

# Fig.38

## Fig.39A

## Fig.39B

# Fig.40

**Fig.41A**

LOAD(P)

⟨WHEN CLEARANCES OF DRIVING CLUTCH DISCS ARE WIDER⟩

A

C

P2

P1

B

D

O

ST1
(REFERENCE TP)

ST2
(DETECTED TP)

STROKE(ST)

**Fig.41B**

LOAD(P)

⟨WHEN PRELOAD OF RETURN SPRING IS LARGER⟩

A

C

B

P3

P1

D

O

ST1
(REFERENCE TP)

ST3
(DETECTED TP)

STROKE(ST)

**Fig.41C**

LOAD(P)

⟨WHEN CLEARANCE OF CAM IS WIDER⟩

A

C

P1

B

D

O

ST1
(REFERENCE TP)

ST4
(DETECTED TP)

STROKE(ST)

## Fig.42

```
┌─────────────────────────────────────────┐
│    TOUCH POINT JUDGMENT BASED ON         │
│  STROKE CHANGE WHEN CURRENT IS FIXED     │
└─────────────────────────────────────────┘
                    │
┌─────────────────────────────────────────┐
│        CURRENT MEASUREMENT START         │
└─────────────────────────────────────────┘
                    │            S200
┌─────────────────────────────────────────┐
│        STROKE MEASUREMENT START          │
└─────────────────────────────────────────┘
                    │            S201
┌─────────────────────────────────────────┐
│      MOTOR DRIVING WITH FIXED CURRENT    │
└─────────────────────────────────────────┘
                    │            S202
┌─────────────────────────────────────────┐
│          STROKE VALUE BUFFERING          │
└─────────────────────────────────────────┘
                    │            S203
┌─────────────────────────────────────────────────┐
│  SPEED CONVERSION PROCESS OF STROKE VALUE DATA    │
│       (BY ONE-TIME DIFFERENTIATION)               │
└─────────────────────────────────────────────────┘
                    │            S204
┌─────────────────────────────────────────────────┐
│ ACCELERATION CONVERSION PROCESS OF STROKE VALUE DATA │
│       (BY TWO-TIME DIFFERENTIATION)               │
└─────────────────────────────────────────────────┘
                    │            S205
┌─────────────────────────────────────────────────┐
│ JUDGE TOUCH POINT (TP) BASED ON ACCELERATION CHANGE │
└─────────────────────────────────────────────────┘
                    │            S206
              ┌──────────┐
              │  RETURN  │
              └──────────┘
```

# Fig.43A

E:STROKE

F:CURRENT

O

TIME(t)

# Fig.43B

E:STROKE

E1

G: STROKE SPEED (DIFFERENTIATION ONCE)

H: ACCELERATION
(DIFFERENTIATION TWICE)

O          t 1          TIME(t)

# Fig.44

TOUCH POINT JUDGMENT BASED ON
DUTYCHANGE AT FIXED STROKE
CHANGE RATE

STROKE MEASUREMENT START

S300

DUTY MEASUREMENT START

S301

MOTOR DRIVING WITH FIXED STROKE CHANGE RATE

S302

DUTY VALUE BUFFERING

S303

DIFFERENTIATE DUTY VALUE DATA ONCE

S304

DIFFERENTIATE DUTY VALUE DATA TWICE

S305

TOUCH POINT (TP) JUDGMENT BASED ON
CHANGE IN TWICE-DIFFERENTIATED VALUE

S306

RETURN

## Fig.45A

I:STROKE

J:DUTY

O

TIME(t)

## Fig.45B

J:DUTY

K: ONCE-DIFFERENTIATED VALUE

J1

L: TWICE-DIFFERENTIATED VALUE

O     t2     TIME(t)

# Fig.46

TOUCH POINT JUDGMENT BASED ON
STOP STROKE WHEN DRIVING WITH
TEST DUTY VALUE

MOTOR DRIVING WITH TEST DUTY VALUE

S400

BUFFER STROKE VALUE WHEN
MOTOR STOPS

S401

UPDATE TO NEXT TEST DUTY VALUE

S402

HAS TEST DUTY VALUE REACHED PREDETERMINED VALUE? — N

Y

S403

STOP STROKE VALUE PLOTTING PROCESS

S404

PLOTTED VALUE LINEAR INTERPOLATION PROCESS

S405

PROCESS OF DIFFERENTIATING PLOT DATA ONCE

S406

PROCESS OF DIFFERENTIATING PLOT DATA TWICE

S407

TOUCH POINT (TP) JUDGMENT BASED ON
CHANGE IN TWICE-DIFFERENTIATED VALUE

S408

RETURN

## Fig.47A

## Fig.47B

**EP 2 532 913 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2133584 A1
- JP 2004197842 A